# EUROPÄISCHE PATENTANMELDUNG

(11) **EP 1 728 430 A1**
(43) Veröffentlichungstag der Anmeldung: **06.12.2006**
(21) Anmeldenummer: 05012119.3
(22) Anmeldetag: 04.06.2005
(51) Int. Cl.: A01N 47/36, A01N 59/02, A01N 59/00, A01N 61/00, A01N 37/12, A01N 37/06, A01N 37/02, A01N 25/30

(54) **Herbizide Mittel**

(71) Anmelder: Bayer CropScience GmbH, 65929 Frankfurt/Main (DE)
(72) Erfinder: Krähmer, Hansjörg, Dr., 65719 Hofheim (DE); Hills, Martin, 65510 Idstein (DE); Trabold, Klaus, 69123 Heidelberg (DE); Hacker, Erwin, Dr., 65239 Hochheim (DE)

(57) **Zusammenfassung**

Die vorliegende Erfindung betrifft herbizide Mittel, enthaltend
a) einen oder mehrere herbizide Wirkstoffe aus der Gruppe der Dioxazin-Pyridylsulfonylharnstoffe, und
b) einen oder mehrere Hilfsstoffe aus der Gruppe der Fettsäureester, Dünger und Tenside.

## Beschreibung

Die Erfindung bezieht sich auf das technische Gebiet der Pflanzenschutzmittel, insbesondere betrifft die Erfindung herbizide Mittel mit einem synergistischen Gehalt an Dioxazin-Pyridyisulfonylharnstoffen sowie Hilfsstoffen aus der Gruppe der Fettsäureester, Dünger und Netzmittel. Die herbiziden Mittel eignen sich hervorragend zur Bekämpfung von Schadpflanzen z.B. in Pflanzenkulturen.

Die Verwendung von Sulfonylharnstoffen als aktive Komponente von Pflanzenschutzmitteln ist bekannt (z.B. EP-A-007 687, EP-A-030 138). Ebenso ist bekannt, Sulfonylharnstoffe wie Nicosulfuron (Accent ®) mit Pflanzenölen zu kombinieren (z.B. CPR/T & OR 1999 Adjuvant Reference Supplement-C&P Press 1998, S. 55/56).

Die Aufgabe der vorliegenden Erfindung bestand darin, herbizide Mittel bereitzustellen, welche eine hohe herbizide Wirkung und auch eine hohe Kulturpflanzenverträglichkeit aufweisen.

Es wurde nun überraschend gefunden, dass herbizide Mittel, die spezielle Sulfonylharnstoffe in Kombination mit bestimmten Hilfsstoffen in synergistischer Menge enthalten, diese Aufgabe lösen.

Die vorliegende Erfindung betrifft somit ein herbizides Mittel, enthaltend in synergistisch wirksamer Menge
a) einen oder mehrere herbizide Wirkstoffe aus der Gruppe der Dioxazin-Pyridylsulfonylharnstoffe, und
b) einen oder mehrere Hilfsstoffe aus der Gruppe der Fettsäureester, Dünger und Tenside.

Bevorzugte Dioxazin-Pyridylsulfonylharnstoffe a) sind solche der allgemeinen Formel (I) und/oder deren Salze 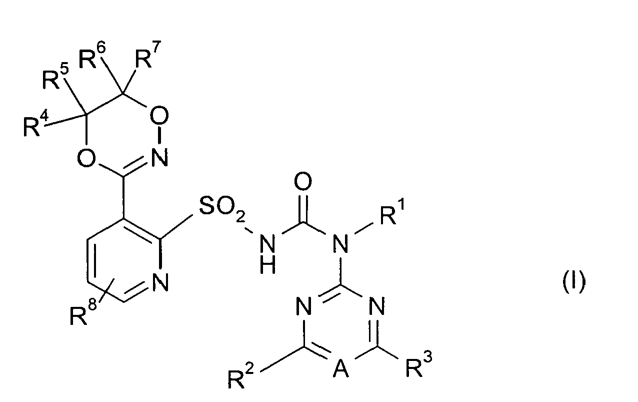 worin
- A: für Stickstoff oder eine CR¹¹-Gruppierung steht,
wobei
R¹¹ für Wasserstoff, Alkyl, Halogen und Haloalkyl steht,
- R¹: für Wasserstoff oder einen gegebenenfalls substituierten Rest aus der Reihe Alkyl, Alkoxy, Alkoxyalkyl, Alkenyl, Alkinyl, Cycloalkyl, Cycloalkylalkyl, Aralkyl und Aryl steht,
- R²: für Wasserstoff, Halogen oder für jeweils gegebenenfalls durch Halogen substituiertes Alkyl, Alkoxy, Alkylthio, Alkylamino oder Dialkylamino mit jeweils 1 bis 6 Kohlenstoffatomen steht,
- R³: für Wasserstoff, Halogen oder für jeweils gegebenenfalls durch Halogen substituiertes Alkyl, Alkoxy, Alkylthio, Alkylamino oder Dialkylamino mit jeweils 1 bis 6 Kohlenstoffatomen steht,
- R⁴ - R⁷: unabhängig voneinander für Wasserstoff, Halogen, Cyano, Thiocyanato oder für jeweils gegebenenfalls durch Halogen substituiertes Alkyl, Alkoxy, Alkylthio, Alkylsulfinyl, Alkylsulfonyl, Alkylamino, Alkylcarbonyl, Alkoxycarbonyl, Alkylaminocarbonyl mit jeweils 1 bis 3 Kohlenstoffatomen stehen,
- R⁸: für Wasserstoff, Halogen, Cyano, Thiocyanato oder für jeweils gegebenenfalls durch Halogen substituiertes Alkyl, Alkoxy, Alkylthio, Alkylsulfinyl, Alkylsulfonyl, Alkylamino, Alkylcarbonyl, Alkoxycarbonyl, Alkylaminocarbonyl mit jeweils 1 bis 3 Kohlenstoffatomen steht,
wobei in den vorgenannten Resten die Alkyl- und Alkylengruppen jeweils 1 bis 6 C-Atome, die Alkenyl- und Alkinylgruppen jeweils 2 bis 6 C-Atome, die Cycloalkylgruppen jeweils 3 bis 6 C-Atome und die Arylgruppen jeweils 6 bzw. 10 C-Atome enthalten können.

Dioxazin-Pyridylsulfonylharnstoffe wie die Verbindungen der Formel (I) und deren Salze sind bekannt, ebenso wie deren Herstellung, z.B. aus US 5,476,936 deren Inhalt hiermit in die vorliegende Beschreibung aufgenommen wird. Die herausragende Eignung dieser Verbindungen als Kombinationspartner in vorzugsweise synergistischen Mischungen mit Hilfsstoffen aus der Gruppe der Fettsäureester, Dünger und Netzmittel ist dem Stand der Technik allerdings nicht entnehmbar.

Bevorzugt sind Verbindungen der Formel (I) und/oder deren Salze,
worin
- A: für Stickstoff oder eine CH-Gruppierung steht,
- R¹: für Wasserstoff oder einen gegebenenfalls durch Halogen substituierten Rest aus der Reihe Alkyl, Alkoxy, Alkoxyalkyl, Alkenyl und Alkinyl mit jeweils bis zu 3 Kohlenstoffatomen steht,
- R²: für Wasserstoff, Halogen oder für jeweils gegebenenfalls durch Halogen substituiertes Alkyl, Alkoxy, Alkylthio, Alkylamino oder Dialkylamino mit jeweils 1 bis 3 Kohlenstoffatomen in den Alkylresten steht,
- R³: für Wasserstoff, Halogen oder für jeweils gegebenenfalls durch Halogen substituiertes Alkyl, Alkoxy, Alkylthio, Alkylamino oder Dialkylamino mit jeweils 1 bis 3 Kohlenstoffatomen in den Alkylresten steht,
- R⁴ - R⁷: unabhängig voneinander für Wasserstoff, Halogen, Cyano, Thiocyanato oder für jeweils gegebenenfalls durch Halogen substituiertes Alkyl, Alkoxy, Alkylthio, Alkylsulfinyl, Alkylsulfonyl, Alkylamino, Alkylcarbonyl, Alkoxycarbonyl oder Alkylaminocarbonyl mit jeweils 1 bis 3 Kohlenstoffatomen in den Alkylresten steht,
- R⁸: für Wasserstoff, Halogen, Cyano, Thiocyanato oder für jeweils gegebenenfalls durch Halogen substituiertes Alkyl, Alkoxy, Alkylthio, Alkylsulfinyl, Alkylsulfonyl, Alkylamino, Alkylcarbonyl, Alkoxycarbonyl oder Alkylaminocarbonyl mit jeweils 1 bis 3 Kohlenstoffatomen in den Alkylresten steht.

Weiter bevorzugt sind Salze, die man aus Verbindungen der Formel (I) und Basen, wie z.B. Natrium-, Kalium- oder Calciumhydroxid, -hydrid, -amid und -carbonat, Natrium- oder Kalium-C₁-C₄-alkanolaten, Ammoniak, C₁-C₄-Alkylaminen, Di-(C₁-C₄-alkyl)-aminen oder Tri-(C₁-C₄-alkyl)-aminen, nach üblichen Verfahren erhält.

Insbesondere bevorzugt sind Verbindungen der Formel (I) und/oder deren Salzen,
worin
- A: für Stickstoff oder eine CH-Gruppierung steht,
- R¹: für Wasserstoff, Methyl, Ethyl, Methoxy, Methoxymethyl oder Ethoxy steht,
- R²: für Wasserstoff, Chlor, Methyl, Ethyl, Trifluoromethyl, Methoxy, Ethoxy, Difluoromethoxy, Methylthio, Methylamino oder Dimethylamino steht,
- R³: für Wasserstoff, Chlor, Methyl, Ethyl, Trifluoromethyl, Methoxy, Ethoxy, Difluoromethoxy, Methylthio, Methylamino oder Dimethylamino steht,
- R⁴ - R⁷: unabhängig voneinander für Wasserstoff, Fluor, Chlor, Cyano, oder für jeweils gegebenenfalls durch Chlor oder Fluor substituiertes Methyl, Methylthio, Methylsulfinyl, Methylsulfonyl, Methoxycarbonyl und Ethoxycarbonyl steht, vorzugsweise für Wasserstoff,
- R⁸: für Wasserstoff, Fluor, Chlor, Brom, Cyano oder für jeweils gegebenenfalls durch Chlor oder Fluor substituiertes Methyl, Methoxy, Ethoxy, Methylthio, Ethylthio, Methylsulfinyl, Ethylsulfinyl, Methylsulfonyl, Ethylsulfonyl, Methyl- oder Dimethylamino steht, vorzugsweise für Wasserstoff.

Besonders bevorzugt sind Verbindungen der Formel (I) und/oder deren Salze, insbesondere deren Alkalimetallsalze,
worin
- A: für Stickstoff steht,
- R¹: für Wasserstoff oder Methyl steht,
- R²: für Wasserstoff, Chlor, Methyl, Ethyl, Trifluoromethyl, Methoxy, Ethoxy, Difluoromethoxy, Methylthio, Methylamino oder Dimethylamino steht,
- R³: für Wasserstoff, Chlor, Methyl, Ethyl, Trifluoromethyl, Methoxy, Ethoxy, Difluoromethoxy, Methylthio, Methylamino oder Dimethylamino steht,
- R⁴ - R⁷: für Wasserstoff steht,
- R⁸: für Wasserstoff steht.

Ebenfalls besonders bevorzugt sind Verbindungen der Formel (1) und/oder deren Salze, insbesondere deren Alkalimetallsalze,
worin
- A: für eine CH-Gruppierung steht,
- R¹: für Wasserstoff oder Methyl steht,
- R²: für Wasserstoff, Chlor, Methyl, Ethyl, Trifluoromethyl, Methoxy, Ethoxy, Difluoromethoxy, Methylthio, Methylamino oder Dimethylamino steht,
- R³: für Wasserstoff, Chlor, Methyl, Ethyl, Trifluoromethyl, Methoxy, Ethoxy, Difluoromethoxy, Methylthio, Methylamino oder Dimethylamino steht,
- R⁴ - R⁷: für Wasserstoff steht,
- R⁸: für Wasserstoff steht.

Die oben aufgeführten allgemeinen oder in Vorzugsbereichen aufgeführten Restedefinitionen können untereinander, also auch zwischen den angegebenen bevorzugten Bereichen beliebig kombiniert werden.

Die bei den Restedefinitionen genannten Kohlenwasserstoffreste, wie Alkyl, Alkenyl oder Alkinyl, auch in Kombinationen mit Heteroatomen, wie in Alkoxy, Alkylthio, Haloalkyl oder Alkylamino, sind auch dann, wenn dies nicht ausdrücklich angegeben ist, geradkettig oder verzweigt.

Die Dioxazin-Pyridylsulfonylharnstoffe a), z.B. solche der allgemeinen Formel (1), können als Neutralverbindung oder als Salze vorliegen, z.B. als Metallsalze wie Alkali (z.B. Na, K) -Salze oder als Erdalkali (z.B. Ca, Mg) -Salze oder als Ammonium- oder Aminsalze. Man erhält solche Salze in einfacher Weise nach üblichen Salzbildungsmethoden, beispielsweise durch Lösen oder Dispergieren eines Pyridylsulfonylharnstoffs, z.B. der Formel (I), in einem geeigneten Verdünnungsmittel, wie z.B. Methylenchlorid, Aceton, tert.-Butyl-methylether oder Toluol, und Zugabe einer geeigneten Base. Die Salze können dann - gegebenenfalls nach längerem Rühren - durch Einengen oder Absaugen isoliert werden.

Erfindungsgemäß bevorzugt enthaltene Dioxazin-Pyridylsulfonylharnstoffe a) sind in der nachfolgenden Tabelle 1 genannt, worin folgende Abkürzungen verwendet werden:
- Smp.: =: Schmelzpunkt
- ⁽⁺⁾ =: Der angegebene Schmelzpunkt (Smp.) bezieht sich jeweils auf das entsprechende Natriumsalz, d.h. die entsprechende Verbindung, worin der Wasserstoff der -SO₂-NH-Gruppe durch Natrium ersetzt ist.

**Tabelle 1: Beispiele für Verbindungen der Formel (I) mit R⁴=R⁵=R⁶=R⁷=R⁸=H:**

| Bsp.- Nr. | R¹ | A | R² | R³ | Smp. (° C) |
|---|---|---|---|---|---|
| I-1 | H | CH | OCH₃ | OC₂H₅ | 154 |
| I-2 | H | CH | OCH₃ | CH₃ | |
| I-3 | H | CH | OHC₃ | CH₃ | 180-181⁽⁺⁾ |
| I-4 | H | CH | OCH₃ | C₂H₅ | |
| I-5 | H | CH | OCH₃ | CF₃ | |
| I-6 | H | CH | OCH₃ | OCF₂H | |
| I-7 | H | CH | OCH₃ | NHCH₃ | |
| I-8 | H | CH | OCH₃ | N(CH₃)₂ | 199.5 |
| I-9 | H | CH | OCH₃ | CI | 110-111 |
| I-10 | H | CH | OCH₃ | Cl | 175-178⁽⁺⁾ |
| I-11 | H | CH | OCH₃ | OCH₃ | 167-168 |
| I-12 | H | CH | OCH₃ | OCH₃ | 171-172⁽⁺⁾ |
| I-13 | H | CH | OC₂H₅ | OC₂H₅ | |
| I-14 | H | CH | OC₂H₅ | OC₂H₅ | 152-154⁽⁺⁾ |
| I-15 | H | CH | OC₂H₅ | CH₃ | |
| I-16 | H | CH | OC₂H₅ | C₂H₅ | |
| I-17 | H | CH | OC₂H₅ | CF₃ | |
| I-18 | H | CH | OC₂H₅ | OCF₂H | |
| I-19 | H | CH | OC₂H₅ | NHCH₃ | |
| I-20 | H | CH | OC₂H₅ | N(CH₃)₂ | |
| I-21 | H | CH | OC₂H₅ | Cl | 158-159 |
| I-22 | H | CH | OC₂H₅ | Cl | 213⁽⁺⁾ |
| I-23 | H | CH | CH₃ | CH₃ | 153 |
| I-24 | H | CH | CH₃ | C₂H₅ | |
| I-25 | H | CH | CH₃ | CF₃ | |
| I-26 | H | CH | CH₃ | OCF₂H | |
| I-27 | H | CH | CH₃ | NHCH₃ | |
| I-28 | H | CH | CH₃ | N(CH₃)₂ | |
| I-29 | H | CH | CH₃ | Cl | 108-109 |
| I-30 | H | CH | CH₃ | Cl | >300⁽⁺⁾ |
| I-31 | H | CH | C₂H₅ | C₂H₅ | |
| I-32 | H | CH | C₂H₅ | CF₃ | |
| I-33 | H | CH | C₂H₅ | OCF₂H | |
| I-34 | H | CH | C₂H₅ | NHCH₃ | |
| I-35 | H | CH | C₂H₅ | Cl | |
| I-36 | H | CH | CF₃ | CF₃ | |
| I-37 | H | CH | CF₃ | OCF₂H | |
| I-38 | H | CH | CF₃ | NHCH₃ | |
| I-39 | H | CH | CF₃ | N(CH₃)₂ | |
| I-40 | H | CH | CF₃ | Cl | |
| I-41 | H | CH | OCF₂H | OCF₂H | |
| I-42 | H | CH | OCF₂H | NHCH₃ | |
| I-43 | H | CH | OCF₂H | N(CH₃)₂ | |
| I-44 | H | CH | OCF₂H | Cl | |
| I-45 | H | CH | NHCH₃ | NHCH₃ | |
| I-46 | H | CH | NHCH₃ | N(CH₃)₂ | |
| I-47 | H | CH | NHCH₃ | Cl | |
| I-48 | H | CH | N(CH₃)₂ | N(CH₃)₂ | |
| I-49 | H | CH | N(CH₃)₂ | Cl | |
| I-50 | H | CH | Cl | Cl | |
| I-51 | H | N | OCH₃ | OCH₃ | 255 |
| I-52 | H | N | OCH₃ | OCH₃ | 159-162⁽⁺⁾ |
| I-53 | H | N | OCH₃ | OC₂H₅ | |
| I-54 | H | N | OCH₃ | CH₃ | |
| I-55 | H | N | OCH₃ | C₂H₅ | |
| I-56 | H | N | OCH₃ | CF₃ | |
| I-57 | H | N | OCH₃ | OCF₂H | |
| I-58 | H | N | OCH₃ | NHCH₃ | |
| I-59 | H | N | OCH₃ | N(CH₃)₂ | |
| I-60 | H | N | OCH₃ | N(CH₃)₂ | 156⁽⁺⁾ |
| I-61 | H | N | OCH₃ | Cl | |
| I-62 | H | N | OC₂H₅ | OC₂H₅ | |
| I-63 | H | N | OC₂H₅ | CH₃ | |
| I-64 | H | N | OC₂H₅ | C₂H₅ | |
| I-65 | H | N | OC₂H₅ | CF₃ | |
| I-66 | H | N | OC₂H₅ | OCF₂H | |
| I-67 | H | N | OC₂H₅ | NHCH₃ | |
| I-68 | H | N | OC₂H₅ | N(CH₃)₂ | |
| I-69 | H | N | OC₂H₅ | Cl | |
| I-70 | H | N | OC₂H₅ | Cl | 213⁽⁺⁾ |
| I-71 | H | N | CH₃ | CH₃ | |
| I-72 | H | N | CH₃ | C₂H₅ | |
| I-73 | H | N | CH₃ | CF₃ | |
| I-74 | H | N | CH₃ | OCF₂H | |
| I-75 | H | N | CH₃ | NHCH₃ | |
| I-76 | H | N | CH₃ | N(CH₃)₂ | |
| I-77 | H | N | CH₃ | Cl | |
| I-78 | H | N | C₂H₅ | C₂H₅ | |
| I-79 | H | N | C₂H₅ | CF₃ | |
| I-80 | H | N | C₂H₅ | OCF₂H | |
| I-81 | H | N | C₂H₅ | NHCH₃ | |
| I-82 | H | N | C₂H₅ | Cl | |
| I-83 | H | N | CF₃ | CF₃ | |
| I-84 | H | N | CF₃ | OCF₂H | |
| I-85 | H | N | CF₃ | NHCH₃ | |
| I-86 | H | N | CF₃ | N(CH₃)₂ | |
| I-87 | H | N | CF₃ | Cl | |
| I-88 | H | N | OCF₂H | OCF₂H | |
| I-89 | H | N | OCF₂H | NHCH₃ | |
| I-90 | H | N | OCF₂H | N(CH₃)₂ | |
| I-91 | H | N | OCF₂H | Cl | |
| I-92 | H | N | NHCH₃ | NHCH₃ | |
| I-93 | H | N | NHCH₃ | N(CH₃)₂ | |
| I-94 | H | N | NHCH₃ | Cl | |
| I-95 | H | N | N(CH₃)₂ | N(CH₃)₂ | |
| I-96 | H | N | N(CH₃)₂ | Cl | |
| I-97 | H | N | Cl | Cl | |
| I-98 | CH₃ | N | OCH₃ | OCH₃ | |
| I-99 | CH₃ | N | OCH₃ | OC₂H₅ | |
| I-100 | CH₃ | N | OCH₃ | CH₃ | |
| I-101 | CH₃ | N | OCH₃ | C₂H₅ | |
| I-102 | CH₃ | N | OCH₃ | CF₃ | |
| I-103 | CH₃ | N | OCH₃ | OCF₂H | |
| I-104 | CH₃ | N | OCH₃ | NHCH₃ | |
| I-105 | CH₃ | N | OCH₃ | N(CH₃)₂ | |
| I-106 | CH₃ | N | OCH₃ | Cl | |
| I-107 | CH₃ | N | OC₂H₅ | OC₂H₅ | |
| I-108 | CH₃ | N | OC₂H₅ | CH₃ | |
| I-109 | CH₃ | N | OC₂H₅ | C₂H₅ | |
| I-110 | CH₃ | N | OC₂H₅ | CF₃ | |
| I-111 | CH₃ | N | OC₂H₅ | OCF₂H | |
| I-112 | CH₃ | N | OC₂H₅ | NHCH₃ | |
| I-113 | CH₃ | N | OC₂H₅ | N(CH₃)₂ | |
| I-114 | CH₃ | N | OC₂H₅ | Cl | |
| I-115 | CH₃ | N | CH₃ | CH₃ | |
| I-116 | CH₃ | N | CH₃ | C₂H₅ | |
| I-117 | CH₃ | N | CH₃ | CF₃ | |
| I-118 | CH₃ | N | CH₃ | OCF₂H | |
| I-119 | CH₃ | N | CH₃ | NHCH₃ | |
| I-120 | CH₃ | N | CH₃ | N(CH₃)₂ | |
| I-121 | CH₃ | N | CH₃ | Cl | |
| I-122 | CH₃ | N | C₂H₅ | C₂H₅ | |
| I-123 | CH₃ | N | C₂H₅ | CF₃ | |
| I-124 | CH₃ | N | C₂H₅ | OCF₂H | |
| I-125 | CH₃ | N | C₂H₅ | NHCH₃ | |
| I-126 | CH₃ | N | C₂H₅ | Cl | |
| I-127 | CH₃ | N | CF₃ | CF₃ | |
| I-128 | CH₃ | N | CF₃ | OCF₂H | |
| I-129 | CH₃ | N | CF₃ | NHCH₃ | |
| I-130 | CH₃ | N | CF₃ | N(CH₃)₂ | |
| I-131 | CH₃ | N | CF₃ | Cl | |
| I-132 | CH₃ | N | OCF₂H | OCF₂H | |
| I-133 | CH₃ | N | OCF₂H | NHCH₃ | |
| I-134 | CH₃ | N | OCF₂H | N(CH₃)₂ | |
| I-135 | CH₃ | N | OCF₂H | Cl | |
| I-136 | CH₃ | N | NHCH₃ | NHCH₃ | |
| I-137 | CH₃ | N | NHCH₃ | N(CH₃)₂ | |
| I-138 | CH₃ | N | NHCH₃ | Cl | |
| I-139 | CH₃ | N | N(CH₃)₂ | N(CH₃)₂ | |
| I-140 | CH₃ | N | N(CH₃)₂ | Cl | |
| I-141 | CH₃ | N | Cl | Cl | |
| I-142 | H | N | N(CH₃)₂ | OCH₂CF₃ | 158 |
| I-143 | H | CH | Cl | OCH₂CF₃ | 204-205 |
| I-144 | H | CH | Cl | OCH₂CF₃ | |
| I-145 | H | CH | Cl | OCH₂CF₃ | 207⁽⁺⁾ |

Unter den in den erfindungsgemäßen Ölsuspensionskonzentraten als Komponente a) enthaltenen Dioxazin-Pyridylsulfonylharnstoffen werden im Sinne der vorliegenden Erfindung stets sämtliche Anwendungsformen wie Säuren, Ester, Salze und Isomere wie Stereoisomere und optische Isomere verstanden. So sind neben den neutralen Verbindungen stets auch deren Salze, z.B. mit anorganischen und/oder organischen Gegenionen zu verstehen. So können Sulfonylharnstoffe z.B. Salze bilden, bei denen der Wasserstoff der -SO₂-NH-Gruppe durch ein für die Landwirtschaft geeignetes Kation ersetzt ist. Diese Salze sind beispielsweise Metallsalze, insbesondere Alkalimetallsalze oder Erdalkalimetallsalze, insbesondere Natrium- und Kaliumsalze, oder auch Ammoniumsalze oder Salze mit organischen Aminen. Ebenso kann Salzbildung durch Anlagerung einer Säure an basischen Gruppen, wie z.B. Amino und Alkylamino, erfolgen. Geeignete Säuren hierfür sind starke anorganische und organische Säuren, beispielsweise HCl, HBr, H₂SO₄ oder HNO₃. Bevorzugte Ester sind die Alkylester, insbesondere die C₁-C₁₀-Alkylester wie Methylester.

Soweit in dieser Beschreibung der Begriff Acylrest verwendet wird, bedeutet dieser den Rest einer organischen Säure, der formal durch Abspaltung einer OH-Gruppe aus der organischen Säure entsteht, z.B. der Rest einer Carbonsäure und Reste davon abgeleiteter Säuren wie der Thiocarbonsäure, gegebenenfalls N-substituierten Iminocarbonsäuren oder die Reste von Kohlensäuremonoestern, gegebenenfalls N-substituierter Carbaminsäuren, Sulfonsäuren, Sulfinsäuren, Phosphonsäuren, Phosphinsäuren.

Ein Acylrest ist bevorzugt Formyl oder Acyl aus der Gruppe CO-R^{z}, CS-R^{z}, CO-OR^{z}, CS-OR^{z}, CS-SR^{z}, SOR^{z} oder SO₂R^{z}, wobei R^{z} jeweils einen C₁-C₁₀-Kohlenwasserstoffrest wie C₁-C₁₀-Alkyl oder C₆-C₁₀-Aryl bedeutet, der unsubstituiert oder substituiert ist, z.B. durch einen oder mehrere Substituenten aus der Gruppe Halogen wie F, Cl, Br, I, Alkoxy, Haloalkoxy, Hydroxy, Amino, Nitro, Cyano oder Alkylthio, oder R^{Z} bedeutet Aminocarbonyl oder Aminosulfonyl, wobei die beiden letztgenannten Reste unsubstituiert, N-monosubstituiert oder N,N-disubstituiert sind, z.B. durch Substituenten aus der Gruppe Alkyl oder Aryl.
Acyl bedeutet beispielsweise Formyl, Halogenalkylcarbonyl, Alkylcarbonyl wie (C₁-C₄)Alkylcarbonyl, Phenylcarbonyl, wobei der Phenylring substituiert sein kann, oder Alkyloxycarbonyl, wie (C₁-C₄) Alkyloxycarbonyl, Phenyloxycarbonyl, Benzyloxycarbonyl, Alkylsulfonyl, wie (C₁-C₄) Alkylsulfonyl, Alkylsulfinyl, wie C₁-C₄(Alkylsulfinyl), N-Alkyl-1-iminoalkyl, wie N-(C₁-C₄)-1-imino-(C₁-C₄)alkyl und andere Reste von organischen Säuren.

Ein Kohlenwasserstoffrest bedeutet ein geradkettiger, verzweigter oder cyclischer und gesättigter oder ungesättigter aliphatischer oder aromatischer Kohlenwasserstoffrest, z.B. Alkyl, Alkenyl, Alkinyl, Cycloalkyl, Cycloalkenyl oder Aryl. Ein Kohlenwasserstoffrest weist bevorzugt 1 bis 40 C-Atome, vorzugsweise 1 bis 30 C-Atome auf; besonders bevorzugt bedeutet ein Kohlenwasserstoffrest Alkyl, Alkenyl oder Alkinyl mit bis zu 12 C-Atomen oder Cycloalkyl mit 3, 4, 5, 6 oder 7 Ringatomen oder Phenyl.

Aryl bedeutet ein mono-, bi- oder polycyclisches aromatisches System, beispielsweise Phenyl, Naphthyl, Tetrahydronaphthyl, Indenyl, Indanyl, Pentalenyl, Fluorenyl und ähnliches, vorzugsweise Phenyl.

Ein heterocyclischer Rest oder Ring (Heterocyclyl) kann gesättigt, ungesättigt oder heteroaromatisch und unsubstituiert oder substituiert sein; er enthält vorzugsweise ein oder mehrere Heteroatome im Ring, vorzugsweise aus der Gruppe N, O und S; vorzugsweise ist er ein aliphatischer Heterocyclylrest mit 3 bis 7 Ringatomen oder ein heteroaromatischer Rest mit 5 oder 6 Ringatomen und enthält 1, 2 oder 3 Heteroatome. Der heterocyclische Rest kann z.B. ein heteroaromatischer Rest oder Ring (Heteroaryl) sein, wie z.B. ein mono-, bi- oder polycyclisches aromatisches System, in dem mindestens 1 Ring ein oder mehrere Heteroatome enthält, beispielsweise Pyridyl, Pyrimidinyl, Pyridazinyl, Pyrazinyl, Triazinyl, Thienyl, Thiazolyl, Oxazolyl, Furyl, Pyrrolyl, Pyrazolyl und Imidazolyl, oder ist ein partiell oder vollständig hydrierter Rest wie Oxiranyl, Oxetanyl, Pyrrolidyl, Piperidyl, Piperazinyl, Triazolyl, Dioxolanyl, Morpholinyl, Tetrahydrofuryl. Bevorzugt sind Pyrimidinyl und Triazinyl. Als Substituenten für einen substituierten heterocyclischen Rest kommen die weiter unten genannten Substituenten in Frage, zusätzlich auch Oxo. Die Oxogruppe kann auch an den Heteroringatomen, die in verschiedenen Oxidationsstufen existieren können, z.B. bei N und S, auftreten.

Substituierte Reste, wie substituierte Kohlenwasserstoffreste, z.B. substituiertes Alkyl, Alkenyl, Alkinyl, Aryl, Phenyl und Benzyl, oder substituiertes Heterocyclyl oder Heteroaryl, bedeuten beispielsweise einen vom unsubstituierten Grundkörper abgeleiteten substituierten Rest, wobei die Substituenten beispielsweise einen oder mehrere, vorzugsweise 1, 2 oder 3 Reste aus der Gruppe Halogen, Alkoxy, Haloalkoxy, Alkylthio, Hydroxy, Amino, Nitro, Carboxy, Cyano, Azido, Alkoxycarbonyl, Alkylcarbonyl, Formyl, Carbamoyl, Mono- und Dialkylaminocarbonyl, substituiertes Amino, wie Acylamino, Mono- und Dialkylamino, und Alkylsulfinyl, Haloalkylsulfinyl, Alkylsulfonyl, Haloalkylsulfonyl und, im Falle cyclischer Reste, auch Alkyl und Haloalkyl sowie den genannten gesättigten kohlenwasserstoffhaltigen Resten entsprechende ungesättigte aliphatische Reste, wie Alkenyl, Alkinyl, Alkenyloxy, Alkinyloxy etc. bedeuten. Bei Resten mit C-Atomen sind solche mit 1 bis 4 C-Atomen, insbesondere 1 oder 2 C-Atomen, bevorzugt. Bevorzugt sind in der Regel Substituenten aus der Gruppe Halogen, z.B. Fluor und Chlor, (C₁-C₄)Alkyl, vorzugsweise Methyl oder Ethyl, (C₁-C₄)Haloalkyl, vorzugsweise Trifluormethyl, (C₁-C₄)Alkoxy, vorzugsweise Methoxy oder Ethoxy, (C₁-C₄)Haloalkoxy, Nitro und Cyano. Besonders bevorzugt sind dabei die Substituenten Methyl, Methoxy und Chlor.

Gegebenenfalls substituiertes Phenyl ist vorzugsweise Phenyl, das unsubstituiert oder ein- oder mehrfach, vorzugsweise bis zu dreifach durch gleiche oder verschiedene Reste, vorzugsweise aus der Gruppe Halogen, (C₁-C₄)Alkyl, (C₁-C₄)Alkoxy, (C₁-C₄)Halogenalkyl, (C₁-C₄)Halogenalkoxy und Nitro substituiert ist, z.B. o-, m- und p-Tolyl, Dimethylphenyl, 2-, 3- und 4-Chlorphenyl, 2-, 3- und 4-Trifluor- und -Trichlorphenyl, 2,4-, 3,5-, 2,5- und 2,3-Dichlorphenyl, o-, m- und p-Methoxyphenyl.

Cycloalkyl bedeutet ein carbocyclisches, gesättigtes Ringsystem vorzugsweise mit 3-6 C-Atomen, z.B. Cyclopropyl, Cyclobutyl, Cyclopentyl oder Cyclohexyl.

Die kohlenstoffhaltigen Reste wie Alkyl, Alkoxy, Haloalkyl, Haloalkoxy, Alkylamino und Alkylthio sowie die entsprechenden ungesättigten und/oder substituierten Reste im Kohlenstoffgerüst jeweils geradkettig oder verzweigt sein. Wenn nicht speziell angegeben, sind bei diesen Resten die niederen Kohlenstoffgerüste, z.B. mit 1 bis 6 C-Atomen bzw. bei ungesättigten Gruppen mit 2 bis 6 C-Atomen, bevorzugt. Alkylreste, auch in den zusammengesetzten Bedeutungen wie Alkoxy, Haloalkyl usw., bedeuten z.B. Methyl, Ethyl, n- oder i-Propyl, n-, i-, t- oder 2-Butyl, Pentyle, Hexyle, wie n-Hexyl, i-Hexyl und 1,3-Dimethylbutyl, Heptyle, wie n-Heptyl, 1-Methylhexyl und 1,4-Dimethylpentyl; Alkenyl- und Alkinylreste haben die Bedeutung der den Alkylresten entsprechenden möglichen ungesättigten Reste; Alkenyl bedeutet z.B. Allyl, 1-Methylprop-2-en-1-yl, 2-Methyl-prop-2-en-1-yl, But-2-en-1-yl, But-3-en-1-yl, 1-Methyl-but-3-en-1-yl und 1-Methyl-but-2-en-1-yl; Alkinyl bedeutet z.B. Propargyl, But-2-in-1-yl, But-3-in-1-yl, 1-Methyl-but-3-in-1-yl.

Halogen bedeutet beispielsweise Fluor, Chlor, Brom oder lod. Haloalkyl, -alkenyl und -alkinyl bedeuten durch Halogen, vorzugsweise durch Fluor, Chlor und/oder Brom, insbesondere durch Fluor oder Chlor, teilweise oder vollständig substituiertes Alkyl, Alkenyl bzw. Alkinyl, z.B. CF₃, CHF₂, CH₂F, CF₃CF₂, CH₂FCHCl, CCl₃, CHCl₂, CH₂CH₂Cl; Haloalkoxy ist z.B. OCF₃, OCHF₂, OCH₂F, CF₃CF₂O, OCH₂CF₃ und OCH₂CH₂Cl; entsprechendes gilt für Haloalkenyl und andere durch Halogen substituierte Reste.

Die herbiziden Wirkstoffe a) hemmen das Enzym Acetolactatsynthase (ALS) und damit die Proteinsynthese in Pflanzen. Die Aufwandmenge der Herbizide (a) kann in einem weiten Bereich variieren, beispielsweise zwischen 0,001 g und 500 g AS/ha (AS/ha bedeutet dabei im folgenden "Aktivsubstanz pro Hektar" = bezogen auf 100%igen Wirkstoff). Bei Anwendungen mit Aufwandmengen von 0,01 g bis 200 g AS/ha der herbiziden Wirkstoffe a), vorzugsweise der Verbindungen I-1 bis I-145, wird im Vor- und Nachauflaufverfahren ein relativ breites Spektrum an Schadpflanzen bekämpft, z.B. an annuellen und perennierenden mono- oder dikotylen Unkräutern sowie an unerwünschten Kulturpflanzen. Bei den erfindungsgemäßen herbiziden Mitteln liegen die Aufwandmengen in der Regel niedriger, z. B. im Bereich von 0,001 g bis 100 g AS/ha, vorzugsweise 0,05 g bis 50 g AS/ha, besonders bevorzugt 0,1 g bis 9 g AS/ha.

Als Komponente b) sind in den erfindungsgemäßen herbiziden Mitteln ein oder mehrere Hilfsstoffe aus der Gruppe der Fettsäureester, Dünger und Tenside enthalten.

Als Fettsäureester können in den erfindungsgemäßen herbiziden Mitteln z.B. Fettsäureester natürlichen Ursprungs enthalten sein, z.B. natürliche Öle wie tierische Öle oder Pflanzenöle, oder Fettsäureester synthetischen Ursprungs, z.B. Edenor®-Reihe z.B. Edenor®MEPa oder Edenor®MESU oder AGNIQUE®ME-Reihe oder AGNIQUE®AE-Reihe (Cognis), SALIM®ME-Reihe (Salim), Radia®-Reihe z.B. Radia®30167 (Fina Chemicals), Priolube®-Reihe z.B. Priolube®1530 (Unichema), STEPAN®C-Reihe (Stepan) oder WITCONOL®23-Reihe (Witco). Die Fettsäureester sind bevorzugt Ester von C₁₀-C₂₂-, vorzugsweise C₁₂-C₂₀-Fettsäuren. Die C₁₀-C₂₂-Fettsäureester sind beispielsweise Ester ungesättigter oder gesättigter C₁₀-C₂₂-Fettsäuren, insbesondere mit gerader Kohlenstoffatomzahl, z.B. Erucasäure, Laurinsäure, Palmitinsäure und insbesondere C₁₈-Fettsäuren wie Stearinsäure, Ölsäure, Linolsäure oder Linolensäure.

Beispiele für Fettsäureester wie C₁₀-C₂₂-Fettsäure-Ester sind Glycerin- und Glykolester von Fettsäuren wie C₁₀-C₂₂-Fettsäuren oder deren Umesterungsprodukte, z.B. Alkyl-Fettsäureester wie C₁-C₂₀-Alkyl-C₁₀-C₂₂-FettsäureEster, wie sie z.B. durch Umesterung der vorgenannten Glycerin- oder Glykol-Fettsäureester wie C₁₀-C₂₂-Fettsäure-Ester mit C₁-C₂₀-Alkoholen (z.B. Methanol, Ethanol, Propanol oder Butanol) erhalten werden können. Die Umesterung kann nach bekannten Methoden erfolgen, wie sie z.B. beschrieben sind im Römpp Chemie Lexikon, 9. Auflage, Band 2, Seite 1343, Thieme Verlag Stuttgart.

Als Alkyl-Fettsäureester wie C₁-C₂₀-Alkyl-C₁₀-C₂₂-Fettsäure-Ester bevorzugt sind Methylester, Ethylester, Propylester, Butylester, 2-ethyl-hexylester und Dodecylester. Als Glykol- und Glycerin-Fettsäureester wie C₁₀-C₂₂-Fettsäure-Ester bevorzugt sind die einheitlichen oder gemischten Glykolester und Glycerinester von C₁₀-C₂₂-Fettsäuren, insbesondere solcher Fettsäuren mit gerader Anzahl an Kohlenstoffatomen, z.B. Erucasäure, Laurinsäure, Palmitinsäure und insbesondere C₁₈-Fettsäuren wie Stearinsäure, Ölsäure, Linolsäure oder Linolensäure.

In den erfindungsgemäßen herbiziden Mitteln enthaltene tierische Öle b) sind allgemein bekannt und kommerziell erhältlich. Unter dem Begriff tierische Öle im Sinne der vorliegenden Erfindung werden z.B. Öle tierischen Ursprungs verstanden wie Waltranöl, Lebertranöl, Moschusöl oder Nerzöl.

In den erfindungsgemäßen herbiziden Mitteln bevorzugt enthaltene Fettsäureester sind Pflanzenöle. Diese sind allgemein bekannt und kommerziell erhältlich. Unter dem Begriff Pflanzenöle im Sinne der vorliegenden Erfindung werden z.B. Öle aus ölliefernden Pflanzenarten wie Sojaöl, Rapsöl, Maiskeimöl, Sonnenblumenöl, Baumwollsaatöl, Leinöl, Kokosöl, Palmöl, Distelöl, Walnussöl, Erdnussöl, Olivenöl oder Rhizinusöl, insbesondere Rapsöl verstanden, wobei unter den Pflanzenölen auch deren Umesterungsprodukte verstanden werden, z.B. Alkylester wie Rapsölmethylester oder Rapsölethylester.

Die Pflanzenöle sind bevorzugt Ester von C₁₀-C₂₂-, vorzugsweise C₁₂-C₂₀-Fettsäuren. Die C₁₀-C₂₂-Fettsäureester sind beispielsweise Ester ungesättigter oder gesättigter C₁₀-C₂₂-Fettsäuren, insbesondere mit gerader Kohlenstoffatomzahl, z.B. Erucasäure, Laurinsäure, Palmitinsäure und insbesondere C₁₈-Fettsäuren wie Stearinsäure, Ölsäure, Linolsäure oder Linolensäure.

Beispiele für Pflanzenöle sind C₁₀-C₂₂-Fettsäure-Ester von Glycerin oder Glykol mit den C₁₀-C₂₂-Fettsäuren, oder C₁-C₂₀-Alkyl-C₁₀-C₂₂-Fettsäure-Ester, wie sie z.B. durch Umesterung der vorgenannten Glycerin- oder Glykol-C₁₀-C₂₂-Fettsäure-Ester mit C₁-C₂₀-Alkoholen (z.B. Methanol, Ethanol, Propanol oder Butanol) erhalten werden können. Die Umesterung kann nach bekannten Methoden erfolgen, wie sie z.B. beschrieben sind im Römpp Chemie Lexikon, 9. Auflage, Band 2, Seite 1343, Thieme Verlag Stuttgart.

Die Pflanzenöle können in den erfindungsgemäßen herbiziden Mitteln z.B. in Form kommerziell erhältlicher Pflanzenöle, insbesondere Rapsöle wie Rapsölmethylester, z.B. Phytorob®B (Novance, Frankreich, nachfolgend Phytorob B genannt), Edenor® MESU (Cognis, Deutschland, nachfolgend Edenor genannt) und Agnique® ME-Reihe (Cognis, Deutschland, nachfolgend Agnique genannt), Priolube®-Reihe (Unichema, nachfolgend Priolube genannt) oder Biodiesel oder in Form kommerziell erhältlicher pflanzenölhaltiger Formulierungszusatzstoffe, insbesondere solcher auf Basis von Rapsölen wie Rapsölmethylester, z.B. Hasten® (Victorian Chemical Company, Australien, nachfolgend Hasten genannt, Hauptbestandteil: Rapsölmethylester), Actirob®B (Novance, Frankreich, nachfolgend ActirobB genannt, Hauptbestandteil: Rapsölmethylester), Rako-Binol® (Bayer AG, Deutschland, nachfolgend Rako-Binol genannt, Hauptbestandteil: Rapsöl), Renol® (Stefes, Deutschland, nachfolgend Renol genannt, Pflanzenölbestandteil: Rapsölmethylester) oder Stefes Mero® (Stefes, Deutschland, nachfolgend Mero genannt, Hauptbestandteil: Rapsölmethylester) enthalten sein.

Beispiele für synthetische Fettsäureester sind z.B. solche die sich von Fettsäuren mit ungerader Kohlenstoffatomanzahl ableiten, wie C₁₁-C₂₁-Fettsäureester.

Als Dünger können in den erfindungsgemäßen herbiziden Mitteln z.B. Harnstoff oder Ammoniumsalze enthalten sein, vorzugsweise Harnstoff, Ammoniumsulfate wie Monoammoniumsulfat oder Diammoniumsulfat, Ammoniumnitrat, Ammoniumnitrat/Calciumnitrat-Mischungen, Ammoniumnitrat/Harnstoff-Mischungen (AHL), Ammoniumthiosulfat, Ammoniumchlorid, Ammoniumphosphate wie Monoammoniumphosphat, Diammoniumphosphat oder Triammoniumphosphat, Calcium Ammoniumnitrat, Ammoniumcarbonate wie Monoammoniumcarbonat oder Diammoniumcarbonat, und deren Mischungen. Bevorzugte Dünger sind Ammoniumsulfate, insbesondere Diammoniumsulfat, Ammoniumnitrat und Ammoniumnitrat/Harnstoff-Mischungen.

Als Tenside können in den erfindungsgemäßen herbiziden Mitteln z.B. nichtionische oder ionische, z.B. kationische oder anionische, Tenside enthalten sein, vorzugsweise nichtionische Tenside.

Als nichtionische Tenside kommen z.B. in Frage:
1) polyalkoxylierte, vorzugsweise polyethoxylierte, gesättigte und ungesättigte aliphatische Alkohole,
   · mit 8 bis 24 C-Atomen im Alkylrest, der sich von den entsprechenden Fettsäuren oder aus petrochemischen Produkten ableitet, und
   · mit 1 bis 100, vorzugsweise 2 bis 50, Ethylenoxideinheiten (EO), wobei die freie Hydroxy-Gruppe gegebenenfalls alkoxyliert ist,
   · die z. B. kommerziell als Genapol®X- und Genapol®O-Reihe (Clariant), Crovol®M-Reihe (Croda) oder Lutensol®Reihe (BASF) erhältlich sind,
2) polyalkoxylierte, vorzugsweise polyethoxylierte Arylalkylphenole, wie z. B. 2,4,6-Tris-(1-phenylethyl)-phenol (Tristyrylphenol) mit einem mittleren Ethoxylierungsgrad zwischen 10 und 80, bevorzugt 16 bis 40, wie z. B. Soprophor®BSU (Rhodia) oder HOE S 3474 (Clariant),
3) polyalkoxylierte, vorzugsweise polyethoxylierte Alkylphenole mit einem oder mehreren Alkylresten, wie z. B. Nonylphenol oder Tri-sec-butylphenol, und einem Ethoxylierungsgrad zwischen 2 und 40, bevorzugt 4 bis 15, wie z. B. Arkopal®N-Reihe oder Sapogenat®T-Reihe (Clariant),
4) polyalkoxylierte, vorzugsweise polyethoxylierte Hydroxyfettsäuren oder Hydroxyfettsäuren enthaltene Glyceride, wie z. B. Ricinin bzw. Rizinusöl, mit einem Ethoxylierungsgrad zwischen 10 und 80, bevorzugt 25 bis 40, wie z. B. Emulsogen®EL-Reihe (Clariant) oder Agnique®CSO-Reihe (Cognis),
5) polyalkoxylierte, vorzugsweise polyethoxylierte Sorbitanester, wie z. B. Atplus®309 F (Uniqema) oder Alkamuls®-Reihe (Rhodia),
6) polyalkoxylierte, vorzugsweise polyethoxylierte Amine, wie z.B. Genamin®-Reihe (Clarian), Imbentin® CAM - Reihe (Kolb) oder Lutensol® FA - Reihe (BASF),
7) Di- und Tri-block-copolymere, z.B. aus Alkylenoxiden, z.B. aus Ethylen- und Propylenoxid mit mittleren Molmassen zwischen 200 und 10000, vorzugsweise 1000 bis 4000 g/mol, wobei der Massenanteil des polyethoxylierte Blocks zwischen 10 und 80% variiert, wie z. B. Genapol®PF-Reihe (Clariant), Pluronic®-Reihe (BASF), oder Synperonic®PE-Reihe (Uniqema),

Bevorzugte nichtionische Tenside sind z.B. polyethoxylierte Alkohole, polyethoxylierte Triglyceride, die Hydroxyfettsäurereste enthalten und Polyethylenoxid-Polypropylenoxid-Blockcopolymere.

Soweit in den erfindungsgemäßen herbiziden Mitteln nichtionische Tenside enthalten sind, beträgt deren Gewichtsanteil im allgemeinen zwischen 1 und 20 Gew.%.

Als ionische Tenside kommen z.B. in Frage:
1) polyalkoxylierte, vorzugsweise polyethoxylierte Tenside, die ionisch modifiziert sind, z. B. durch Umsetzung der endständigen freien Hydroxylfunktion des Polyethylenoxidblocks zu einem Sulfat- oder Phosphatester (z. B. als Alkali- und Erdalkalimetallsalze), wie z. B. Genapol®LRO oder Dispergiermittel 3618 (Clariant), Emulphor® (BASF) oder Crafol®AP (Cognis),
2) Alkali- und Erdalkalimetallsalze von Alkylarylsulfonsäuren mit linearer oder verzweigter Alkylkette, wie Phenylsulfonat CA oder Phenylsulfonat CAL (Clariant), Atlox® 3377BM (ICI), Empiphos®TM-Reihe (Huntsman)
3) Polyelektrolyte, wie Ligninsulfonate, Kondensationsprodukte aus Naphthalinsulfonat und Formaldehyd, Polystyrolsulfonat oder sulfonierte ungesättigte oder aromatische Polymere (Polystyrole, Polybutadiene oder Polyterpene), wie Tamol®-Reihe (BASF), Morwet®D425 (Witco), Kraftsperse®-Reihe (Westvaco), Borresperse®-Reihe (Borregard).

Bevorzugte ionische Tenside sind z.B. Salze von Alkylsulfonsäuren und deren Salze, Alkylarylsulfonsäuren und deren Salze und Polyelektrolyte z.B. aus der Polykondensation von Naphthalinsulfonat und Formaldehyd.

Die erfindungsgemäßen herbiziden Mittel zeigen eine ausgezeichnete herbizide Wirkung und synergistische Effekte. Aufgrund der verbesserten Kontrolle der Schadpflanzen durch die erfindungsgemäßen herbiziden Mittel wird es möglich, die Aufwandmenge zu senken und/oder die Sicherheitsmarge zu erhöhen. Beides ist sowohl ökonomisch als auch ökologisch sinnvoll. Die Wahl der von den Komponenten a) und b) einzusetzenden Mengen und das Verhältnis der Komponenten a) zu b) sind dabei von verschiedenen Faktoren abhängig. In diesem Zusammenhang nicht unbedeutend sind u. a. die Art der Komponenten a) und b), das Entwicklungsstadium der Unkräuter oder Ungräser, das zu bekämpfende Unkrautspektrum, Umweltfaktoren, Klimabedingungen und Bodenverhältnisse.

Die erfindungsgemäßen herbiziden Mittel weisen einen synergistisch wirksamen Gehalt an herbiziden Wirkstoffen a) und Hilfsstoffen b) auf. Dabei ist vor allem hervorzuheben, daß selbst in Kombinationen mit Aufwandmengen oder Gewichtsverhältnissen von a) zu b), bei denen ein Synergismus nicht in jedem Falle ohne weiteres nachzuweisen ist - etwa weil die Einzelkomponenten üblicherweise in der Kombination in sehr unterschiedlichen Aufwandmengen eingesetzt werden oder auch weil die Kontrolle der Schadpflanzen bereits sehr gut ist - den herbiziden Mitteln der Erfindung in der Regel eine synergistische Wirkung inhärent ist.

Der Einsatz der erfindungsgemäßen herbiziden Mittel kann z.B. im Vor- oder im Nachauflaufverfahren erfolgen, z.B. durch Spritzung. Durch den Einsatz der erfindungsgemäßen herbiziden Mittel kann der zur Unkrautbekämpfung notwendige Präparateaufwand wesentlich reduziert werden.

Die Aufwandmengen an Fettsäureester b) liegen im allgemeinen im Bereich von 10 g -20 kg Fettsäureester/ha, bevorzugt zwischen 50 g und 5 kg Fettsäureester/ha.

Die Aufwandmengen an Dünger b) liegen im allgemeinen im Bereich von 10 g - 10 kg Dünger/ha, bevorzugt zwischen 50 g und 5 kg Dünger/ha.

Die Aufwandmengen an Tensiden b) liegen im allgemeinen im Bereich von 5 g - 5 kg Tensid/ha, bevorzugt zwischen 100 g und 2 kg Tensid/ha.

Die Gewichtsverhältnisse a) : b) der Komponenten der erfindungsgemäßen herbiziden Mittel können wie erwähnt ebenso wie deren Aufwandmengen innerhalb weiter Grenzen schwanken. Ein bevorzugter Bereich der Aufwandmengenverhältnisse, bezogen auf das Gewicht, umfaßt a) : b) wie 1:1 bis 1:1000, vorzugsweise 1:5 bis etwa 1:1000.

Die erfindungsgemäßen herbiziden Mittel können z. B. als Mischformulierungen der beiden Komponenten a) und b) vorliegen, bevorzugt als flüssige Mischformulierungen wie Öl-Suspensionskonzentrate (OD), die dann in üblicher Weise mit Wasser verdünnt zur Anwendung gebracht werden, oder bevorzugt als sogenannte Tankmischungen durch gemeinsame Verdünnung der zuvor getrennt formulierten Komponenten a) und b) mit Wasser hergestellt werden. Bei der Applikation werden die erfindungsgemäßen herbiziden Mittel insbesondere in wässriger Verdünnung, z.B. als wässrige Dispersionen, wässrige Suspensionen, wässrige Emulsionen oder wässrige Lösungen angewendet.

Wenn die Komponenten a) und b) getrennt formuliert werden, kommen als Formulierungsmöglichkeiten für die Wirkstoffkomponente a) beispielsweise wasserlösliche Spritzpulver (WP), wasserdispergierbare Granulate (WDG) und Öl-Suspensionskonzentrate (OD) in Frage, und die Komponente b) kann z.B. als flüssige Formulierung z.B. als emulgierbares Konzentrat (EC) z.B. auf Basis eines Pflanzenöls formuliert werden.

Die erwähnten Formulierungstypen sind im Prinzip bekannt und werden beispielsweise beschrieben in: Winnacker-Küchler, "Chemische Technologie" Band 7, C. Hauser Verlag München, 4. Aufl. 1986; Wade van Valkenburg, "Pesticide Formulations", Marcel Dekker N. Y., 1973; K. Martens, "Spray Drying Handbook, 3rd Ed. 1979, G. Goodwin Ltd. London.

Zweckmäßig werden die erfindungsgemäßen herbiziden Mittel unter Verwendung von im Pflanzenschutz üblichen Zusatzstoffen angewandt wie flüssigen und/oder festen Trägerstoffen oder Verdünnungsmitteln.

Geeignete flüssige Trägerstoffe sind zum Beispiel aliphatische und aromatische Kohlenwasserstoffe, wie Toluol, Xylol, oder auch Cyclohexanon, Isophoron, Dimethylsulfoxid, Dimethylformamid oder Mineralölfraktionen.

Als feste Trägerstoffe eignen sich z. B. Mineralien wie Bentonit, Silicagel, Talkum, Kaolin, Attapulgit, Kalkstein, und pflanzliche Produkte wie Mehle.

Die möglichen Zusatzstoffe wie Inertmaterialien, Lösungsmittel und weitere Zusatzstoffe sind ebenfalls bekannt und werden beispielsweise beschrieben in: Watkins, "Handbook of Insecticide Dust Diluents and Carriers", 2nd Ed., Darland Books, Caldweil N. J.; H. v. Olphen Introduction to Clay Colloid Chemisty, 2nd Ed., J. Wiley & Sons, N. Y.; Marsden "Solvents Guide, 2nd Ed., Interscience, N. Y. 1963; McCutcheon's "Detergents and Emulsifiers Annual", MC Publ. Corp., Ridgewood N. J.; Sisley and Wood, "Encyclopedia of Surface Active Agents", Chem. Publ. Co. Inc., N. Y. 1964; Schönfeldt, "Grenzflächenaktive Äthylenoxidaddukte", Wiss. Verlagsgesellschaft, Stuttgart 1976; Winnacker-Küchler "Chemische Technologie", Band 7, C. Hauser Verlag München, 4. Aufl. 1986.

Auf der Basis dieser Formulierungen lassen sich auch Kombinationen mit anderen agrochemischen Wirkstoffen wie von Komponente a) verschiedenen Herbiziden, Insektiziden, Fungiziden, Antidots oder Safenern und/oder Wachstumsregulatoren herstellen, z. B. in Form einer Fertigformulierung oder als Tankmix.

Wenn die Komponenten a) und b) getrennt formuliert werden, kommen als Formulierungsmöglichkeiten für die Wirkstoffkomponente a) beispielsweise wasserlösliche Spritzpulver (WP), wasserdispergierbare Granulate (WDG) und ÖI-Suspensionskonzentrate (OD) in Frage.

Spritzpulver sind in Wasser gleichmäßig dispergierbare Präparate, die neben den Wirkstoffen außer einem Verdünnungs- oder Inertstoff noch Tenside ionischer und/oder nichtionischer Art (Netzmittel, Dispergiermittel), z. B. polyoxyethylierte Alkylphenole, polyoxyethylierte Fettalkohole und Fettamine, Fettalkoholpolyglykolethersulfate, Alkansulfonate oder Alkylarylsulfonate, 2,2'-dinaphthylmethan-6,6'-disulfonsaures Natrium, dibutylnaphthalinsulfonsaures Natrium oder auch oleylmethyltaurinsaures Natrium enthalten.

Granulate können entweder durch Verdüsen des Wirkstoffes oder der Wirkstoffe auf adsorptionsfähiges, granuliertes Inertmaterial hergestellt werden oder durch Aufbringen von Wirkstoffkonzentraten mittels Klebemitteln, z. B. Zucker wie Pentosen oder Hexosen oder auch Mineralölen, auf die Oberfläche von Trägerstoffen wie Sand, Kaolinite oder von granuliertem Inertmaterial. Wasserdispergierbare Granulate werden in der Regel nach den üblichen Verfahren wie Sprühtrocknung, Wirbelbettgranulierung, Tellergranulierung, Mischung mit Hochgeschwindigkeitsmischern und Extrusion ohne festes Inertmaterial hergestellt. Auch können geeignete Wirkstoffe in der für die Herstellung von Düngemittelgranulaten üblichen Weise - gewünschtenfalls in Mischung mit Düngemitteln - granuliert werden.

Als Formulierungsmöglichkeit für die Hilfsstoffe b) kommen z.B. emulgierbare Konzentrate (EC) in Betracht. Emulgierbare Konzentrate werden z.B. durch Lösen oder Emulgieren des Pflanzenöls in einem organischen Lösungsmittel, z. B. Butanol, Cyclohexanon, Dimethylformamid, Xylol oder auch höhersiedenden Aromaten oder Kohlenwasserstoffen unter Zusatz von einem oder mehreren Tensiden ionischer und/oder nichtionischer Art (Emulgatoren) hergestellt. Als Emulgatoren können beispielsweise verwendet werden: Alkylarylsulfonsaure Calcium-Salze wie Ca-Dodecylbenzolsulfonat oder nichtionische Emulgatoren wie Fettsäurepolyglykolester, Alkylarylpolyglykolether, Fettalkoholpolyglykolether, Propylenoxid-Ethylenoxid-Kondensationsprodukte (z. B. Blockcopolymere), Alkylpolyether, Sorbitanfettsäureester, Polyoxyethylensorbitanfettsäureester oder andere Polyoxyethylensorbitanester.

Besonders vorteilhaft werden die herbiziden Mittel der vorliegenden Erfindung hergestellt, indem man die Wirkstoffe a) mit einer oder mehreren Komponenten b) nach dem Tankmischverfahren mischt. Dabei wird die Komponente a), z.B. in Form einer Wirkstoffformulierung wie WP, WDG oder OD, mit Komponente b), z.B. in Form eines EC, und mit Wasser vermischt, z.B. durch Rühren. Die Zugabereihenfolge der einzelnen Komponenten ist dabei beliebig. So kann z.B. zunächst Wasser in einem Mischgefäß, z.B. dem Spritz-Tank, vorgelegt werden und dazu die Komponente a) und danach die Komponente b) zugegeben werden. Es kann auch zunächst die Komponente b) und danach die Komponente a) zum Wasser gegeben werden, oder die Komponenten a) und b) werden gleichzeitig zum Wasser gegeben.

Die Komponenten a) und b) können auch gemeinsam in einer Mischformulierung vorliegen, z.B. als Öl-Suspensionskonzentrat, die in üblicher Weise mit Wasser verdünnt und appliziert wird.

ÖI-Suspensionskonzentrate können beispielsweise durch Naß-Vermahlung mittels handelsüblicher Perlmühlen und gegebenenfalls Zusatz von Tensiden, wie z.B. oben bei den anderen Formulierungstypen bereits aufgeführt sind, hergestellt werden, wobei als Ölkomponente bevorzugt ein Pflanzenöl b) verwendet wird.

Der Anteil der Wirkstoffe in den verschiedenen Formulierungen kann in weiten Bereichen variiert werden. Beispielsweise enthalten die Formulierungen etwa 0,1 bis 95 Gewichtsprozent Wirkstoffe, etwa 90 bis 5 Gewichtsprozent flüssige oder feste Trägerstoffe, sowie gegebenenfalls bis zu 20 Gewichtsprozent oberflächenaktive Stoffe. In Spritzpulvern beträgt die Wirkstoffkonzentration z. B. etwa 10 bis 95 Gew.-%, der Rest zu 100 Gew.-% besteht aus üblichen Formulierungsbestandteilen. Bei Granulaten wie dispergierbaren Granulaten hängt der Wirkstoffgehalt zum Teil davon ab, ob die wirksame Verbindung flüssig oder fest vorliegt und welche Granulierhilfsmittel und Füllstoffe verwendet werden. In der Regel liegt der Gehalt bei den in Wasser dispergierbaren Granulaten zwischen 10 und 90 Gew.-%. Bei ÖlSuspensionskonzentraten liegt der Wirkstoffgehalt in der Regel zwischen 0,1 und 20 Gew.-%, vorzugsweise zwischen 0,5 und 10 Gew.-%.

Daneben können die genannten Wirkstoffformulierungen und Hilfsstoffformulierungen gegebenenfalls übliche Zusatzstoffe enthalten wie Haft-, Dispergier-, Emulgier-, Penetrations-, Konservierungs-, Frostschutz- und Lösungsmittel, Füll-, Farb- und Trägerstoffe, Entschäumer, Verdunstungshemmer und den pH-Wert und die Viskosität beeinflussende Mittel.

Aufgrund der relativ geringen Aufwandmenge der erfindungsgemäßen herbiziden Mittel ist deren Verträglichkeit in aller Regel schon sehr gut. Insbesondere wird durch die erfindungsgemäßen Kombinationen eine Senkung der absoluten Aufwandmenge erreicht, verglichen mit der Einzelanwendung eines herbiziden Wirkstoffs.

Um die Verträglichkeit und/oder Selektivität der erfindungsgemäßen herbiziden Mittel gewünschtenfalls noch zu steigern kann es von Vorteil sein, diese gemeinsam in Mischung oder zeitlich - getrennt nacheinander zusammen mit Safenern oder Antidots anzuwenden.

Als optionale Komponente c) können in den erfindungsgemäßen herbiziden Mitteln daher Safener enthalten sein, die geeignet sind, Schäden an der Kulturpflanze zu reduzieren oder zu vermeiden. Geeignete Safener sind z.B. aus WO-A-96/14747 und der dort zitierten Literatur bekannt.

Folgende Gruppen von Verbindungen sind beispielsweise als Safener geeignet:
1) Verbindungen vom Typ der Dichlorphenylpyrazolin-3-carbonsäure (S1), vorzugsweise Verbindungen wie 1-(2,4-Dichlorphenyl)-5-(ethoxycarbonyl)-5-methyl-2-pyrazolin-3-carbonsäureethylester (S1-1, Mefenpyr-diethyl, PM S. 781 - 782), und verwandte Verbindungen, wie sie in der WO 91/07874 beschrieben sind,
2) Derivate der Dichlorphenylpyrazolcarbonsäure, vorzugsweise Verbindungen wie 1-(2,4-Dichlorphenyl)-5-methyl-pyrazol-3-carbonsäureethylester (S1-2), 1-(2,4-Dichlorphenyl)-5-isopropyl-pyrazol-3-carbonsäureethylester (S1-3), 1-(2,4-Dichlorphenyl)-5-(1,1-dimethyl-ethyl)pyrazol-3-carbonsäureethyl-ester (S1-4), 1-(2,4-Dichlorphenyl)-5-phenyl-pyrazol-3-carbonsäureethylester (S1-5) und verwandte Verbindungen, wie sie in EP-A-333 131 und EP-A-269 806 beschrieben sind.
3) Verbindungen vom Typ der Triazolcarbonsäuren (S1), vorzugsweise Verbindungen wie Fenchlorazol, d.h. 1-(2,4-Dichlorphenyl)-5-trichlormethyl-(1 H)-1,2,4-triazol-3-carbonsäureethylester (S1-6, Fenchlorazol-ethyl, PM S. 385-386), und verwandte Verbindungen (siehe EP-A-174 562 und EP-A-346 620);
4) Verbindungen vom Typ der 5-Benzyl- oder 5-Phenyl-2-isoxazolin-3-carbonsäure, oder der 5,5-Diphenyl-2-isoxazolin-3-carbonsäure vorzugsweise Verbindungen wie 5-(2,4-Dichlorbenzyl)-2-isoxazolin-3-carbonsäureethylester (S1-7) oder 5-Phenyl-2-isoxazolin-3-carbonsäureethylester (S1-8) und verwandte Verbindungen, wie sie in WO 91/08202 beschrieben sind, bzw. der 5,5-Diphenyl-2-isoxazolin-carbonsäureethylester (S1-9, Isoxadifen-ethyl) oder -n-propylester (S 1-10) oder der 5-(4-Fluorphenyl)-5-phenyl-2-isoxazolin-3-carbonsäureethylester (S1-11), wie sie in der Patentanmeldung (WO-A-95/07897) beschrieben sind.
5) Verbindungen vom Typ der 8-Chinolinoxyessigsäure (S2), vorzugsweise (5-Chlor-8-chinolinoxy)-essigsäure-(1-methyl-hex-1-yl)-ester (S2-1 Cloquintocet-mexyl, PM S. 263 - 264), (5-Chlor-8-chinolinoxy)-essigsäure-(1,3-dimethyl-but-1-yl)-ester (S2-2), (5-Chlor-8-chinolinoxy)-essigsäure-4-allyl-oxy-butylester (S2-3), (5-Chlor-8-chinolinoxy)-essigsäure-1-allyloxy-prop-2-ylester (S2-4), (5-Chlor-8-chinolinoxy)-essigsäureethylester (S2-5), (5-Chlor-8-chinolinoxy)-essigsäuremethylester (S2-6), (5-Chlor-8-chinolinoxy)-essigsäureallylester (S2-7), (5-Chlor-8-chinolinoxy)-essigsäure-2-(2-propyliden-iminoxy)-1-ethylester (S2-8), (5-Chlor-8-chinolinoxy)-essigsäure-2-oxo-prop-1-ylester (S2-9) und verwandte Verbindungen, wie sie in EP-A-86 750, EP-A-94 349 und EP-A-191 736 oder EP-A-0 492 366 beschrieben sind.
6) Verbindungen vom Typ der (5-Chlor-8-chinolinoxy)-malonsäure, vorzugsweise Verbindungen wie (5-Chlor-8-chinolinoxy)-malonsäurediethylester, (5-Chlor-8-chinolinoxy)-malonsäurediallylester, (5-Chlor-8-chinolinoxy)-malonsäure-methyl-ethylester und verwandte Verbindungen, wie sie in EP-A-0 582 198 beschrieben sind.
7) Wirkstoffe vom Typ der Phenoxyessig- bzw. -propionsäurederivate bzw. der aromatischen Carbonsäuren, wie z.B. 2,4-Dichlorphenoxyessigsäure(ester) (2,4-D), 4-Chlor-2-methyl-phenoxy-propionester (Mecoprop), MCPA oder 3,6-Dichlor-2-methoxy-benzoesäure(ester) (Dicamba).
8) Wirkstoffe vom Typ der Pyrimidine, wie "Fenclorim" (PM, S. 512-511) (= 4,6-Dichlor-2-phenylpyrimidin),
9) Wirkstoffe vom Typ der Dichloracetamide, die häufig als Vorauflaufsafener (bodenwirksame Safener) angewendet werden, wie z.B.
"Dichlormid" (PM, S. 363-364) (= N,N-Diallyl-2,2-dichloracetamid),
"R-29148" (= 3-Dichloracetyl-2,2,5-trimethyl-1,3-oxazolidon von der Firma Stauffer),
"Benoxacor" (PM, S. 102-103) (= 4-Dichloracetyl-3,4-dihydro-3-methyl-2H-1,4-benzoxazin, S-4),
"PPG-1292" (= N-Allyl-N[(1,3-dioxolan-2-yl)-methyl]dichloracetamid von der Firma PPG Industries),
"DK-24" (= N-Allyl-N-[(allylaminocarbonyl)-methyl]-dichloracetamid von der Firma Sagro-Chem),
"AD-67" oder "MON 4660" (= 3-Dichloracetyl-1-oxa-3-aza-spiro[4,5]decan von der Firma Nitrokemia bzw. Monsanto),
"Dicyclonon" oder "BAS145138" oder "LAB145138" (= (= 3-Dichloracetyl-2,5,5-trimethyl-1,3-diazabiclyco[4.3.0]nonan von der Firma BASF) und
"Furilazol" oder "MON 13900" (siehe PM, 637-638) (= (RS)-3-Dichloracetyl-5-(2-furyl)-2,2-dimethyloxazolidon)
10) Wirkstoffe vom Typ der Dichloracetonderivate, wie z.B.
"MG 191" (CAS-Reg. Nr. 96420-72-3) (= 2-Dichlormethyl-2-methyl-1,3-dioxolan von der Firma Nitrokemia),
11) Wirkstoffe vom Typ der Oxyimino-Verbindungen, die als Saatbeizmittel bekannt sind, wie z.B.
"Oxabetrinil" (PM, S. 902-903) (= (Z)-1,3-Dioxolan-2-ylmethoxyimino(phenyl)acetonitril), das als Saatbeiz-Safener gegen Schäden von Metolachlor bekannt ist,
"Fluxofenim" (PM, S. 613-614) (= 1-(4-Chlorphenyl)-2,2,2-trifluor-1-ethanon-O-(1,3-dioxolan-2-ylmethyl)-oxim, das als Saatbeiz-Safener gegen Schäden von Metolachlor bekannt ist, und
"Cyometrinil" oder "CGA-43089" (PM, S. 1304) (= (Z)-Cyanomethoxyimino (phenyl)acetonitril), das als Saatbeiz-Safener gegen Schäden von Metolachlor bekannt ist,
12) Wirkstoffe vom Typ der Thiazolcarbonsäureester, die als Saatbeizmittel bekannt sind, wie z.B.
"Flurazol" (PM, S. 590-591) (= 2-Chlor-4-trifluormethyl-1,3-thiazol-5-carbonsäurebenzylester), das als Saatbeiz-Safener gegen Schäden von Alachlor und Metolachlor bekannt ist,
13) Wirkstoffe vom Typ der Napthalindicarbonsäurederivate, die als Saatbeizmittel bekannt sind, wie z.B.
"Naphthalic anhydrid" (PM, S. 1342) (= 1,8-Naphthalindicarbonsäureanhydrid), das als Saatbeiz-Safener für Mais gegen Schäden von Thiocarbamatherbiziden bekannt ist,
14) Wirkstoffe vom Typ Chromanessigsäurederivate, wie z.B.
"CL 304415" (CAS-Reg. Nr. 31541-57-8) (= 2-84-Carboxy-chroman-4-yl)-essigsäure von der Firma American Cyanamid),
15) Wirkstoffe, die neben einer herbiziden Wirkung gegen Schadpflanzen auch Safenerwirkung an Kulturpflanzen aufweisen, wie z.B.
"Dimepiperate" oder "MY-93" (PM, S. 404-405) (= Piperidin-1-thiocarbonsäure-S-1-methyl-1-phenylethylester),
"Daimuron" oder "SK 23" (PM, S. 330) (= 1-(1-Methyl-1-phenylethyl)-3-p-tolylharnstoff),
"Cumyluron" = "JC-940" (= 3-(2-Chlorphenylmethyl)-1-(1-methyl-1-phenylethyl)-harnstoff, siehe JP-A-60087254),
"Methoxyphenon" oder "NK 049" (= 3,3'-Dimethyl-4-methoxybenzophenon),
"CSB" (= 1-Brom-4-(chlormethylsulfonyl)-benzol) (CAS-Reg. Nr. 54091-06-4 von Kumiai),
Verbindungen von Typ der Acylsulfamoylbenzoesäureamide, z.B. der nachfolgenden Formel (VIII), die z.B. bekannt sind aus WO 99/16744.

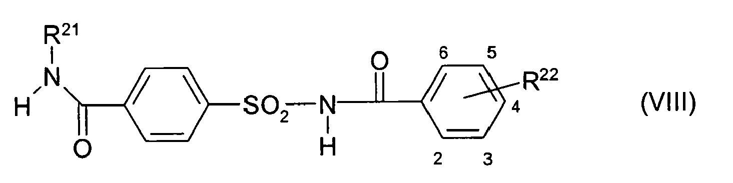

| Verbindung Nr. | R²¹ | R²² |
|---|---|---|
| S3-1 | Cyclo-Propyl | 2-OCH₃ |
| S3-2 | Cyclo-Propyl | 2-OCH₃, 5-Cl |
| S3-3 | Ethyl | 2-OCH₃ |
| S3-4 | iso-Propyl | 2-OCH₃, 5-Cl |
| S3-5 | iso-Propyl | 2-OCH₃ |

Bevorzugte Safener sind Mefenpyr, Fenchlorazol, Isoxadifen, Cloquintocet, und deren C₁-C₁₀-Alkylester, sowie die Safener (S3-1 = 4-Cyclopropylaminocarbonyl-N-(2-methoxybenzoyl)benzolsulfonamid) und Benoxacor (S-4), insbesondere Mefenpyr-diethyl (S1-1), Fenchlorazol-ethyl (S1-6), Isoxadifen-ethyl (S1-9), Cloquintocet-mexyl (S2-1), (S3-1) und Benoxacor (S-4).

Soweit in den erfindungsgemäßen herbiziden Mitteln Safener c) enthalten sind, beträgt deren Gewichtsanteil im allgemeinen 0,1 bis 60 Gew.%, insbesondere 2 bis 40 Gew.%.

Das Gewichtsverhältnis der Komponente a) zu der Komponente c) kann in einem weiten Bereich variieren, und liegt im allgemeinen zwischen 1:100 und 100:1, bevorzugt zwischen 1:10 und 10:1.

Optional können von den Komponenten a) und c) verschiedene agrochemische Wirkstoffe d) wie Herbizide, Fungizide, Insektizide, Pflanzenwachstumsregulatoren und dergleichen enthalten sein.

Als optional enthaltene von den Komponenten (a) und (c) verschiedene agrochemische Wirkstoffe (d) kommen für die erfindungsgemäßen herbiziden Mittel insbesondere Herbizide in Frage, beispielsweise die nachfolgend genannten bekannten Herbizide, wie sie in z.B. Weed Research 26, 441-445 (1986), oder "The Pesticide Manual", 13th edition, The British Crop Protection Council, 2003, und dort zitierter Literatur beschrieben sind, z.B. in Mischungsformulierungen oder als TankMischpartner. Die Verbindungen sind entweder mit dem "common name" nach der International Organization for Standardization (ISO) oder mit dem chemischen Namen, ggf. zusammen mit einer üblichen Codenummer bezeichnet und umfassen stets sämtliche Anwendungsformen wie Säuren, Salze, Ester und Isomere wie Stereoisomere und optische Isomere: 2,4-D, Acetochlor, Acifluorfen, Acifluorfensodium, Aclonifen, Alachlor, Alloxydim, Alloxydim-sodium, Ametryn, Amicarbazone, Amidosulfuron, Aminopyralid, Amitrole, Anilofos, Asulam, Atrazine, Azafenidin, Azimsulfuron, Beflubutamid, Benazolin, Benazolin-ethyl, Benfuresate, Bensulfuronmethyl, Bentazone, Benzfendizone, Benzobicyclon, Benzofenap, Bifenox, Bilanafos, Bispyribac-sodium, Bromacil, Bromobutide, Bromofenoxim, Bromoxynil, Butachlor, Butafenacil, Butenachlor, Butralin, Butroxydim, Butylate, Cafenstrole, Carbetamide, Carfentrazone-ethyl, Chlomethoxyfen, Chloridazon, Chlorimuron-ethyl, Chlornitrofen, Chlorotoluron, Chlorsulfuron, Cinidon-ethyl, Cinmethylin, Cinosulfuron, Clefoxydim, Clethodim, Clodinafop-propargyl, Clomazone, Clomeprop, Clopyralid, Cloransulamethyl, Cumyluron, Cyanazine, Cyclosulfamuron, Cycloxydim, Cyhalofop-butyl, Desmedipham, Dicamba, Dichlobenil, Dichlorprop, Dichlorprop-P, Diclofop-methyl, Diclosulam, Difenzoquat, Diflufenican, Diflufenzopyr, Dikegulac-sodium, Dimefuron, Dimepiperate, Dimethachlor, Dimethametryn, Dimethenamid, Diquat-dibromide, Dithiopyr, Diuron, Dymron, EPTC, Esprocarb, Ethalfluralin, Ethametsulfuron-methyl, Ethofumesate, Ethoxyfen, Ethoxysulfuron, Etobenzanid, Fenoxaprop-ethyl, Fenoxaprop-P-ethyl, Fentrazamide, Flamprop-M-isopropyl, Flamprop-M-methyl, Flazasulfuron, Florasulam, Fluazifop, Fluazifop-butyl, Fluazolate, Flucarbazonesodium, Flucetosulfuron, Fluchloralin, Flufenacet, Flufenpyr, Flumetsulam, Flumiclorac-pentyl, Flumioxazin, Fluometuron, Fluorochloridone, Fluoroglycofen-ethyl, Flupoxam, Flupyrsulfuron-methyl-sodium, Fluridone, Fluroxypyr, Fluroxypyrbutoxypropyl, Fluroxypyr-meptyl, Flurprimidol, Flurtamone, Fluthiacet-methyl, Fomesafen, Foramsulfuron, Glufosinate, Glufosinate-ammonium, Glyphosate, Halosulfuron-methyl, Haloxyfop, Haloxyfop-ethoxyethyl, Haloxyfop-methyl, Haloxyfop-P-methyl, Hexazinone, Imazamethabenz-methyl, Imazamox, Imazapic, Imazapyr, Imazaquin, Imazethapyr, Imazosulfuron, Indanofan, lodosulfuron-methylnatrium, loxynil, Isoproturon, Isouron, Isoxaben, Isoxachlortole, Isoxaflutole, Ketospiradox, Lactofen, Lenacil, Linuron, MCPA, Mecoprop, Mecoprop-P, Mefenacet, Mesosulfuron-methyl, Mesotrione, Metamifop, Metamitron, Metazachlor, Methabenzthiazuron, Methyldymron, Metobromuron, Metolachlor, Metosulam, Metoxuron, Metribuzin, Metsulfuron-methyl, Molinate, Monolinuron, Naproanilide, Napropamide, Neburon, Nicosulfuron, Norflurazon, Orbencarb, Oryzalin, Oxadiargyl, Oxadiazon, Oxasulfuron, Oxaziclomefone, Oxyfluorfen, Paraquat, Pelargonic acid, Pendimethalin, Pendralin, Penoxsulam, Pentoxazone, Pethoxamid, Phenmedipham, Picloram, Picolinafen, Pinoxaden, Piperophos, Pretilachlor, Primisulfuron-methyl, Profluazol, Profoxydim, Prometryn, Propachlor, Propanil, Propaquizafop, Propisochlor, Propoxycarbazone-sodium, Propyzamide, Prosulfocarb, Prosulfuron, Pyraclonil, Pyraflufen-ethyl, Pyrazolate, Pyrazosulfuron-ethyl, Pyrazoxyfen, Pyribenzoxim, Pyributicarb, Pyridafol, Pyridate, Pyriftalid, Pyriminobac-methyl, Pyrithiobac-sodium, Quinclorac, Quinmerac, Quinoclamine, Quizalofop-ethyl, Quizalofop-P-ethyl, Quizalofop-P-tefuryl, Rimsulfuron, Sethoxydim, Simazine, Simetryn, S-Metolachlor, Sulcotrione, Sulfentrazone, Sulfometuron-methyl, Sulfosate, Sulfosulfuron, Tebuthiuron, Tepraloxydim, Terbuthylazine, Terbutryn, Thenylchlor, Thiazopyr, Thifensulfuron-methyl, Thiobencarb, Tiocarbazil, Tralkoxydim, Triallate, Triasulfuron, Triaziflam, Tribenuron-methyl, Triclopyr, Tridiphane, Trifloxysulfuron, Trifluralin, Triflusulfuron-methyl, Tritosulfuron, 4-(4,5-Dihydro-4-methyl-5-oxo-3-trifluormethyl-1 H-1,2,4-triazol-1-yl)-2-(ethylsulfonylamino)-5-fluor-benzolcarbothioamid (HWH4991, vgl. WO-A-95/30661), 2-Chlor-N-[1-(2,6-dichlor-4-difluormethyl-phenyl)-4-nitro-1 H-pyrazol-5-yl]-propancarbonsäureamid (SLA5599, vgl. EP-A-303153), und die Verbindungen

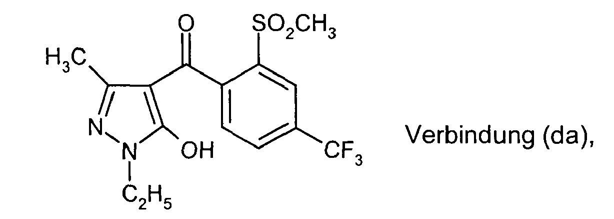

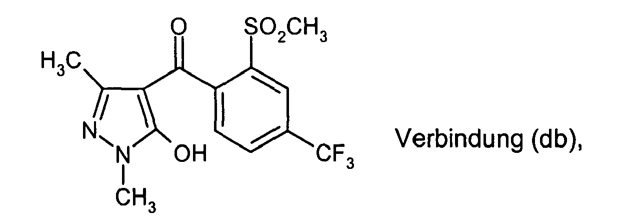

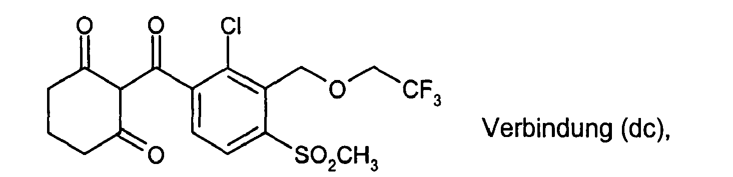

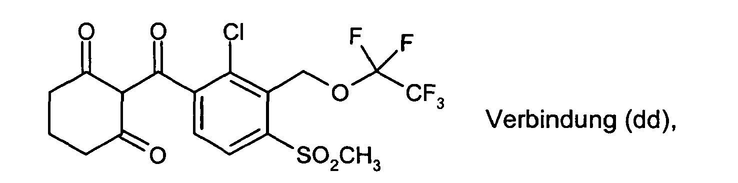

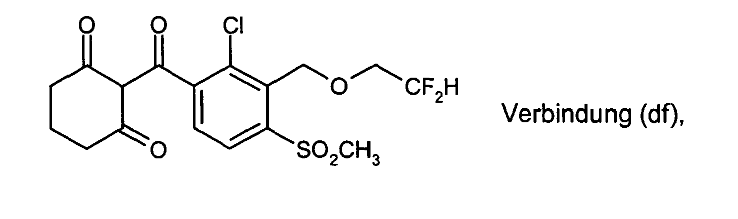

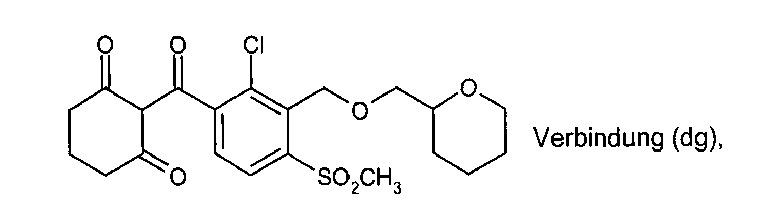

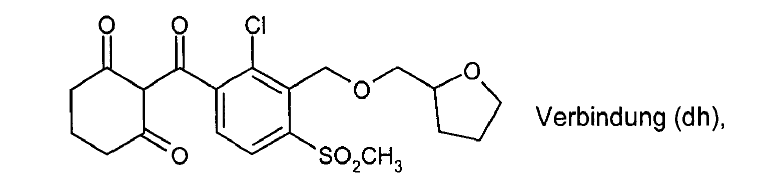

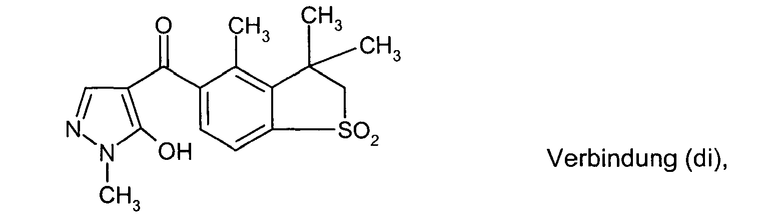

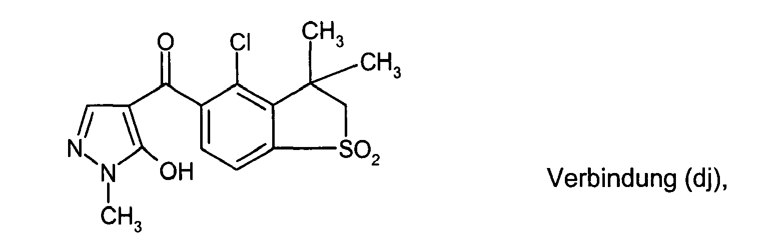

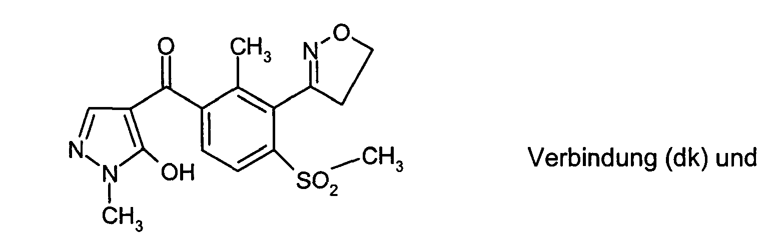

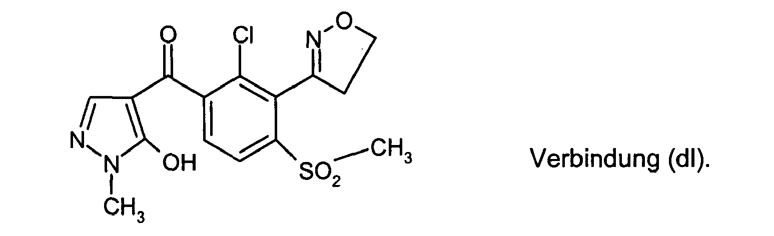

Die Verbindungen (d1) und (d2) sind aus der WO 01/74785, die Wirkstoffe (d3) bis (d7) aus der WO 00/21924 und die anderen Wirkstoffe (d8) bis (d11) aus der WO 96/26206, WO 96/25412 und der US 20020016262 bekannt.

Bevorzugte Komponenten d) sind Herbizide der nachfolgenden Untergruppen (d1) bis (d4) (die Bezeichnung der Herbizide erfolgt weitgehend mit dem "common name", soweit möglich nach der Referenzstelle "The Pesticide Manual", British Crop Protection Council 1997, 11th Ed., abgekürzt "PM", oder 2003, 13th Ed., abgekürzt "PM13"):
(d1) gegen monokotyle und dikotyle Schadpflanzen wirksame Herbizide, beispielsweise
   (d1.1) Flufenacet (BAY FOE 5043) (PM, S. 82-83), 4'-Fluor-N-isopropyl-2-(5-trifluormethyl-1,3,4-thiadiazol-2-yloxy)-acetanilid,
   (d1.2) Metolachlor (PM, S. 833-834), 2-Chlor-N-(2-ethyl-6-methylphenyl)-N-(2-methoxy-1-methylethyl)-acetamid,
   (d1.3) Acetochlor (PM, S. 10-12), 2-Chlor-N-(ethoxymethyl)-N-(2-ethyl-6-methylphenyl)-acetamid,
   (d1.4) Dimethenamid (PM, S. 409-410), 2-Chlor-N-(2,4-dimethyl-3-thienyl)-N-(2-methoxy-1-methylethyl)-acetamid,
   (d1.5) Pethoxamid (AG Chem, New Compound Review (publ. Agranova), Vol. 17, 1999, S. 94, d.h. 2-chloro-N-(2-ethoxyethyl)-N-(2-methyl-1-phenyl-1-propenyl)acetamid,
   (d1.6) Atrazin (PM, S. 55-57), N-Ethyl-N'-isopropyl-6-chlor-2,4-diamino-1,3,5-triazin,
   (d1.7) Simazin (PM, S. 1106-1108), 6-Chlor-N,N-diethyl-2,4-diamino-1,3,5-triazin,
   (d1.8) Cyanazin (PM, S. 280-283), 2-(4-Chlor-6-ethylamino-1,3,5-triazin-2-ylamino)-2-methyl-propionsäurenitril,
   (d1.9) Terbuthylazin (PM, S. 1168-1170), N-Ethyl-N'-tert.-butyl-6-chlor-2,4-diamino-1,3,5-triazin,
   (d1.10) Metribuzin (PM, S. 840-841), 4-Amino-6-tert.-butyl-3-methylthio-1,2,4-triazin-5(4H)-on,
   (d1.11) Terbutryn (PM, S. 1170-1172), N-(1,1-dimethylethyl)-N'-ethyl-6-(methylthio)-1,3,5-triazin-2,4-diamin,
   (d1.12) Nicosulfuron (PM, S. 877-879), 2-(4,6-Dimethoxypyrimidin-2-yl)-3-(3-dimethylcarbamoyl-2-pyridylsulfonyl)-harnstoff und dessen Salze,
   (d1.13) Rimsulfuron (PM, S. 1095-1097), 1-(4,6-Dimethoxypyrimidin-2-yl)-3-(3-ethylsulfonyl-2-pyridylsulfonyl)-harnstoff und dessen Salze,
   (d1.14) Primisulfuron und Ester wie der Methylester (PM, S. 997-999), 2-[4,6-Bis(difluormethoxy)-pyrimidin-2-ylcarbamoylsulfamoyl]-benzoesäure bzw. -methylester, und deren Salze,
   (d1.15) Halosulfuron (PM, S. 657-659), 3-Chlor-5-(4,6-dimethoxy-pyrimidin-2-ylcarbamoylsulfamoyl)-1-methylpyrazol-4-carbonsäure und deren Ester und Salze, vorzugsweise der Methylester,
   (d1.16) lodosulfuron (PM13, S. 573-574) und vorzugsweise Ester wie der Methylester und deren Salze (vgl. WO 96/41537 auf die hiermit ausdrücklich Bezug genommen wird), 4-lod-2-(4-Methoxy-6-methyl-1,3,5-triazin-2-ylcarbamoylsulfamoyl)-benzoesäure bzw. -methylester und deren Salze wie das Natriumsalz, bekannt aus WO-A-92/13845 auf die hiermit ausdrücklich Bezug genommen wird,
   (d1.17) Foramsulfuron und dessen Salze (PM13, S. 494-495), 1-(4,6-dimethoxypyrimidin-2-yl)-3-[2-(dimethylcarbamoyl)-5-formamidophenylsulfonyl]harnstoff,
   (d1.18) Pendimethalin (PM, S. 937-939), N-(1-ethylpropyl)-2,6-dinitro-3,4-xylidin,
   (d1.19) Sulcotrione (PM, S. 1124-1125), 2-(2-Chlor-4-mesylbenzoyl)-cyclohexan-1,3-dion,
   (d1.20) Dicamba (PM, S. 356-357), 3,6-Dichlor-o-anissäure und deren Salze,
   (d1.21) Mesotrione, 2-(4-Mesyl-2-nitrobenzoyl)cyclohexan-1,3-dion (ZA 1296, vgl. Weed Science Society of America (WSSA) in WSSA Abstracts 1999, Vol. 39, Seite 65-66, Ziffern 130-132),
   (d1.22) Linuron (PM, S. 751-753), 3-(3,4-dichlorophenyl)-1-methoxy-1-methylharnstoff
   (d1.23) lsoxachlortole (AG Chem, New Compound Review, publ. Agranova, Vol. 16, 1998, S. 39), d.h. 4-chloro-2-(methylsulfonyl)phenyl-5-cyclopropyl-4-isoxazolylketon
   (d1.24) Isoxaflutole (PM, S. 737-739), (5-Cyclopropyl-4-isoxazolyl)[2-(methylsulfonyl)-4-(trifluormethyl)phenyl]methanon,
   (d1.25) Metosulam (PM, S. 836-838), 2',6'-dichloro-5,7-dimethoxy-3'-methyl[1,2,4]triazolo[1,5-a]pyrimidin-2-sulfonamid
   (d1.26) Flumetsulam (PM, S. 573-574), 2',6'-difluoro-5-methyl[1,2,4]triazolo[1,5-a]pyrimidin-2-sulfonamid
   (d1.27) Cloransulam und Ester wie der Methylester (PM, S. 265), 3-chloro-2-(5-ethoxy-7-fluoro[1,2,4]triazolo[1,5-c]pyrimidin-2-ylsulfonamido)benzoesäure und vorzugsweise der Methylester,
   (d1.28) Florasulam (Zeitschrift für Pflanzenkrankheiten und Pflanzenschutz, Verlag Eugen Ulmer, Stuttgart, Sonderheft XVI, 1998, S. 527-534), N-(2,6-difluorophenyl)-8-fluoro-5-methoxy(1,2,4)triazolo[1,5-c]pyrimidin-2-sulfonamid
   (d1.29) Molinate (PM, S. 847-849), N-(ethylthio-carbonyl)-azepan,
   (d1.30) Thiobencarb (PM, S. 1192-1193), N,N-Diethyl-carbaminsäure-4-chlorbenzylthioester
   (d1.31) Quinchlorac (PM, S. 1078-1080), 3,7-Dichlorchinolin-8-carbonsäure und deren Salze
   (d1.32) Propanil (PM, S. 1017-1019), N-(3,4-dichlorophenyl)-propanamid
   (d1.33) Pyribenzoxim, Benzophenone O-[2,6-bis-[(4,6-dimethoxy-2-pyrimidnyl)oxy]benzoyl]oxim, Tagungsband: The 1997 Brighton Crop Protection Conference, Weeds (publ. British Crop Protection Council) S. 39-40
   (d1.34) Butachlor (PM, S. 159-160), N-(Butoxymethyl)-2-chlor-N-(2,6-diethylphenyl)-acetamid
   (d1.35) Pretilachlor (PM, S. 995-996), N-(2-Propoxyethyl)-2-chlor-N-(2,6-diethylphenyl)acetamid
   (d1.36) Clomazone (PM, S. 256-257), 2-[(2-Chlorphenyl)-4,4-dimethyl-3-isoxazolidinon;
   (d1.37) Oxadiargyl (PM, S. 904-905), 5-tert-Butyl-3-[2,4-dichloro-5-(prop-2-ynyloxy)phenyl]-1,3,4-oxadiazol-2(3H)-on,
   (d1.38) Oxaziclomefone, 3-[1-(3,5-dichlorophenyl)1-methylethyl]-2,3-dihydro-6-methyl-5-phenyl-4H-1,3-oxazin-4-on Tagungsband: The 1997 Brighton Crop Protection Conference, Weeds (publ. British Crop Protection Council) S. 73-74
   (d1.39) Anilofos (PM, S. 47-48), S-4-Chlor-N-isopropylcarbaniloylmethyl-O,O-dimethyl-phosphorodithioat
   (d1.40) Cafenstrole (PM, S. 173-174), 1-Diethylcarbamoyl-3-(2,4,6-trimethylphenylsulfonyl)-1,2,4-triazol
   (d1.41) Thiazopyr (PM, S. 1185-1187), methyl 2-difluoromethyl-5-(4,5-dihydro-1,3-thiazol-2-yl)-4-isobutyl-6-trifluoromethylnicotinat)
   (d1.42) Triclopyr (PM, S. 1237-1239), [(3,5,6-trichloro-2-pyridinyl)oxy]essigsäure, bevorzugt als Triclopyr, Triclopyr-butotyl, Triclopyr-triethylammonium,
   (d1.43) Oxadiazone (PM, S. 905-907), 5-tert-butyl-3-(2,4-dichloro-5-isopropoxyphenyl)-1,3,4-oxadiazol-2(3H)-on,
   (d1.44) Esprocarb (PM, S. 472-473), S-Benzyl-1,2-dimethylpropyl(ethyl)-thiocarbamat
   (d1.45) Pyributicarb (PM, S. 1060-1061), O-3-tert-Butylphenyl-6-methoxy-2-pyridyl-(methyl)-thiocarbamat (TSH-888)
   (d1.46) Azimsulfuron (PM, S. 63-65), 1-(4,6-dimethoxypyrimidin-2-yl)-3-[1-methyl-4-(2-methyl-2H-tetrazol-5-yl)pyrazol-5-ylsulfonylharnstoff
   (d1.47) Azole, wie sie aus der EP-A-0663913 bekannt sind, auf die hiermit ausdrücklich Bezug genommen wird, z.B. 1-(3-Chlor-4,5,6,7-tetrahydropyrazolo-[1,5-a]-pyridin-2-yl)-5-methyl- propargylamino)-4-pyrazolylcarbonsäurenitril (im weiteren "EP 913"),
   (d1.48) Thenylchlor (PM, S. 1182-1183), 2-chlor-N-(3-methoxy-2-thenyl)-2',6'-dimethylacetanilide,
   (d1.49) Pentoxazone (PM, S. 942-943), 3-(4-Chloro-5-cyclopentyloxy-2-fluorphenyl)-5-isopropyliden-1,3-oxazolidin-2,4-dion,
   (d1.50) Pyriminobac und dessen Ester wie der Methylester (PM, S. 1071-1072), 2-(4,6-Dimethoxy-2-pyrimidinyloxy)-6-(1-methoxyiminoethyl)-benzoesäuremethylester, auch als Säure oder Natriumsalz,
   (d1.51) Mesosulfuron und dessen Salze und Ester (PM, S. 630), Methyl 2-[(4,6-dimethoxypyrimidin-2-ylcarbamoyl)sulfamoyl]α-(methane-sulfonamido)-p-toluat,
   (d1.52) Isoproturon (PM, S. 732-734), 3-(4-isopropylphenyl)-1,1-dimethylharnstoff
   (d1.53) Chlortuloron (PM, S. 229-231), 3-(3-chloro-p-tolyl)-1,1-dimethylharnstoff
   (d1.54) Prosulfocarb (PM, S. 1039-1041), S-benzyl dipropylthiocarbamat
   (d1.55) Flucarbazone und dessen Salze (PM13, S. 447-448), 4,5-dihydro-3-methoxy-4-methyl-5-oxo-N-(2-trifluoromethoxyphenylsulfonyl)-1 H-1,2,4-triazole-1-carboxamid Natrium,
   (d1.56) Propoxycarbazone und dessen Salze (PM, S. 831-832), Methyl 2-[[[(4,5-dihydro-4-methyl-5-oxo-3-propoxy-1 H-1,2,4-triazol-1-yl)carbonyl]amino]sulfonyl]benzoat, Natriumsalz
   (d1.57) Flupyrsulfuron und dessen Ester wie der Methylester und deren Salze (PM, S. 586-588), methyl 2-(4,6-dimethoxypyrimidin-2-ylcarbamoylsulfamoyl)-6-trifluoromethylnicotinat natrium)
   (d1.58) Sulfosulfuron und dessen Salze (PM, S. 1130-1131), 1-(4,6-dimethoxypyrimidin-2-yl)-3-(2-ethylsulfonylimidazo[1,2-a]pyridin-3-yl)sulfonylharnstoff
   (d1.59) Trifluralin (PM13, S. 1012-1014), α,α,α-trifluoro-2,6-dinitro-N,N-dipropyl-p-toluidin,
   (d1.60) Ethalfluralin (PM13, S. 375-376), N-ethyl-α,α,α-trifluoro-N-(2-methylallyl)-2,6-dinitro-p-toluidin,
   (d1.61) Norflurazon (PM13, S. 711-712), 4-chloro-5-methylamino-2-(α,α,α-trifluoro-m-tolyl)pyridazin-3(2H)-on,
   (d1.62) Vernolate (PM13, S. 1099), S-propyl dipropylthiocarbamat,
   (d1.63) Chlorotoluron (PM13, S. 170), 3-(3-chloro-p-tolyl)-1,1-dimethylharnstoff,
   (d1.64) Imazethapyr und dessen Salze und Ester (PM13, S. 558-560), (RS)-5-ethyl-2-(4-isopropyl-4-methyl-5-oxo-2-imidazolin-2-yl)nicotinsäure,
   (d1.65) Imazamox (PM13, S.552-553), (RS)-2-(4-isopropyl-4-methyl-5-oxo-2-imidazolin-2-yl)-5-methoxymethylnicotinsäure,
   (d1.66) Imazaquin und dessen Salze und Ester (PM13, S. 557-558), (RS)-2-(4-isopropyl-4-methyl-5-oxo-2-imidazolin-2-yl)quinoline-3-carboxylsäure,
(d2) überwiegend gegen dikotyle Schadpflanzen wirksame Herbizide, beispielsweise
   (d2.1) MCPA (PM, S. 767-769), (4-Chlor-2-methyl-phenoxy)-essigsäure und deren Salze und Ester,
   (d2.2) 2,4-D (PM, S. 323-327), 2,4-Dichlorphenoxyessigsäure und deren Salze und Ester,
   (d2.3) Bromoxynil (PM, S. 149-151), 3,5-Dibrom-4-hydroxy-benzonitril,
   (d2.4) Bentazone (PM, S. 1064-1066), 3-Isopropyl-2,2-dioxo-1H-2,1,3-benzothiadiazin-4(3H)-on,
   (d2.5) Fluthiacet (PM, S. 606-608), [2-Chlor-4-fluor-5-[5,6,7,8-tetrahydro-3-oxo-1H,3H-1,3,4-thiadiazolo[3,4-a]pyridazin-1-ylidenaminophenylthio]-essigsäure und vorzugsweise der Methylester,
   (d2.6) Pyridate (PM, S. 1064-1066), Thiokohlensäure-O-(6-Chlor-3-phenylpyridazin-4-yl)-S-(octyl)-diester,
   (d2.7) Diflufenzopyr (BAS 654 00 H, PM S. 81-82), 2-{1-[4-(3,5-difluorophenyl)semicarbazono]ethyl}nicotinsäure
   (d2.8) Carfentrazone (PM, S. 191-193), ethyl (RS)-2-chloro-3-[2-chloro-5-(4-difluoromethyl-4,5-dihydro-3-methyl-5-oxo-1 H-1,2,4-triazol-1-yl)-4-fluorophenyl]propionat angewendet u.a. als Carfentrazone-ethyl (wie angegeben) oder auch als Säure
   (d2.9) Clopyralid (PM, S. 260-263), 3,6-dichloropyridin-2-carbonsäure
   (d2.10) Thifensulfuron und dessen Ester, vorzugsweise der Methylester (PM, S. 1188-1190), 3-[[[[(4-Methoxy-6-methyl-1,3,5-triazin-2-yl)-amino]-carbonyl]-amino]sulfonyl]-2-thiophencarbonsäure bzw. -methylester und dessen Salze,
   (d2.11) Prosulfuron und dessen Salze (PM, S. 1041-1043), 1-(4-Methoxy-6-methyl-1,3,5-triazin-2-yl)-3-[2-(3,3,3-trifluorpropyl)-phenylsulfonyl]-harnstoff und dessen Salze,
   (d2.12) Tritosulfuron und dessen Salze (PM13, S.1022; AG Chem, New Compound Review (publ. Agranova), Vol. 17, 1999, S. 24), N-[[[4'-methoxy-6-(trifluoromethyl)-1,3,5-triazin-2-yl]amino]carbonyl]-2-trifluoromethylbenzenesulfonamid)
   (d2.13) Triasulfuron und dessen Salze (PM, S. 1222-1224), 1-[2-(2-chloroethoxy)phenylsulfonyl]-3-(4-methoxy-6-methyl-1,3,5-triazin-2-yl)harnstoff
   (d2.14) 2,4-D (PM, S.323-327), (2,4-Dichlorphenoxy)essigsäure,häufig eingesetzte Formen: 2,4-D-butotyl, 2,4-D-butyl, 2,4-D-dimethylammonium, 2,4-D-diolamin, 2,4-D-iso-octyl, 2,4-D-isopropyl, 2,4-D-trolamin
   (d2.15) MCPA (PM, S. 770-771), (4-Chlor-2-methylphenoxy)essigsäure, vorwiegend eingesetzte Formen sind u.a. MCPA-butotyl, MCPAdimethylammonium, MCPA-isoctyl, MCPA-Kalium, MCPA-Natrium
   (d2.16) Bensulfuron und dessen Ester, vorzugsweise der Methylester und deren Salze, (PM, S. 104-105), α-(4,6-Dimethoxypyrimidin-2-yl-carbamoylsulfamoyl)-O-toluolsäure-methylester
   (d2.17) Metsulfuron und dessen Ester, vorzugsweise der Methylester und deren Salze (PM, S. 842-844), methyl 2-[[[[(4-methoxy-6-methyl-1,3,5-triazin-2-yl)amino]carbonyl] amino]sulfonyl]benzoat
   (d2.18) Acifluorfen (PM, S. 12-14), 5-(2-Chlor-α,α,α,-trifluor-p-tolyloxy)-2-nitrobenzoesäure, auch verwendet als Acifluorfen-Natrium
   (d2.19) Bispyribac (KIH 2023), bevorzugt ist die Form als Natriumsalz (PM, S. 129-131), Natrium 2,6-bis[(4,6-dimethoxypyrimidin-2-yl)oxy]benzoat,
   (d2.20) Ethoxysulfuron und dessen Ester und Salze (PM,S. 488-490), 1-(4,6-dimethoxypyrimidin-2-yl)-3-(2-ethoxyphenoxy-sulfonyl)harnstoff
   (d2.21) Cinosulfuron und dessen Ester und Salze (PM, S. 248-250), 1-(4,6-Dimethoxy-1,3,5-triazin-2-yl)-3-[2-(2-methoxyethoxy)-phenylsulfonyl]-harnstoff
   (d2.22) Pyrazosulfuron und dessen Ester, vorzugsweise der Ethylester, und deren Salze (PM, S. 1052-1054), 5-(4,6-Dimethoxypyrimidin-2-ylcarbamoylsulfamoyl)-1-methylpyrazol-4-carbonsäuremethylester
   (d2.23) Imazosulfuron und dessen Ester und Salze (PM, S. 703-704), 1-(2-chloroimidazo[1,2-a]pyridin-3-ylsulfonyl)-3-(4,6-dimethoxypyrimidin-2-yl]harnstoff
   (d2.24) Cyclosulfamuron und dessen Ester und Salze (PM, S. 288-289), N-[[[2-(cyclopropylcarbonyl)phenyl]amino]sulfonyl]-N1-(4,6-dimethoxypyrimidin-2-yl)harnstoff
   (d2.25) Chlorsulfuron und dessen Ester und Salze (PM, S. 239-240), 1-(2-chlorophenylsulfonyl)-3-(4-methoxy-6-methyl-1,3,5-triazin-2-yl)harnstoff
   (d2.26) Bromobutide (PM, S. 144-145), 2-Brom-3,3-dimethyl-N-(1-methyl-1-phenylethyl)-butyramid
   (d2.27) Bentazon (PM, S. 109-111), 3-Isopropyl-1H-2,1,3-benzothiadiazin-4(3H)-on-2,2-dioxid
   (d.2.28) Chlorimuron und dessen Ester, vorzugsweise der Ethylester, und deren Salze (PM, S. 217-218), ethyl 2-(4-chloro-6-methoxypyrimidin-2-yl-carbonylsulfamoyl)benzoat
   (d2.29) Diflufenican (PM, S. 397-399), 2',4'-difluoro-2-(α,α,α-trifluoro-m-tolyloxy)nicotinanilid
   (d2.30) Flurtamone (PM, S. 602-603), (RS)-5-methylamino-2-phenyl-4-(α,α,α-trifluoro-m-tolyl)furan-3(2H)on
   (d2.31) Tribenuron (PM, S. 1230-1232), methyl 2-[[[[4-methoxy-6-methyl-1,3,5-triazin-2-yl)-methylamino]carbonyl]amino]sulfonyl]benzoat
   (d.2.32) Amidosulfuron und dessen Salze (PM, S. 37-38), 1-(4,6-dimethoxypyrimidin-2-yl)-3-mesyl(methyl)sulfamoylharnstoff
   (d2.33) Mecoprop/Mecoprop-p und deren Ester (PM, S. 776-779), (RS)-2-(4-chloro-o-tolyloxy)propionsäure
   (d2.34) Dichlorprop/Dichlorprop-P und deren Ester (PM, S. 368-372), (RS)-2-(2,4-dichlorophenoxy)propionsäure
   (d2.35) Fluroxypyr (PM, S. 597-600), 4-amino-3,5-dichloro-6-fluoro-2-pyridyloxyacetic acid
   (d2.36) Picloram (PM, S. 977-979), 4-amino-3,5,6-trichloropyridine-2-carbonsäure
   (d2.37) loxynil (PM, S. 718-721), 4-hydroxy-3,5-di-iodobenzonitril
   (d2.38) Bifenox (PM, S. 116-117), methyl-5-(2,4-dichlorophenoxy)-2-nitrobenzoat
   (d2.39) Pyraflufen-ethyl (PM, S. 1048-1049), ethyl 2-chloro-5-(4-chloro-5-difluoromethoxy-1-methylpyrazol-3-yl)-4-fluorophenoxyacetat
   (d.2.40) Fluoroglycofen-ethyl (PM, S. 580-582), O-[5-(2-chloro-α,α,α-trifluoro-p-tolyloxy)-2-nitrobenzoyl]glycolsäure
   (d2.41) Cinidon-ethyl (BAS 615005) (AG Chem, New Compound Review, publ. Agranova, Vol. 17, 1999, S. 26)
   (d2.42) Picolinafen (PM13, S. 785-786) AG Chem, New Compound Review, (publ. Agranova), Vol. 17, 1999, S. 35), N-4-fluorophenyl-6-(3-trifluoromethylphenoxy)pyridin-2-carboxamid,
   (d2.43) Sulfentrazone (PM13, S. 910-911), 2',4'-dichloro-5'-(4-difluoromethyl-4,5-d ihydro-3-methyl-5-oxo-1 H-1,2,4-triazol-1-yl)methanesulfonanilid,
   (d2.44) Oxyfluorfen (PM13, S. 738-739), 2-chloro-α,α,α-trifluoro-p-tolyl 3-ethoxy-4-nitrophenyl ether,
   (d2.45) Lactofen (PM13, S. 596-597), ethyl O-[5-(2-chloro-α,α,α-trifluoro-p-tolyloxy)-2-nitrobenzoyl]-DL-lactat,
   (d2.46) Fomesafen (PM13, S. 492-493), 5-(2-chloro-α,α,α-trifluoro-p-tolyloxy)-N-methylsulfonyl-2-nitrobenzamid,
   (d2.47) Flumiclorac (PM13, S. 460-461), pentyl [2-chloro-5-(cyclohex-1-ene-1,2-dicarboximido)-4.-fluorophenoxy]acetat,
   (d2.48) 2,4-DB (PM13, S. 264-266), 4-(2,4-dichlorophenoxy)buttersäure,
   (d2.49) Flumioxazin (PM13, S. 461-462), N-(7-fuoro-3,4-dihydro-3-oxo-4-prop-2-ynyl-2H-1,4-benzoxazin-6-yl)cyclohex-1-ene-1,2-dicarboxamid,
   (d2.50) Benazolin (PM13, S. 62-64), 4-chloro-2-oxobenzothiazolin-3-ylessigsäure; 4-chloro-2,3-dihydro-2-oxobenzothiazol-3-ylessigsäure,
(d3) überwiegend gegen monokotyle Schadpflanzen wirksame Herbizide, beispielsweise
   (d3.1) Quizalofop/Quizalofop-P und deren Ester wie der Ethyl- oder Tefurylester (PM, S. 1087-1092), (RS)-2-[4-(6-chlorochinoxalin-2-yloxy)phenoxy]propionsäure,
   (d3.2) Fenoxaprop/Fenoxaprop-P oder deren Ester wie der Ethylester (PM, S. 519-520), 2-[4-(6-Chlor-benzoxazol-2-yloxy)-phenoxy]-propionsäureethylester,
   (d3.3) Fluazifop/Fluazifop-P und deren Ester wie der Butylester (PM, S. 553-557), butyl (RS)-2-[4-(5-trifluoromethyl-2-pyridiyloxy)phenoxy]propionat,
   (d3.4) Haloxyfop /Haloxyfop-P und deren Ester wie der Methylester (PM, S. 659-663), (±)-2-[4-[[3-Chlor-5-(trifluoromethyl)-2-pyridinyl]oxy]phenoxy]propionsäure, umfassend u.a. die Anwendungsform als Haloxyfop-etotyl, haloxyfop-methyl, haloxyfop-methyl [(R)-Isomer],
   (d3.5) Propaquizafop (PM, S. 1021-1022), 2-isopropylidenamino-oxyethyl (R)-2-[4-(6-chlorochinoxalin-2-yloxy)phenoxy]propionat,
   (d3.6) Clodinafop und deren Ester wie der Propargylester (PM, S. 251-253), (R)-2-[4-(5-chloro-3-fluoro-2-pyridyloxy)-phenoxy]propionsäure,
   (d3.7) Cyhalofop und deren Ester wie der Butylester (PM, S. 297-298), Butyl(R)-2-[4-(4-cyano-2-fluorophenoxy)phenoxy]propionat,
   (d3.8) Diclofop/Diclofop-P und deren Ester wie der Methylester (PM, S. 374-377), (RS)-2-(2,4-dichlorophenoxy)phenoxy]propionsäure,
   (d3.9) Sethoxydim (PM, S. 1101-1103), (±)-(EZ)-(1-ethoxyiminobutyl)-5-[2-ethylthio)propyl]-3-hydroxycyclohex-2-enon,
   (d3.10) Cycloxydim (PM, S. 290-291), (±)-2-[1-(ethoxyimino)butyl]-3-hydroxy-5-thian-3-ylcyclohex-2-enon,
   (d3.11) Clethodim (PM, S. 250-251), (±)-2-[(E)-1-[(E)-3-chloroallyloxyimino]propyl]-5-[2-(ethylthio)propyl]-3-hydrocyclohex-2-enon,
   (d3.12) Profoxydim, 2-[1-(2-(4-chlorophenoxy)propoxyimino)butyl]-3-oxo-5-thian-3-ylcyclohex-1-enol (AG Chem, New Compound Review (publ. Agranova), Vol. 17, 1999, S. 26 sowie PM, 13. Auflage S. 808-809),
   (d3.13) Alachlor (PM, S. 23-24), 2-Chlor-N-(2,6-diethylphenyl)-N-(methoxymethyl)-acetamid,
   (d3.14) Mefenacet (PM, S. 779-781), 2-(1,3-Benzthiazol-3-yloxy)-N-methylacetanilid,
   (d3.15) Fentrazamid, 4-(2-Chlorphenyl)-5-oxo-4,5-dihydro-tetrazole-1-carboxylic acid cyclohexylethyl-amid (PM13, S. 427 - 428 und Tagungsband: The 1997 Brighton Crop Protection Conference, Weeds (publ. British Crop Protection Council), S. 67-68),
   (d3.16) Benfuresate (PM, S. 98-99), 2,3-Dihydro-3,3-dimethylbenzofuran-5-yl-ethansulfonat,
(d4) gegen monokotyle und dikotyle Schadpflanzen wirksame Herbizide für den Einsatz im nichtselektiven Bereich oder in spezifisch toleranten Kulturen wie
   (d4.1) Glufosinate (PM, S. 643-645), umfassend auch Glufosinate-P, z.B. 4-[Hydroxy(methyl)phosphinoyl]-DL-homoalanin, 4-[Hydroxy(methyl) phosphinoyl]-L-homoalanin, jeweils bevorzugt als Salze, z.B. Ammonium- oder Alkalimetallsalze wie
      (d4.1.1) Glufosinate-ammonium,
      (d4.1.2) Glufosinate-P-Ammonium,
      (d4.1.3) Glufosinate-Natrium,
      (d4.1.4) Glufosinate-P-Natrium,
   (d4.2) Glyphosate (PM, S. 646-649),
      N-(Phosphonomethyl)-glycin und dessen Salze und Ester, beispielsweise
      (d4.2.1) Glyphosate-isopropylammonium,
      (d4.2.2) Glyphosate-sequinatrium,
      (d4.2.3) Glyphosate-trimesium,
   (d4.3) Paraquat und dessen Salze wie Paraquat-dichlorid (PM S. 923-925).
      Imidazolinone und deren Salze wie
   (d4.4) Imazapyr und dessen Salze und Ester (PM, S. 697-699),
   (d4.5) lmazamethabenz und dessen Salze und Ester (PM, S.694-696),
   (d4.6) Imazamethabenz-methyl (PM, S.694-696),
   (d4.7) Imazapic (AC 263,222) und dessen Salze und Ester, z.B. das Ammoniumsalz, (PM, S.5 und 6, referiert unter AC 263,222).

Als Kombinationspartner (d) kommen vorzugsweise Verbindungen in Frage, die selektiv in Soja sind, beispielsweise
(dα) selektiv in Soja gegen monokotyle und dikotyle Schadpflanzen wirksame Herbizide, beispielsweise
   (d1.59) Trifluralin (PM, S. 1248-1250),
   (d1.10) Metribuzin (PM, S. 840-841),
   (d1.36) Clomazone (PM, S. 256-257),
   (d1.18) Pendimethalin (PM, S. 937-939),
   (d1.2) Metolachlor (PM, S. 833-834),
   (d1.26) Flumetsulam (PM, S. 573-574),
   (d1.4) Dimethenamid (PM, S. 409-410),
   (d1.22) Linuron (PM, S. 751-753),
   (d1.60) Ethalfluralin (PM, S. 473-474),
   (d1.1) Flufenacet (BAY FOE 5043) (PM, S. 82-83),
   (d1.61) Norflurazon (PM, S. 886-888),
   (d 1.62) Vernolate (PM, S. 1264-1266),
   (d1.63) Chlortoluron, Chlorotoluron (PM, S. 229-231),
   (d1.27) Cloransulam und Ester wie der Methylester (PM, S. 265),
   (d1.64) Imazethapyr (PM13, S. 558-560),
   (d1.65) Imazamox (PM13, S.552-553),
   (d1.66) Imazaquin (PM13, S. 557-558),
(dβ) selektiv in Soja gegen dikotyle Schadpflanzen wirksame Herbizide, beispielsweise
   (d2.43) Sulfentrazone (PM, S. 1126-1127),
   (d2.4) Bentazone (PM, S. 109-111),
   (d2.10) Thifensulfuron und dessen Ester, insbesondere der Methylester (PM, S.1188-1190),
   (d2.44) Oxyfluorfen (PM, S. 919-921),
   (d2.45) Lactofen (PM, S. 747-748),
   (d2.46) Fomesafen (PM, S. 616-618),
   (d2.47) Flumiclorac (PM, S. 575-576) und dessen Ester wie der Pentylester,
   (d2.18) Acifluorfen und dessen Natriumsalz (PM, S. 12-14),
   (d2.48) 2,4-DB (PM, S. 337-339) und dessen Ester und Salze,
   (d2.49) Flumioxazin (PM13, S. 461-462),
   (d2.50) Benazolin (PM13, S. 62-64),
   (d2.2) 2,4-D (PM, S. 323-327) und dessen Ester und Salze
   (d2.28) Chlorimuron und dessen Ester und Salze wie Chlorimuron-ethyl
(dγ) selektiv in Soja gegen monokotyle Schadpflanzen wirksame Herbizide, beispielsweise
   (d3.9) Sethoxydim (PM, S. 1101-1103),
   (d3.10) Cycloxydim (PM, S. 290-291),
   (d3.11) Clethodim (PM, S. 250-251),
   (d3.1) Quizalofop-P und dessen Ester wie der Ethyl- oder Tefurylester (PM, S. 1089-1092),
   (d3.2) Fenoxaprop-P und dessen Ester wie der Ethylester (PM, S. 519-520),
   (d3.3) Fluazifop-P und dessen Ester wie der Butylester (PM, S. 556-557),
   (d3.4) Haloxyfop und Haloxyfop-P und deren Ester wie der Methyl- oder der - etotylester (PM, S. 660-663),
   (d3.5) Propaquizafop (PM, S. 1021-1022),
   (d3.13) Alachlor (PM, S. 23-24),
(dδ) nicht selektive, zu spezifischen Zwecken in Soja einsetzbare Herbizide, z. B.
   (d4.1) Glufosinate (PM, S. 643-645),
   (d4.2) Glyphosate (PM, S. 646-649),
   (d4.3) Paraquat (Salze) wie Paraquat-dichlorid (PM, S. 923-925),

Ebenfalls bevorzugte Kombinationspartner (d) sind Benozalin, Fenoxaprop, Lactofen, Chlortoluron, Flufenacet, Metribuzin, Benfuresate, Fentrazamid, Mefenacet, Diclofop, loxynil, Bromoxynil, Amidosulfuron, Flurtamone, Diflufenican, Ethoxysulfuron, Flucarbazone, Propoxycarbazone, Sulcotrione, Mesotrione, Isoproturon, lodosulfuron, Mesosulfuron, Foramsulfuron, Anilofos, Oxaziclomefone, Oxadiargyl, Isoxaflutole, Linuron.

Wenn im Rahmen dieser Beschreibung die Kurzform des "common name" verwendet wird, so sind damit alle gängigen Derivate, wie die Ester und Salze, und Isomere, insbesondere optische Isomere umfaßt, insbesondere die handelsüblichen Form bzw. Formen. Die angegebenen chemischen Verbindungsnamen bezeichnen zumindest eine der von dem "common name" umfaßten Verbindungen, häufig eine bevorzugte Verbindung. Bei Sulfonylharnstoffen sind mit Salzen insbesondere auch die umfaßt, die durch Austausch eines Wasserstoffatoms an der Sulfonamidgruppe durch ein Kation entstehen.

Bevorzugte Herbizid-Kombinationen sind solche aus einem oder mehreren Herbiziden (a) mit einem oder mehreren Herbiziden (d), vorzugsweise aus der Gruppe (d1) oder (d2), (d3) oder (d4). Weiter bevorzugt sind Kombinationen von Herbiziden (a) mit einem oder mehreren Herbiziden (d) nach dem Schema: (a) + (d1), (a) + (d2), (a) + (d3), (a) + (d4), (a) + (d1) + (d2), (a) + (d1) + (d3), (a) + (d1) + (d4), (a) + (d2) + (d3), (a) + (d2) + (d4), (a) + (d3) + (d4) oder (a) + (d1) + (d2) +(d3).

Dabei sind auch solche Kombinationen erfindungsgemäß, denen noch ein oder mehrere weitere von Herbiziden verschiedene agrochemische Wirkstoffe wie Safener (z.B. Mefenpyr-diethyl, Isoxadifen-ethyl, Cloquintocet-mexyl, 1,8-Naphthalsäureanhydrid, Dichlormid, Benoxacor, Fenclorim, Furilazole oder N-Cyclopropyl-4-[(2-methoxybenzoyl)sulfamoyl]benzamid (siehe WO 99/16744), Insektizide oder Fungizide enthalten sind wie (a) + (d1) + (c), (a) + (d2) + (c) oder (a) + (d3) + (c), (a) + (d4) + (c), (a) + (d1) + (d2) + (c), (a) + (d1) + (d3) + (c), (a) + (d1) + (d4) + (c), (a) + (d2) + (d3) + (c), (a) + (d2) + (d4) + (c), (a) + (d3) + (d4) + (c) oder (a) + (d1) + (d2) +(d3) + (c).

Für Kombinationen mit drei oder mehr Wirkstoffen gelten die nachstehend insbesondere für erfindungsgemäße Zweierkombinationen erläuterten bevorzugten Bedingungen in erster Linie ebenfalls, sofern darin die erfindungsgemäßen Zweierkombinationen enthalten sind und bezüglich der betreffenden Zweierkombination.

Die Aufwandmengen der Herbizide (d) können von Herbizid zu Herbizid stark variieren. Als Richtgröße für bevorzugte Aufwandmengen für einige Mischungspartner aus der Gruppe (d) können folgende Angaben [in g AS (Aktivsubstanz)/ha (Hektar)] gelten, wobei in den erfindungsgemäßen Kombinationen auch Mengen unterhalb der niedrigsten Menge sinnvoll sein können:
Herbizide der Gruppe (d1): 10 - 8000, vorzugsweise 50 - 5000 g AS/ha,
Herbizide der Gruppe (d2): 5 - 5000, vorzugsweise 2 - 2500 g AS/ha,
Herbizide der Gruppe (d3): 10 - 500, vorzugsweise 25 - 300 g AS/ha,
Herbizide der Gruppe (d4): 20 - 5000, vorzugsweise 100 - 2000 g AS/ha.

Bereiche für geeignete Mengenverhältnisse der Verbindungen (a) und (d) ergeben sich z.B. aus den genannten Aufwandmengen für die Einzelstoffe. In den erfindungsgemäßen Kombinationen können die Aufwandmengen in der Regel reduziert werden. Bevorzugte Mischungsverhältnisse (a):(d), für die erfindungsgemäßen Kombinationen sind im folgenden aufgeführt:
(a): (d1) = 10 : 1 bis 1 : 800.000, vorzugsweise 6 : 1 bis 1 : 5.000,
(a) : (d2) = 200 : 1 bis 1 : 500.000, vorzugsweise 5 : 1 bis 1 : 5.000,
(a) : (d3) = 10 : 1 bis 1 : 500.000, vorzugsweise 5 : 1 bis 1 : 5.000,
(a) : (d4) = 5 : 1 bis 1 : 500.000, vorzugsweise 1 : 10 bis 1 : 5.000.

Soweit in den erfindungsgemäßen herbiziden Mitteln agrochemische Wirkstoffe d) enthalten sind, beträgt deren Gewichtsanteil im allgemeinen 0,5 bis 50 Gew.-%, insbesondere 3 bis 20 Gew.-%.

Der in den erfindungsgemäßen herbiziden Mitteln enthaltene Gesamtwirkstoffgehalt (Summe der Komponenten a) + c) + d)) beträgt im allgemeinen 1 bis 95 Gew.%, insbesondere 2 bis 60 Gew.%.

In den erfindungsgemäßen herbiziden Mitteln können optional Sulfosuccinate (Komponente e) enthalten sein z.B. Mono- oder Diester der Sulfobernsteinsäure sein, vorzugsweise solche der allgemeinen Formel (11)

R¹-(X₁)ₙ-O-CO-CH₂-CH(SO₃M)-CO-O-(X₂)ₘ-R² (II)

, worin
- R¹: H oder ein unsubstituierter oder substituierter C₁-C₃₀-Kohlenwasserstoffrest wie C₁-C₃₀-Alkyl oder C₇-C₃₀-Alkylaryl bedeutet,
- R²: H oder ein unsubstituierter oder substituierter C₁-C₃₀-Kohlenwasserstoffrest wie C₁-C₃₀-Alkyl oder C₇-C₃₀-Alkylaryl bedeutet, oder ein Kation ist, z.B. ein Metallkation wie ein Alkali- oder Erdalkalimetallkation, oder ein Ammoniumkation wie NH₄, Alkyl-, Alkylaryl- oder Poly(arylalkyl)phenylammoniumkation,
- X¹, X²: unabhängig voneinander gleich oder verschieden eine Spacereinheit wie eine Polyethereinheit oder eine Polyestereinheit bedeuten,
- n,m: unabhängig voneinander gleich oder verschieden Null oder 1 sind, vorzugsweise Null sind, und
- M: ein Kation ist, z.B. ein Metallkation wie ein Alkali- oder Erdalkalimetallkation, oder ein Ammoniumkation wie NH₄, Alkyl-, Alkylaryl- oder Poly(arylalkyl)phenyl-ammoniumkation.

Bevorzugt sind Sulfosuccinate der Formel (II), worin R¹ und R² unabhängig voneinander gleich oder verschieden lineare, verzweigte oder cyclische, gesättigte oder ungesättigte C₁-C₂₀- vorzugsweise C₄-C₁₈-Alkylreste sind, wie Methyl-, Ethyl-, Butyl-, Hexyl-, Cyclohexyl-, Octyl wie 2-Ethylhexyl-, Decyl-, Tridecyl- oder Octadecyl-Reste, oder R¹ und R² sind C₇-C₂₀-Alkylarylreste, wie Nonylphenyl, 2,4,6-Tri-secbutylphenyl, 2,4,6-Tris-(1-phenylethyl)-phenyl, Alkylbenzyl oder ein Hydrozimtrest, X₁ und X₂ unabhängig voneinander gleich oder verschieden Polyethereinheiten sind, wie Polyethylenglykole -(C₂H₄O)p- oder Polypropylenglykole -(C₃H₆O)ₚ- mit p=1 bis p=20, insbesondere p=1 bis p=12, oder Polyestereinheiten sind, wie Polyhydroxybuttersäure -(CH[CH₃]-CH₂-COO)_{q}- oder Polymilchsäure -(CH[CH₃]-COO)q- mit q=1 bis q=15, insbesondere q=1 bis q=8,
n, m unabhängig voneinander gleich oder verschieden Null oder 1 sind, vorzugsweise Null sind, und M ein Kation ist, z.B. ein Metallkation, wie Alkali- oder Erdalkalimetallkation, oder ein Ammoniumkation, welches alkyl-substituiert sein kann.

Erfindungsgemäß enthaltene Sulfosuccinate sind, beispielsweise
a1) ein- oder zweifach mit linearen, cyclischen oder verzweigten aliphatischen, cycloaliphatischen und/oder aromatischen Alkoholen verestertes Sulfosuccinat, beispielsweise mit 1 bis 22 C-Atomen im Alkylrest, vorzugsweise ein- oder zweifach mit Methanol, Ethanol, (Iso)propanol, (Iso)butanol, (lso)pentanol, (Iso)hexanol, Cyclohexanol, (lso)heptanol, (Iso)octanol (insbesondere: Ethylhexanol), (Iso)nonanol, (Iso)decanol, (Iso)undecanol, (Iso)dodecanol oder (Iso)tridecanol verestertes Mono- oder Dialkalisulfosuccinat, insbesondere Mono- oder Dinatriumsulfosuccinat,
a2) ein- oder zweifach mit (Poly) Alkylenoxidaddukten von Alkoholen verestertes Sulfosuccinat, beispielsweise mit 1 bis 22 C-Atomen im Alkylrest und 1 bis 200, vorzugsweise 2 bis 200 Alkylenoxideinheiten im (Poly) Alkylenoxidanteil, vorzugsweise ein- oder zweifach mit Dodecyl/Tetradecyl-Alkohol +2-5 mol Ethylenoxid oder mit i-Tridecyl+3mol Ethylenoxid verestertes Mono- oder Dialkalisulfosuccinat, insbesondere Mono- oder Dinatriumsulfosuccinat,
a3) das Dialkali, vorzugsweise das Dinatriumsalz von einfach mit Aminen oder aminoterminierten (Poly) Alkylenoxidaddukten von Alkoholen, Aminen, Fettsäuren, Estern oder Amiden umgesetztem und nachfolgend sulfoniertem Maleinsäureanhydrid, beispielsweise mit 1 bis 22 C-Atomen im Alkylrest und 1 bis 200, vorzugsweise 2 bis 200 Alkylenoxy-Einheiten im (Poly) Alkylenoxidteil, vorzugsweise das Dinatriumsalz von einfach mit Kokosfettamin umgesetztem und nachfolgend sulfoniertem Maleinsäureanhydrid,
a4) das Dialkali, vorzugsweise das Dinatriumsalz von einfach mit Amiden oder (Poly) Alkylenoxidaddukten von Amiden umgesetztem und nachfolgend sulfoniertem Maleinsäureanhydrid, beispielsweise mit 1 bis 22 C-Atomen im Alkylrest und 1 bis 200, vorzugsweise 2 bis 200 Alykylenoxy-Einheiten im (Poly) Alkylenoxidteil, vorzugsweise das Dinatriumsalz von einfach mit Oleylamid+2 mol Ethylenoxid umgesetztem und nachfolgend sulfoniertem Maleinsäureanhydrid und/oder
a5) das Tetraalkali, vorzugsweise das Tetranatriumsalz von N-(1,2-dicarboxyethyl-)-N-Octadecylsulfo-succinamat.

Beispiele kommerziell erhältlicher und im Rahmen der vorliegenden Erfindung bevorzugter Sulfosuccinate der Gruppen a1) bis a5) sind nachfolgend aufgeführt:
a1) Natrium-Dialkylsulfosuccinat, z.B. Natrium-Di(C₄-C₁₈)alkylsulfosuccinat wie Natrium-Diisooctylsulfosuccinat, vorzugsweise Natrium-Di(2-ethylhexyl)sulfosuccinat, kommerziell beispielsweise in Form der Aerosol®-Marken (Cytec), der Agrilan®- oder Lankropol®-Marken (Akzo Nobel), der Empimin®-Marken (Albright&Wilson), der Cropol®-Marken (Croda), der Lutensit®-Marken (BASF) der Triton®-Marken (Union Carbide), der Geropon®-Marken (Rhodia) oder der lmbirol®-, Madeol®- oder Polirol®-Marken (Cesalpinia) erhältlich,
a2) Natrium- Alkoholpolyethylenglykolethersulfosuccinat, kommerziell beispielsweise in Form von Geropon® ACR-Marken (Rhodia) erhältlich,
a3) Dinatrium-Alkoholpolyethylenglykolethersemisulfosuccinat, kommerziell beispielsweise in Form der Aerosol®-Marken (Cytec), der Marlinat®- oder Sermul®-Marken (Condea), der Empicol®-Marken (Albright&Wilson), der Secosol®-Marken (Stepan), der Geropon®-Marken (Rhodia), der Disponil®- oder Texapon®-Marken (Cognis) oder der Rolpon®-Marken (Cesalpinia) erhältlich,
a4) Dinatrium-N-Alkylsulfosuccinamat, kommerziell beispielsweise in Form der Aerosol®-Marken (Cytec), der Rewopol®- oder Rewoderm®-Marken (Rewo), der Empimin®-Marken (Albright&Wilson), der Geropon®-Marken (Rhodia) oder der Polirol®-Marken (Cesalpinia) erhältlich,
a5) Dinatrium-Fettsäureamidpolyethylenglykolethersemisulfosuccinat, kommerziell beispielsweise in Form der Elfanol®- oder Lankropol®-Marken (Akzo Nobel), der Rewoderm®-, Rewocid®- oder Rewopol®-Marken (Rewo), der Emcol®-Marken (Witco), der Standapol®-Marken (Cognis) oder der Rolpon®-Marken (Cesalpinia) erhältlich, und
a6) Tetranatrium-N-(1,2-dicarboxyethyl)-N-Octadecyl-sulfosuccinamat, kommerziell beispielsweise in Form von Aerosol 22®- (Cytec) erhältlich.

Kommerziell sind Sulfosuccinate zum Beispiel als Aerosol®- (Cytec), Agrilan®- oder Lankropol®- (Akzo Nobel), Empimin®- (Huntsman), Cropol®- (Croda), Lutensit®-(BASF), Triton®GR-Reihe (UnionCarbide), Imbirol®-/Madeol®-/Polirol®- (Cesalpinia); Geropon®AR-Reihe oder Geropon®SDS (Rhodia) erhältlich.

Bevorzugte Sulfosuccinate sind z.B. die Natrium-, Kalium- und Ammoniumsalze von Bis(alkyl)sulfosuccinaten, wobei die Alkylreste gleich oder verschieden 4 bis 16 Kohlenstoffatome enthalten, und bevorzugt Butyl-, Hexyl-, Octyl- wie 2-Ethylhexyl- oder Decyl-Reste sind, die linear oder verzweigt sein können. Besonders bevorzugt ist Di(2-Ethylhexyl)sulfosuccinat Natrium.

Soweit in den erfindungsgemäßen herbiziden Mitteln Sulfosuccinate e) enthalten sind, beträgt deren Gewichtsanteil im allgemeinen 0,5 bis 60 Gew.%, insbesondere 1 bis 30 Gew.%.

Weiterhin können optional übliche Zusatzstoffe (Komponente f) in den erfindungsgemäßen herbiziden Mitteln enthalten sein, z.B. Verdickungs- und Thixotropiermittel, Anti-Drift-, Haft-, Penetrations-, Konservierungs- und Frostschutzmittel, Antioxidantien, Lösungsvermittler, Füll-, Träger- und Farbstoffe, Entschäumer, Verdunstungshemmer, sowie den pH-Wert und die Viskosität beeinflussende Mittel.

Als Verdickungs- und Thixotropiermittel kommen z.B. in Frage:
1) modifizierte natürliche Silikate, wie chemisch modifizierte Bentonite, Hectorite, Attapulgite, Montmorillonite, Smektite oder andere Silikatmineralien, wie Bentone® (Elementis), Attagel® (Engelhard), Agsorb® (Oil-Dri Corporation) oder Hectorite® (Akzo Nobel)
2) synthetische Silikate, wie Silikate der Sipernat®-, Aerosil®- oder Durosil®-Reihe (Degussa), der CAB-O-SIL®-Reihe (Cabot) oder der Van Gel-Reihe (R.T. Vanderbilt),
3) Verdicker auf Basis synthetischer Polymere, wie Verdicker der Thixin®- oder Thixatrol®-Reihe (Elementis).
4) Verdicker auf Basis natürlicher Polymere und natürlicher Öle, z.B. aus der Thixin®- oder Thixatrol®-Reihe (Elementis).

Bevorzugte Verdickungs- und Thixotropiermittel sind z.B. modifizierte Schichtsilikate und Verdicker auf Basis synthetischer Polymere.

Soweit in den erfindungsgemäßen herbiziden Mitteln Verdickungs- und Thixotropiermittel enthalten sind, beträgt deren Gewichtsanteil im allgemeinen 0,1 bis 5 Gew.%, insbesondere 0,2 bis 3 Gew.%.

Bevorzugt sind erfindungsgemäße herbizide Mittel, enthaltend:
a) 0,1 bis 95 Gew.-%, vorzugsweise 5 bis 50 Gew.-% eines oder mehrerer herbizider Wirkstoffe aus der Gruppe der Dioxazin-Pyridylsulfonylharnstoffe, insbesondere solche der Formel (I) und/oder deren Salze,
b) 5 bis 99,9 Gew.-%, vorzugsweise 50 bis 95 Gew.-% eines oder mehrerer Hilfsstoffe aus der Gruppe der Fettsäureester, Dünger und Tenside,
c) optional 0,1 bis 60 Gew.-%, vorzugsweise 2 bis 40 Gew.-% eines oder mehrerer Safener,
d) optional 0,5 bis 50 Gew.-%, vorzugsweise 3 bis 20 Gew.-% eines oder mehrerer von a) und c) verschiedener agrochemischer Wirkstoffe,
e) optional 0,5 bis 60 Gew.-%, vorzugsweise 1 bis 30 Gew.-% eines oder mehrerer Sulfosuccinate,
f) optional übliche Zusatzstoffe, insbesondere 0,1 bis 5 Gew.-%, vorzugsweise 0,2 bis 3 Gew.-% eines oder mehrerer Verdickungs- und Thixotriopiermittel.

In einer bevorzugten Ausführungsform enthält das erfindungsgemäße herbizide Mittel
a) ein oder mehrere herbizide Wirkstoffe der Formel (I) und/oder deren Salze, vorzugsweise I-1 bis I-145,
b) ein oder mehrere Hilfsstoffe aus der Gruppe der Pflanzenöle (vorzugsweise Rapsölmethylester), Ammoniumsalze (vorzugsweise Ammoniumsulfate wie Diammoniumsulfat und Ammoniumnitrat) und Tenside (vorzugsweise polyethoxylierte Alkohole, polyethoxylierte Triglyceride die Fettsäurereste enthalten, Polyethylenoxid-Polypropylenoxid-Blockcopolymere, Alkylsulfonsäuren und deren Salze, Alkyloxylsulfonsäuren und deren Salze sowie Polyelektrolyte).

Als besonders bevorzugte Beispiele seien erfindungsgemäße herbizide Mittel genannt, welche die nachfolgend genannten Komponenten enthalten, ohne dass dadurch eine Einschränkung erfolgen soll. Dabei bedeutet Hasten = Hasten®, Rako-Binol = Rako-Binol®, Edenor = Edenor®MESU, Actirob = Actirob®B und Mero = Mero®.
Hasten + I-1, Rako-Binol + I-1, Edenor + I-1, Actirob B + I-1, Mero + I-1, Hasten + I-2, Rako-Binol + I-2, Edenor + I-2, Actirob B + I-2, Mero 1-2, Hasten + I-3, Rako-Binol + I-3, Edenor + I-3, Actirob B + I-3, Mero + I-3, Hasten + I-4, Rako-Binol + I-4, Edenor + I-4, Actirob B + I-4, Mero + I-4, Hasten + I-5, Rako-Binol + I-5, Edenor + I-5, Actirob B + I-5, Mero + I-5, Hasten + I-6, Rako-Binol + I-6, Edenor + I-6, Actirob B + I-6, Mero + I-6, Hasten + I-7, Rako-Binol + I-7, Edenor + I-7, Actirob B + I-7, Mero + I-7, Hasten + I-8, Rako-Binol + I-8, Edenor + I-8, Actirob B + I-8, Mero + I-8, Hasten + I-9, Rako-Binol + I-9, Edenor + I-9, Actirob B + I-9, Mero + I-9, Hasten + I-10, Rako-Binol + I-10, Edenor + I-10, Actirob B + I-10, Mero + I-10, Hasten + I-11, Rako-Binol + I-11, Edenor + I-11, Actirob B + I-11, Mero + I-11, Hasten + I-12, Rako-Binol + I-12, Edenor + I-12, Actirob B + I-12, Mero + I-12, Hasten + I-13, Rako-Binol + I-13, Edenor + I-13, Actirob B + I-13, Mero + I-13, Hasten + I-14, Rako-Binol + I-14, Edenor + I-14, Actirob B + I-14, Mero + I-14, Hasten + I-15, Rako-Binol + I-15, Edenor + I-15, Actirob B + I-15, Mero + I-15, Hasten + I-16, Rako-Binol + I-16, Edenor + I-16, Actirob B + I-16, Mero + I-16, Hasten + I-17, Rako-Binol + I-17, Edenor + I-17, Actirob B + I-17, Mero + I-17, Hasten + I-18, Rako-Binol + I-18, Edenor + I-18, Actirob B + I-18, Mero + I-18, Hasten + I-19, Rako-Binol + I-19, Edenor + I-19, Actirob B + I-19, Mero + I-19, Hasten + I-20, Rako-Binol + I-20, Edenor + I-20, Actirob B + I-20, Mero + I-20, Hasten + I-21, Rako-Binol + I-21, Edenor + I-21, Actirob B + I-21, Mero + I-21, Hasten + I-22, Rako-Binol + I-22, Edenor + I-22, Actirob B + I-22, Mero + I-22, Hasten + I-23, Rako-Binol + I-23, Edenor + I-23, Actirob B + I-23, Mero + I-23, Hasten + I-24, Rako-Binol + I-24, Edenor + I-24, Actirob B + I-24, Mero + I-24, Hasten + I-25, Rako-Binol + I-25, Edenor + I-25, Actirob B + I-25, Mero + I-25, Hasten + I-26, Rako-Binol + I-26, Edenor + I-26, Actirob B + I-26, Mero + I-26, Hasten + I-27, Rako-Binol + I-27, Edenor + I-27, Actirob B + I-27, Mero + I-27, Hasten + I-28, Rako-Binol + I-28, Edenor + I-28, Actirob B + I-28, Mero + I-28, Hasten + I-29, Rako-Binol + I-29, Edenor + I-29, Actirob B + I-29, Mero + I-29, Hasten + I-30, Rako-Binol + I-30, Edenor + I-30, Actirob B + I-30, Mero + I-30, Hasten + I-31, Rako-Binol + I-31, Edenor + I-31, Actirob B + I-31, Mero + I-31, Hasten + I-32, Rako-Binol + I-32, Edenor + I-32, Actirob B + I-32, Mero + I-32, Hasten + I-33, Rako-Binol + I-33, Edenor + I-33, Actirob B + I-33, Mero + I-33, Hasten + I-34, Rako-Binol + I-34, Edenor + I-34, Actirob B + I-34, Mero + I-34, Hasten + I-35, Rako-Binol + I-35, Edenor + I-35, Actirob B + I-35, Mero + I-35, Hasten + I-36, Rako-Binol + I-36, Edenor + I-36, Actirob B + I-36, Mero + I-36, Hasten + I-37, Rako-Binol + I-37, Edenor + I-37, Actirob B + I-37, Mero + I-37, Hasten + I-38, Rako-Binol + I-38, Edenor + I-38, Actirob B + I-38, Mero + I-38, Hasten + I-39, Rako-Binol + I-39, Edenor + I-39, Actirob B + I-39, Mero + I-39, Hasten + I-40, Rako-Binol + I-40, Edenor + I-40, Actirob B + I-40, Mero + I-40, Hasten + I-41, Rako-Binol + I-41, Edenor + I-41, Actirob B + I-41, Mero + I-41, Hasten + I-42, Rako-Binol + I-42, Edenor + I-42, Actirob B + I-42, Mero + I-42, Hasten + I-43, Rako-Binol + I-43, Edenor + I-43, Actirob B + I-43, Mero + I-43, Hasten + I-44, Rako-Binol + I-44, Edenor + I-44, Actirob B + I-44, Mero + I-44, Hasten + I-45, Rako-Binol + I-45, Edenor + I-45, Actirob B + I-45, Mero + I-45, Hasten + I-46, Rako-Binol + I-46, Edenor + I-46, Actirob B + I-46, Mero + I-46, Hasten + I-47, Rako-Binol + I-47, Edenor + I-47, Actirob B + I-47, Mero + I-47, Hasten + I-48, Rako-Binol + I-48, Edenor + I-48, Actirob B + I-48, Mero + I-48, Hasten + I-49, Rako-Binol + I-49, Edenor + I-49, Actirob B + I-49, Mero + I-49, Hasten + I-50, Rako-Binol + I-50, Edenor + I-50, Actirob B + I-50, Mero + I-50, Hasten + I-51, Rako-Binol + I-51, Edenor + I-51, Actirob B + I-51, Mero + I-51, Hasten + I-52, Rako-Binol + I-52, Edenor + I-52, Actirob B + I-52, Mero + I-52, Hasten + I-53, Rako-Binol + I-53, Edenor + I-53, Actirob B + I-53, Mero + I-53, Hasten + I-54, Rako-Binol + I-54, Edenor + I-54, Actirob B + I-54, Mero + I-54, Hasten + I-55, Rako-Binol + I-55, Edenor + I-55, Actirob B + I-55, Mero + I-55, Hasten + I-56, Rako-Binol + I-56, Edenor + I-56, Actirob B + I-56, Mero + I-56, Hasten + I-57, Rako-Binol + I-57, Edenor + I-57, Actirob B + I-57, Mero + I-57, Hasten + I-58, Rako-Binol + I-58, Edenor + I-58, Actirob B + I-58, Mero + I-58, Hasten + I-59, Rako-Binol + I-59, Edenor + I-59, Actirob B + I-59, Mero + I-59, Hasten + I-60, Rako-Binol + I-60, Edenor + I-60, Actirob B + I-60, Mero + I-60, Hasten + I-61, Rako-Binol + I-61, Edenor + I-61, Actirob B + I-61, Mero + I-61, Hasten + I-62, Rako-Binol + I-62, Edenor + I-62, Actirob B + I-62, Mero + I-62, Hasten + I-63, Rako-Binol + I-63, Edenor + I-63, Actirob B + I-63, Mero + I-63, Hasten + I-64, Rako-Binol + I-64, Edenor + I-64, Actirob B + I-64, Mero + I-64, Hasten + I-65, Rako-Binol + I-65, Edenor + I-65, Actirob B + I-65, Mero + I-65, Hasten + I-66, Rako-Binol + I-66, Edenor + I-66, Actirob B + I-66, Mero + I-66, Hasten + I-67, Rako-Binol + I-67, Edenor + I-67, Actirob B + I-67, Mero + I-67, Hasten + I-68, Rako-Binol + I-68, Edenor + I-68, Actirob B + I-68, Mero + I-68, Hasten + I-69, Rako-Binol + I-69, Edenor + I-69, Actirob B + I-69, Mero + I-69, Hasten + I-70, Rako-Binol + I-70, Edenor + I-70, Actirob B + I-70, Mero + I-70, Hasten + I-71, Rako-Binol + I-71, Edenor + I-71, Actirob B + I-71, Mero + I-71, Hasten + I-72, Rako-Binol + I-72, Edenor + I-72, Actirob B + I-72, Mero + I-72, Hasten + I-73, Rako-Binol + I-73, Edenor + I-73, Actirob B + I-73, Mero + I-73, Hasten + I-74, Rako-Binol + I-74, Edenor + I-74, Actirob B + I-74, Mero + I-74, Hasten + I-75, Rako-Binol + I-75, Edenor + I-75, Actirob B + I-75, Mero + I-75, Hasten + I-76, Rako-Binol + I-76, Edenor + I-76, Actirob B + I-76, Mero + I-76, Hasten + I-77, Rako-Binol + I-77, Edenor + I-77, Actirob B + I-77, Mero + I-77, Hasten + I-78, Rako-Binol + I-78, Edenor + I-78, Actirob B + I-78, Mero + I-78, Hasten + I-79, Rako-Binol + I-79, Edenor + I-79, Actirob B + I-79, Mero + I-79, Hasten + I-80, Rako-Binol + I-80, Edenor + I-80, Actirob B + I-80, Mero + I-80, Hasten + I-81, Rako-Binol + I-81, Edenor + I-81, Actirob B + I-81, Mero + I-81, Hasten + I-82, Rako-Binol + I-82, Edenor + I-82, Actirob B + I-82, Mero + I-82, Hasten + I-83, Rako-Binol + I-83, Edenor + I-83, Actirob B + I-83, Mero + I-83, Hasten + I-84, Rako-Binol + I-84, Edenor + I-84, Actirob B + I-84, Mero + I-84, Hasten + I-85, Rako-Binol + I-85, Edenor + I-85, Actirob B + I-85, Mero + I-85, Hasten + I-86, Rako-Binol + I-86, Edenor + I-86, Actirob B + I-86, Mero + I-86, Hasten + I-87, Rako-Binol + I-87, Edenor + I-87, Actirob B + I-87, Mero + I-87, Hasten + I-88, Rako-Binol + I-88, Edenor + I-88, Actirob B + I-88, Mero + I-88, Hasten + I-89, Rako-Binol + I-89, Edenor + I-89, Actirob B + I-89, Mero + I-89, Hasten + I-90, Rako-Binol + I-90, Edenor + I-90, Actirob B + I-90, Mero + I-90, Hasten + I-91, Rako-Binol + I-91, Edenor + I-91, Actirob B + I-91, Mero + I-91, Hasten + I-92, Rako-Binol + I-92, Edenor + I-92, Actirob B + I-92, Mero + I-92, Hasten + I-93, Rako-Binol + I-93, Edenor + I-93, Actirob B + I-93, Mero + I-93, Hasten + I-94, Rako-Binol + I-94, Edenor + I-94, Actirob B + I-94, Mero + I-94, Hasten + I-95, Rako-Binol + I-95, Edenor + I-95, Actirob B + I-95, Mero + I-95, Hasten + I-96, Rako-Binol + I-96, Edenor + I-96, Actirob B + I-96, Mero + I-96, Hasten + I-97, Rako-Binol + I-97, Edenor + I-97, Actirob B + I-97, Mero + I-97, Hasten + I-98, Rako-Binol + I-98, Edenor + I-98, Actirob B + I-98, Mero + I-98, Hasten + I-99, Rako-Binol + I-99, Edenor + I-99, Actirob B + I-99, Mero + I-99, Hasten + I-100, Rako-Binol + I-100, Edenor + I-100, Actirob B + I-100, Mero + I-100, Hasten + I-101, Rako-Binol + I-101, Edenor + I-101, Actirob B + I-101, Mero + I-101, Hasten + I-102, Rako-Binol + I-102, Edenor + I-102, Actirob B + I-102, Mero + I-102, Hasten + I-103, Rako-Binol + I-103, Edenor + I-103, Actirob B + I-103, Mero + I-103, Hasten + I-104, Rako-Binol + I-104, Edenor + I-104, Actirob B + I-104, Mero + I-104, Hasten + I-105, Rako-Binol + I-105, Edenor + I-105, Actirob B + I-105, Mero + I- 105, Hasten + I-106, Rako-Binol + I-106, Edenor + I-106, Actirob B + I-106, Mero + I-106, Hasten + I-107, Rako-Binol + I-107, Edenor + I-107, Actirob B + I-107, Mero + I-107, Hasten + I-108, Rako-Binol + I-108, Edenor + I-108, Actirob B + I-108, Mero + I-108, Hasten + I-109, Rako-Binol + I-109, Edenor + I-109, Actirob B + I-109, Mero + I-109, Hasten + I-110, Rako-Binol + I-110, Edenor + I-110, Actirob B + I-110, Mero + I-110, Hasten + I-111, Rako-Binol + I-111, Edenor + I-111, Actirob B + I-111, Mero + I-111, Hasten + I-112, Rako-Binol + I-112, Edenor + I-112, Actirob B + I-112, Mero + I-112, Hasten + I-113, Rako-Binol + I-113, Edenor + I-113, Actirob B + I-113, Mero + I-113, Hasten + I-114, Rako-Binol + I-114, Edenor + I-114, Actirob B + I-114, Mero + I-114, Hasten + I-115, Rako-Binol + I-115, Edenor + I-115, Actirob B + I-115, Mero + I-115, Hasten + I-116, Rako-Binol + I-116, Edenor + I-116, Actirob B + I-116, Mero + I-116, Hasten + I-117, Rako-Binol + I-117, Edenor + I-117, Actirob B + I-117, Mero + I-117, Hasten + I-118, Rako-Binol + I-118, Edenor + I-118, Actirob B + I-118, Mero + I-118, Hasten + I-119, Rako-Binol + I-119, Edenor + I-119, Actirob B + I-119, Mero + I-119, Hasten + I-120, Rako-Binol + I-120, Edenor + I-120, Actirob B + I-120, Mero + I-120, Hasten + I-121, Rako-Binol + I-121, Edenor + I-121, Actirob B + I-121, Mero + I-121, Hasten + I-122, Rako-Binol + I-122, Edenor + I-122, Actirob B + I-122, Mero + I-122, Hasten + I-123, Rako-Binol + I-123, Edenor + I-123, Actirob B + I-123, Mero + I-123, Hasten + I-124, Rako-Binol + I-124, Edenor + I-124, Actirob B + I-124, Mero + I-124, Hasten + I-125, Rako-Binol + I-125, Edenor + I-125, Actirob B + I-125, Mero + I-125, Hasten + I-126, Rako-Binol + I-126, Edenor + I-126, Actirob B + I-126, Mero + I-126, Hasten + I-127, Rako-Binol + I-127, Edenor + I-127, Actirob B + I-127, Mero + I-127, Hasten + I-128, Rako-Binol + I-128, Edenor + I-128, Actirob B + I-128, Mero + I-128, Hasten + I-129, Rako-Binol + I-129, Edenor + I-129, Actirob B + I-129, Mero + I-129, Hasten + I-130, Rako-Binol + I-130, Edenor + I-130, Actirob B + I-130, Mero + I-130, Hasten + I-131, Rako-Binol + I-131, Edenor + I-131, Actirob B + I-131, Mero + I-131, Hasten + I-132, Rako-Binol + I-132, Edenor + I-132, Actirob B + I-132, Mero + I-132, Hasten + I-133, Rako-Binol + I-133, Edenor + I-133, Actirob B + I-133, Mero + I-133, Hasten + I-134, Rako-Binol + I-134, Edenor + I-134, Actirob B + I-134, Mero + I-134, Hasten + I-135, Rako-Binol + I-135, Edenor + I-135, Actirob B + I-135, Mero + I-135, Hasten + I-136, Rako-Binol + I-136, Edenor + I-136, Actirob B + I-136, Mero + I-136, Hasten + I-137, Rako-Binol + I-137, Edenor + I-137, Actirob B + I-137, Mero + I-137, Hasten + I-138, Rako-Binol + I-138, Edenor + I-138, Actirob B + I-138, Mero + I-138, Hasten + I-139, Rako-Binol + I-139, Edenor + I-139, Actirob B + I-139, Mero + I-139, Hasten + I-140, Rako-Binol + I-140, Edenor + I-140, Actirob B + I-140, Mero + I-140, Hasten + I-141, Rako-Binol + I-141, Edenor+ I-141, Actirob B + I-141, Mero + I-141, Hasten + I-142, Rako-Binol + I-142, Edenor + I-142, Actirob B + I-142, Mero + I-142, Hasten + I-143, Rako-Binol + I-143, Edenor + I-143, Actirob B + I-143, Mero + I-143, Hasten + I-144, Rako-Binol + I-144, Edenor + I-144, Actirob B + I-144, Mero + I-144, Hasten + I-145, Rako-Binol + I-145, Edenor + I-145, Actirob B + I-145, Mero + I-145.
Hasten + Diammoniumsulfat + I-1, Rako-Binol + Diammoniumsulfat + I-1, Edenor + Diammoniumsulfat + I-1, Actirob B + Diammoniumsulfat + I-1, Mero + Diammoniumsulfat + I-1,
Hasten + Diammoniumsulfat + I-2, Rako-Binol + Diammoniumsulfat + I-2, Edenor + Diammoniumsulfat + I-2, Actirob B + Diammoniumsulfat + I-2, Mero + Diammoniumsulfat 1-2,
Hasten + Diammoniumsulfat + I-3, Rako-Binol + Diammoniumsulfat + I-3, Edenor + Diammoniumsulfat + I-3, Actirob B + Diammoniumsulfat + I-3, Mero + Diammoniumsulfat + I-3,
Hasten + Diammoniumsulfat + I-4, Rako-Binol + Diammoniumsulfat + I-4, Edenor + Diammoniumsulfat + I-4, Actirob B + Diammoniumsulfat + I-4, Mero + Diammoniumsulfat + I-4,
Hasten + Diammoniumsulfat + I-5, Rako-Binol + Diammoniumsulfat + I-5, Edenor + Diammoniumsulfat + I-5, Actirob B + Diammoniumsulfat + I-5, Mero + Diammoniumsulfat + I-5,
Hasten + Diammoniumsulfat + I-6, Rako-Binol + Diammoniumsulfat + I-6, Edenor + Diammoniumsulfat + I-6, Actirob B + Diammoniumsulfat + I-6, Mero + Diammoniumsulfat + I-6,
Hasten + Diammoniumsulfat + I-7, Rako-Binol + Diammoniumsulfat + I-7, Edenor + Diammoniumsulfat + I-7, Actirob B + Diammoniumsulfat + I-7, Mero + Diammoniumsulfat + I-7,
Hasten + Diammoniumsulfat + I-8, Rako-Binol + Diammoniumsulfat + I-8, Edenor + Diammoniumsulfat + I-8, Actirob B + Diammoniumsulfat + I-8, Mero + Diammoniumsulfat + I-8,
Hasten + Diammoniumsulfat + I-9, Rako-Binol + Diammoniumsulfat + I-9, Edenor + Diammoniumsulfat + I-9, Actirob B + Diammoniumsulfat + I-9, Mero + Diammoniumsulfat + I-9,
Hasten + Diammoniumsulfat + I-10, Rako-Binol + Diammoniumsulfat + I-10, Edenor + Diammoniumsulfat + I-10, Actirob B + Diammoniumsulfat + I-10, Mero + Diammoniumsulfat + I-10, Hasten + Diammoniumsulfat + I-11, Rako-Binol + Diammoniumsulfat + I-11, Edenor + Diammoniumsulfat + I-11, Actirob B + Diammoniumsulfat + I-11, Mero + Diammoniumsulfat + I-11, Hasten + Diammoniumsulfat + I-12, Rako-Binol + Diammoniumsulfat + I-12, Edenor + Diammoniumsulfat + I-12, Actirob B + Diammoniumsulfat + I-12, Mero + Diammoniumsulfat + I-12, Hasten + Diammoniumsulfat + I-13, Rako-Binol + Diammoniumsulfat + I-13, Edenor + Diammoniumsulfat + I-13, Actirob B + Diammoniumsulfat + I-13, Mero + Diammoniumsulfat + I-13, Hasten + Diammoniumsulfat + I-14, Rako-Binol + Diammoniumsulfat + I-14, Edenor + Diammoniumsulfat + I-14, Actirob B + Diammoniumsulfat + I-14, Mero + Diammoniumsulfat + I-14, Hasten + Diammoniumsulfat + I-15, Rako-Binol + Diammoniumsulfat + I-15, Edenor + Diammoniumsulfat + I-15, Actirob B + Diammoniumsulfat + I-15, Mero + Diammoniumsulfat + I-15, Hasten + Diammoniumsulfat + I-16, Rako-Binol + Diammoniumsulfat + I-16, Edenor + Diammoniumsulfat + I-16, Actirob B + Diammoniumsulfat + I-16, Mero + Diammoniumsulfat + I-16, Hasten + Diammoniumsulfat + I-17, Rako-Binol + Diammoniumsulfat + I-17, Edenor + Diammoniumsulfat + I-17, Actirob B + Diammoniumsulfat + I-17, Mero + Diammoniumsulfat + I-17, Hasten + Diammoniumsulfat + I-18, Rako-Binol + Diammoniumsulfat + I-18, Edenor + Diammoniumsulfat + I-18, Actirob B + Diammoniumsulfat + I-18, Mero + Diammoniumsulfat + I-18, Hasten + Diammoniumsulfat + I-19, Rako-Binol + Diammoniumsulfat + I-19, Edenor + Diammoniumsulfat + I-19, Actirob B + Diammoniumsulfat + I-19, Mero + Diammoniumsulfat + I-19, Hasten + Diammoniumsulfat + I-20, Rako-Binol + Diammoniumsulfat + I-20, Edenor + Diammoniumsulfat + I-20, Actirob B + Diammoniumsulfat + I-20, Mero + Diammoniumsulfat + I-20, Hasten + Diammoniumsulfat + I-21, Rako-Binol + Diammoniumsulfat + I-21, Edenor + Diammoniumsulfat + I-21, Actirob B + Diammoniumsulfat + I-21, Mero + Diammoniumsulfat + I-21, Hasten + Diammoniumsulfat + I-22, Rako-Binol + Diammoniumsulfat + I-22, Edenor + Diammoniumsulfat + I-22, Actirob B + Diammoniumsulfat + I-22, Mero + Diammoniumsulfat + I-22, Hasten + Diammoniumsulfat + I-23, Rako-Binol + Diammoniumsulfat + I-23, Edenor + Diammoniumsulfat + I-23, Actirob B + Diammoniumsulfat + I-23, Mero + Diammoniumsulfat + I-23, Hasten + Diammoniumsulfat + I-24, Rako-Binol + Diammoniumsulfat + I-24, Edenor + Diammoniumsulfat + I-24, Actirob B + Diammoniumsulfat + I-24, Mero + Diammoniumsulfat + I-24, Hasten + Diammoniumsulfat + I-25, Rako-Binol + Diammoniumsulfat + I-25, Edenor + Diammoniumsulfat + I-25, Actirob B + Diammoniumsulfat + I-25, Mero + Diammoniumsulfat + I-25, Hasten + Diammoniumsulfat + I-26, Rako-Binol + Diammoniumsulfat + I-26, Edenor + Diammoniumsulfat + I-26, Actirob B + Diammoniumsulfat + I-26, Mero + Diammoniumsulfat + I-26, Hasten + Diammoniumsulfat + I-27, Rako-Binol + Diammoniumsulfat + I-27, Edenor + Diammoniumsulfat + I-27, Actirob B + Diammoniumsulfat + I-27, Mero + Diammoniumsulfat + I-27, Hasten + Diammoniumsulfat + I-28, Rako-Binol + Diammoniumsulfat + I-28, Edenor + Diammoniumsulfat + I-28, Actirob B + Diammoniumsulfat + I-28, Mero + Diammoniumsulfat + I-28, Hasten + Diammoniumsulfat + I-29, Rako-Binol + Diammoniumsulfat + I-29, Edenor + Diammoniumsulfat + I-29, Actirob B + Diammoniumsulfat + I-29, Mero + Diammoniumsulfat + I-29, Hasten + Diammoniumsulfat + I-30, Rako-Binol + Diammoniumsulfat + I-30, Edenor + Diammoniumsulfat + I-30, Actirob B + Diammoniumsulfat + I-30, Mero + Diammoniumsulfat + I-30, Hasten + Diammoniumsulfat + I-31, Rako-Binol + Diammoniumsulfat + I-31, Edenor + Diammoniumsulfat + I-31, Actirob B + Diammoniumsulfat + I-31, Mero + Diammoniumsulfat + I-31, Hasten + Diammoniumsulfat + I-32, Rako-Binol + Diammoniumsulfat + I-32, Edenor + Diammoniumsulfat + I-32, Actirob B + Diammoniumsulfat + I-32, Mero + Diammoniumsulfat + I-32, Hasten + Diammoniumsulfat + I-33, Rako-Binol + Diammoniumsulfat + I-33, Edenor + Diammoniumsulfat + I-33, Actirob B + Diammoniumsulfat + I-33, Mero + Diammoniumsulfat + I-33, Hasten + Diammoniumsulfat + I-34, Rako-Binol + Diammoniumsulfat + I-34, Edenor + Diammoniumsulfat + I-34, Actirob B + Diammoniumsulfat + I-34, Mero + Diammoniumsulfat + I-34, Hasten + Diammoniumsulfat + I-35, Rako-Binol + Diammoniumsulfat + I-35, Edenor + Diammoniumsulfat + I-35, Actirob B + Diammoniumsulfat + I-35, Mero + Diammoniumsulfat + I-35, Hasten + Diammoniumsulfat + I-36, Rako-Binol + Diammoniumsulfat + I-36, Edenor + Diammoniumsulfat + I-36, Actirob B + Diammoniumsulfat + I-36, Mero + Diammoniumsulfat + I-36, Hasten + Diammoniumsulfat + I-37, Rako-Binol + Diammoniumsulfat + I-37, Edenor + Diammoniumsulfat + I-37, Actirob B + Diammoniumsulfat + I-37, Mero + Diammoniumsulfat + I-37, Hasten + Diammoniumsulfat + I-38, Rako-Binol + Diammoniumsulfat + I-38, Edenor + Diammoniumsulfat + I-38, Actirob B + Diammoniumsulfat + I-38, Mero + Diammoniumsulfat + I-38, Hasten + Diammoniumsulfat + I-39, Rako-Binol + Diammoniumsulfat + I-39, Edenor + Diammoniumsulfat + I-39, Actirob B + Diammoniumsulfat + I-39, Mero + Diammoniumsulfat + I-39, Hasten + Diammoniumsulfat + I-40, Rako-Binol + Diammoniumsulfat + I-40, Edenor + Diammoniumsulfat + I-40, Actirob B + Diammoniumsulfat + I-40, Mero + Diammoniumsulfat + I-40, Hasten + Diammoniumsulfat + I-41, Rako-Binol + Diammoniumsulfat + I-41, Edenor + Diammoniumsulfat + I-41, Actirob B + Diammoniumsulfat + I-41, Mero + Diammoniumsulfat + I-41, Hasten + Diammoniumsulfat + I-42, Rako-Binol + Diammoniumsulfat + I-42, Edenor + Diammoniumsulfat + I-42, Actirob B + Diammoniumsulfat + I-42, Mero + Diammoniumsulfat + I-42, Hasten + Diammoniumsulfat + I-43, Rako-Binol + Diammoniumsulfat + I-43, Edenor + Diammoniumsulfat + I-43, Actirob B + Diammoniumsulfat + I-43, Mero + Diammoniumsulfat + I-43, Hasten + Diammoniumsulfat + I-44, Rako-Binol + Diammoniumsulfat + I-44, Edenor + Diammoniumsulfat + I-44, Actirob B + Diammoniumsulfat + I-44, Mero + Diammoniumsulfat + I-44, Hasten + Diammoniumsulfat + I-45, Rako-Binol + Diammoniumsulfat + I-45, Edenor + Diammoniumsulfat + I-45, Actirob B + Diammoniumsulfat + I-45, Mero + Diammoniumsulfat + I-45, Hasten + Diammoniumsulfat + I-46, Rako-Binol + Diammoniumsulfat + I-46, Edenor + Diammoniumsulfat + I-46, Actirob B + Diammoniumsulfat + I-46, Mero + Diammoniumsulfat + I-46, Hasten + Diammoniumsulfat + I-47, Rako-Binol + Diammoniumsulfat + I-47, Edenor + Diammoniumsulfat + I-47, Actirob B + Diammoniumsulfat + I-47, Mero + Diammoniumsulfat + I-47, Hasten + Diammoniumsulfat + I-48, Rako-Binol + Diammoniumsulfat + I-48, Edenor + Diammoniumsulfat + I-48, Actirob B + Diammoniumsulfat + I-48, Mero + Diammoniumsulfat + I-48, Hasten + Diammoniumsulfat + I-49, Rako-Binol + Diammoniumsulfat + I-49, Edenor + Diammoniumsulfat + I-49, Actirob B + Diammoniumsulfat + I-49, Mero + Diammoniumsulfat + I-49, Hasten + Diammoniumsulfat + I-50, Rako-Binol + Diammoniumsulfat + I-50, Edenor + Diammoniumsulfat + I-50, Actirob B + Diammoniumsulfat + I-50, Mero + Diammoniumsulfat + I-50, Hasten + Diammoniumsulfat + I-51, Rako-Binol + Diammoniumsulfat + I-51, Edenor + Diammoniumsulfat + I-51, Actirob B + Diammoniumsulfat + I-51, Mero + Diammoniumsulfat + I-51, Hasten + Diammoniumsulfat + I-52, Rako-Binol + Diammoniumsulfat + I-52, Edenor + Diammoniumsulfat + I-52, Actirob B + Diammoniumsulfat + I-52, Mero + Diammoniumsulfat + I-52, Hasten + Diammoniumsulfat + I-53, Rako-Binol + Diammoniumsulfat + I-53, Edenor + Diammoniumsulfat + I-53, Actirob B + Diammoniumsulfat + I-53, Mero + Diammoniumsulfat + I-53, Hasten + Diammoniumsulfat + I-54, Rako-Binol + Diammoniumsulfat + I-54, Edenor + Diammoniumsulfat + I-54, Actirob B + Diammoniumsulfat + I-54, Mero + Diammoniumsulfat + I-54, Hasten + Diammoniumsulfat + I-55, Rako-Binol + Diammoniumsulfat + I-55, Edenor + Diammoniumsulfat + I-55, Actirob B + Diammoniumsulfat + I-55, Mero + Diammoniumsulfat + I-55, Hasten + Diammoniumsulfat + I-56, Rako-Binol + Diammoniumsulfat + I-56, Edenor + Diammoniumsulfat + I-56, Actirob B + Diammoniumsulfat + I-56, Mero + Diammoniumsulfat + I-56, Hasten + Diammoniumsulfat + I-57, Rako-Binol + Diammoniumsulfat + I-57, Edenor + Diammoniumsulfat + I-57, Actirob B + Diammoniumsulfat + I-57, Mero + Diammoniumsulfat + I-57, Hasten + Diammoniumsulfat + I-58, Rako-Binol + Diammoniumsulfat + I-58, Edenor + Diammoniumsulfat + I-58, Actirob B + Diammoniumsulfat + I-58, Mero + Diammoniumsulfat + I-58, Hasten + Diammoniumsulfat + I-59, Rako-Binol + Diammoniumsulfat + I-59, Edenor + Diammoniumsulfat + I-59, Actirob B + Diammoniumsulfat + I-59, Mero + Diammoniumsulfat + I-59, Hasten + Diammoniumsulfat + I-60, Rako-Binol + Diammoniumsulfat + I-60, Edenor + Diammoniumsulfat + I-60, Actirob B + Diammoniumsulfat + I-60, Mero + Diammoniumsulfat + I-60, Hasten + Diammoniumsulfat + I-61, Rako-Binol + Diammoniumsulfat + I-61, Edenor + Diammoniumsulfat + I-61, Actirob B + Diammoniumsulfat + I-61, Mero + Diammoniumsulfat + I-61, Hasten + Diammoniumsulfat + I-62, Rako-Binol + Diammoniumsulfat + I-62, Edenor + Diammoniumsulfat + I-62, Actirob B + Diammoniumsulfat + I-62, Mero + Diammoniumsulfat + I-62, Hasten + Diammoniumsulfat + I-63, Rako-Binol + Diammoniumsulfat + I-63, Edenor + Diammoniumsulfat + 1-63, Actirob B + Diammoniumsulfat + I-63, Mero + Diammoniumsulfat + I-63, Hasten + Diammoniumsulfat + I-64, Rako-Binol + Diammoniumsulfat + I-64, Edenor + Diammoniumsulfat + I-64, Actirob B + Diammoniumsulfat + I-64, Mero + Diammoniumsulfat + I-64, Hasten + Diammoniumsulfat + I-65, Rako-Binol + Diammoniumsulfat + I-65, Edenor + Diammoniumsulfat + I-65, Actirob B + Diammoniumsulfat + I-65, Mero + Diammoniumsulfat + I-65, Hasten + Diammoniumsulfat + I-66, Rako-Binol + Diammoniumsulfat + I-66, Edenor + Diammoniumsulfat + I-66, Actirob B + Diammoniumsulfat + I-66, Mero + Diammoniumsulfat + I-66, Hasten + Diammoniumsulfat + I-67, Rako-Binol + Diammoniumsulfat + I-67, Edenor + Diammoniumsulfat + I-67, Actirob B + Diammoniumsulfat + I-67, Mero + Diammoniumsulfat + I-67, Hasten + Diammoniumsulfat + I-68, Rako-Binol + Diammoniumsulfat + I-68, Edenor + Diammoniumsulfat + I-68, Actirob B + Diammoniumsulfat + I-68, Mero + Diammoniumsulfat + I-68, Hasten + Diammoniumsulfat + I-69, Rako-Binol + Diammoniumsulfat + I-69, Edenor + Diammoniumsulfat + I-69, Actirob B + Diammoniumsulfat + I-69, Mero + Diammoniumsulfat + I-69, Hasten + Diammoniumsulfat + I-70, Rako-Binol + Diammoniumsulfat + I-70, Edenor + Diammoniumsulfat + I-70, Actirob B + Diammoniumsulfat + I-70, Mero + Diammoniumsulfat + I-70, Hasten + Diammoniumsulfat + I-71, Rako-Binol + Diammoniumsulfat + I-71, Edenor + Diammoniumsulfat + I-71, Actirob B + Diammoniumsulfat + I-71, Mero + Diammoniumsulfat + I-71, Hasten + Diammoniumsulfat + I-72, Rako-Binol + Diammoniumsulfat + I-72, Edenor + Diammoniumsulfat + I-72, Actirob B + Diammoniumsulfat + I-72, Mero + Diammoniumsulfat + I-72, Hasten + Diammoniumsulfat + I-73, Rako-Binol + Diammoniumsulfat + I-73, Edenor + Diammoniumsulfat + I-73, Actirob B + Diammoniumsulfat + I-73, Mero + Diammoniumsulfat + I-73, Hasten + Diammoniumsulfat + I-74, Rako-Binol + Diammoniumsulfat + I-74, Edenor + Diammoniumsulfat + I-74, Actirob B + Diammoniumsulfat + I-74, Mero + Diammoniumsulfat + I-74, Hasten + Diammoniumsulfat + I-75, Rako-Binol + Diammoniumsulfat + I-75, Edenor + Diammoniumsulfat + I-75, Actirob B + Diammoniumsulfat + I-75, Mero + Diammoniumsulfat + I-75, Hasten + Diammoniumsulfat + I-76, Rako-Binol + Diammoniumsulfat + I-76, Edenor + Diammoniumsulfat + I-76, Actirob B + Diammoniumsulfat + I-76, Mero + Diammoniumsulfat + I-76, Hasten + Diammoniumsulfat + I-77, Rako-Binol + Diammoniumsulfat + I-77, Edenor + Diammoniumsulfat + I-77, Actirob B + Diammoniumsulfat + I-77, Mero + Diammoniumsulfat + I-77, Hasten + Diammoniumsulfat + I-78, Rako-Binol + Diammoniumsulfat + I-78, Edenor + Diammoniumsulfat + I-78, Actirob B + Diammoniumsulfat + I-78, Mero + Diammoniumsulfat + I-78, Hasten + Diammoniumsulfat + I-79, Rako-Binol + Diammoniumsulfat + I-79, Edenor + Diammoniumsulfat + I-79, Actirob B + Diammoniumsulfat + I-79, Mero + Diammoniumsulfat + I-79, Hasten + Diammoniumsulfat + I-80, Rako-Binol + Diammoniumsulfat + I-80, Edenor + Diammoniumsulfat + I-80, Actirob B + Diammoniumsulfat + I-80, Mero + Diammoniumsulfat + I-80, Hasten + Diammoniumsulfat + I-81, Rako-Binol + Diammoniumsulfat + I-81, Edenor + Diammoniumsulfat + I-81, Actirob B + Diammoniumsulfat + I-81, Mero + Diammoniumsulfat + I-81, Hasten + Diammoniumsulfat + I-82, Rako-Binol + Diammoniumsulfat + I-82, Edenor + Diammoniumsulfat + 1-82, Actirob B + Diammoniumsulfat + 1-82, Mero + Diammoniumsulfat + I-82, Hasten + Diammoniumsulfat + I-83, Rako-Binol + Diammoniumsulfat + I-83, Edenor + Diammoniumsulfat + I-83, Actirob B + Diammoniumsulfat + I-83, Mero + Diammoniumsulfat + I-83, Hasten + Diammoniumsulfat + I-84, Rako-Binol + Diammoniumsulfat + I-84, Edenor + Diammoniumsulfat + I-84, Actirob B + Diammoniumsulfat + I-84, Mero + Diammoniumsulfat + I-84, Hasten + Diammoniumsulfat + I-85, Rako-Binol + Diammoniumsulfat + I-85, Edenor + Diammoniumsulfat + I-85, Actirob B + Diammoniumsulfat + I-85, Mero + Diammoniumsulfat + I-85, Hasten + Diammoniumsulfat + I-86, Rako-Binol + Diammoniumsulfat + I-86, Edenor + Diammoniumsulfat + I-86, Actirob B + Diammoniumsulfat + I-86, Mero + Diammoniumsulfat + I-86, Hasten + Diammoniumsulfat + I-87, Rako-Binol + Diammoniumsulfat + I-87, Edenor + Diammoniumsulfat + I-87, Actirob B + Diammoniumsulfat + I-87, Mero + Diammoniumsulfat + I-87, Hasten + Diammoniumsulfat + I-88, Rako-Binol + Diammoniumsulfat + I-88, Edenor + Diammoniumsulfat + I-88, Actirob B + Diammoniumsulfat + I-88, Mero + Diammoniumsulfat + I-88, Hasten + Diammoniumsulfat + I-89, Rako-Binol + Diammoniumsulfat + I-89, Edenor + Diammoniumsulfat + I-89, Actirob B + Diammoniumsulfat + I-89, Mero + Diammoniumsulfat + I-89, Hasten + Diammoniumsulfat + I-90, Rako-Binol + Diammoniumsulfat + I-90, Edenor + Diammoniumsulfat + I-90, Actirob B + Diammoniumsulfat + I-90, Mero + Diammoniumsulfat + I-90, Hasten + Diammoniumsulfat + I-91, Rako-Binol + Diammoniumsulfat + I-91, Edenor + Diammoniumsulfat + I-91, Actirob B + Diammoniumsulfat + I-91, Mero + Diammoniumsulfat + I-91, Hasten + Diammoniumsulfat + I-92, Rako-Binol + Diammoniumsulfat + I-92, Edenor + Diammoniumsulfat + I-92, Actirob B + Diammoniumsulfat + I-92, Mero + Diammoniumsulfat + I-92, Hasten + Diammoniumsulfat + I-93, Rako-Binol + Diammoniumsulfat + I-93, Edenor + Diammoniumsulfat + I-93, Actirob B + Diammoniumsulfat + I-93, Mero + Diammoniumsulfat + I-93, Hasten + Diammoniumsulfat + I-94, Rako-Binol + Diammoniumsulfat + I-94, Edenor + Diammoniumsulfat + I-94, Actirob B + Diammoniumsulfat + I-94, Mero + Diammoniumsulfat + I-94, Hasten + Diammoniumsulfat + I-95, Rako-Binol + Diammoniumsulfat + I-95, Edenor + Diammoniumsulfat + I-95, Actirob B + Diammoniumsulfat + I-95, Mero + Diammoniumsulfat + I-95, Hasten + Diammoniumsulfat + I-96, Rako-Binol + Diammoniumsulfat + I-96, Edenor + Diammoniumsulfat + I-96, Actirob B + Diammoniumsulfat + I-96, Mero + Diammoniumsulfat + I-96, Hasten + Diammoniumsulfat + I-97, Rako-Binol + Diammoniumsulfat + I-97, Edenor + Diammoniumsulfat + I-97, Actirob B + Diammoniumsulfat + I-97, Mero + Diammoniumsulfat + I-97, Hasten + Diammoniumsulfat + I-98, Rako-Binol + Diammoniumsulfat + I-98, Edenor + Diammoniumsulfat + I-98, Actirob B + Diammoniumsulfat + I-98, Mero + Diammoniumsulfat + I-98, Hasten + Diammoniumsulfat + I-99, Rako-Binol + Diammoniumsulfat + I-99, Edenor + Diammoniumsulfat + I-99, Actirob B + Diammoniumsulfat + I-99, Mero + Diammoniumsulfat + I-99, Hasten + Diammoniumsulfat + I-100, Rako-Binol + Diammoniumsulfat + I-100, Edenor + Diammoniumsulfat + I-100, Actirob B + Diammoniumsulfat + I-100, Mero + Diammoniumsulfat + I-100, Hasten + Diammoniumsulfat + I-101, Rako-Binol + Diammoniumsulfat + I-101, Edenor + Diammoniumsulfat + I-101, Actirob B + Diammoniumsulfat + I-101, Mero + Diammoniumsulfat + I-101, Hasten + Diammoniumsulfat + I-102, Rako-Binol + Diammoniumsulfat + I-102, Edenor + Diammoniumsulfat + I-102, Actirob B + Diammoniumsulfat + I-102, Mero + Diammoniumsulfat + I-102, Hasten + Diammoniumsulfat + I-103, Rako-Binol + Diammoniumsulfat + I-103, Edenor + Diammoniumsulfat + I-103, Actirob B + Diammoniumsulfat + I-103, Mero + Diammoniumsulfat + I-103, Hasten + Diammoniumsulfat + I-104, Rako-Binol + Diammoniumsulfat + I-104, Edenor + Diammoniumsulfat + I-104, Actirob B + Diammoniumsulfat + I-104, Mero + Diammoniumsulfat + I-104, Hasten + Diammoniumsulfat + I-105, Rako-Binol + Diammoniumsulfat + I-105, Edenor + Diammoniumsulfat + I-105, Actirob B + Diammoniumsulfat + I-105, Mero + Diammoniumsulfat + I-105, Hasten + Diammoniumsulfat + I-106, Rako-Binol + Diammoniumsulfat + I-106, Edenor + Diammoniumsulfat + I-106, Actirob B + Diammoniumsulfat + I-106, Mero + Diammoniumsulfat + I-106, Hasten + Diammoniumsulfat + I-107, Rako-Binol + Diammoniumsulfat + I-107, Edenor + Diammoniumsulfat + I-107, Actirob B + Diammoniumsulfat + I-107, Mero + Diammoniumsulfat + I-107, Hasten + Diammoniumsulfat + I-108, Rako-Binol + Diammoniumsulfat + I-108, Edenor + Diammoniumsulfat + I-108, Actirob B + Diammoniumsulfat + I-108, Mero + Diammoniumsulfat + I-108, Hasten + Diammoniumsulfat + I-109, Rako-Binol + Diammoniumsulfat + I-109, Edenor + Diammoniumsulfat + I-109, Actirob B + Diammoniumsulfat + I-109, Mero + Diammoniumsulfat + I-109, Hasten + Diammoniumsulfat + I-110, Rako-Binol + Diammoniumsulfat + I-110, Edenor + Diammoniumsulfat + I-110, Actirob B + Diammoniumsulfat + I-110, Mero + Diammoniumsulfat + I-110, Hasten + Diammoniumsulfat + I-111, Rako-Binol + Diammoniumsulfat + I-111, Edenor + Diammoniumsulfat + I-111, Actirob B + Diammoniumsulfat + I-111, Mero + Diammoniumsulfat + I-111, Hasten + Diammoniumsulfat + I-112, Rako-Binol + Diammoniumsulfat + I-112, Edenor + Diammoniumsulfat + I-112, Actirob B + Diammoniumsulfat + I-112, Mero + Diammoniumsulfat + I-112, Hasten + Diammoniumsulfat + I-113, Rako-Binol + Diammoniumsulfat + I-113, Edenor + Diammoniumsulfat + I-113, Actirob B + Diammoniumsulfat + I-113, Mero + Diammoniumsulfat + I-113, Hasten + Diammoniumsulfat + I-114, Rako-Binol + Diammoniumsulfat + I-114, Edenor + Diammoniumsulfat + I-114, Actirob B + Diammoniumsulfat + I-114, Mero + Diammoniumsulfat + I-114, Hasten + Diammoniumsulfat + I-115, Rako-Binol + Diammoniumsulfat + I-115, Edenor + Diammoniumsulfat + I-115, Actirob B + Diammoniumsulfat + I-115, Mero + Diammoniumsulfat + I-115, Hasten + Diammoniumsulfat + I-116, Rako-Binol + Diammoniumsulfat + I-116, Edenor + Diammoniumsulfat + I-116, Actirob B + Diammoniumsulfat + I-116, Mero + Diammoniumsulfat + I-116, Hasten + Diammoniumsulfat + I-117, Rako-Binol + Diammoniumsulfat + I-117, Edenor + Diammoniumsulfat + I-117, Actirob B + Diammoniumsulfat + I-117, Mero + Diammoniumsulfat + I-117, Hasten + Diammoniumsulfat + I-118, Rako-Binol + Diammoniumsulfat + I-118, Edenor + Diammoniumsulfat + I-118, Actirob B + Diammoniumsulfat + I-118, Mero + Diammoniumsulfat + I-118, Hasten + Diammoniumsulfat + I-119, Rako-Binol + Diammoniumsulfat + I-119, Edenor + Diammoniumsulfat + I-119, Actirob B + Diammoniumsulfat + I-119, Mero + Diammoniumsulfat + I-119, Hasten + Diammoniumsulfat + I-120, Rako-Binol + Diammoniumsulfat + I-120, Edenor + Diammoniumsulfat + I-120, Actirob B + Diammoniumsulfat + I-120, Mero + Diammoniumsulfat + I-120, Hasten + Diammoniumsulfat + I-121, Rako-Binol + Diammoniumsulfat + I-121, Edenor + Diammoniumsulfat + I-121, Actirob B + Diammoniumsulfat + I-121, Mero + Diammoniumsulfat + I-121, Hasten + Diammoniumsulfat + I-122, Rako-Binol + Diammoniumsulfat + I-122, Edenor + Diammoniumsulfat + I-122, Actirob B + Diammoniumsulfat + I-122, Mero + Diammoniumsulfat + I-122, Hasten + Diammoniumsulfat + I-123, Rako-Binol + Diammoniumsulfat + I-123, Edenor + Diammoniumsulfat + I-123, Actirob B + Diammoniumsulfat + I-123, Mero + Diammoniumsulfat + I-123, Hasten + Diammoniumsulfat + I-124, Rako-Binol + Diammoniumsulfat + I-124, Edenor + Diammoniumsulfat + I-124, Actirob B + Diammoniumsulfat + I-124, Mero + Diammoniumsulfat + I-124, Hasten + Diammoniumsulfat + I-125, Rako-Binol + Diammoniumsulfat + I-125, Edenor + Diammoniumsulfat + I-125, Actirob B + Diammoniumsulfat + I-125, Mero + Diammoniumsulfat + I-125, Hasten + Diammoniumsulfat + I-126, Rako-Binol + Diammoniumsulfat + I-126, Edenor + Diammoniumsulfat + I-126, Actirob B + Diammoniumsulfat + I-126, Mero + Diammoniumsulfat + I-126, Hasten + Diammoniumsulfat + I-127, Rako-Binol + Diammoniumsulfat + I-127, Edenor + Diammoniumsulfat + I-127, Actirob B + Diammoniumsulfat + I-127, Mero + Diammoniumsulfat + I-127, Hasten + Diammoniumsulfat + I-128, Rako-Binol + Diammoniumsulfat + I-128, Edenor + Diammoniumsulfat + I-128, Actirob B + Diammoniumsulfat + I-128, Mero + Diammoniumsulfat + I-128, Hasten + Diammoniumsulfat + I-129, Rako-Binol + Diammoniumsulfat + I-129, Edenor + Diammoniumsulfat + I-129, Actirob B + Diammoniumsulfat + I-129, Mero + Diammoniumsulfat + I-129, Hasten + Diammoniumsulfat + I-130, Rako-Binol + Diammoniumsulfat + I-130, Edenor + Diammoniumsulfat + I-130, Actirob B + Diammoniumsulfat + I-130, Mero + Diammoniumsulfat + I-130, Hasten + Diammoniumsulfat + I-131, Rako-Binol + Diammoniumsulfat + I-131, Edenor + Diammoniumsulfat + I-131, Actirob B + Diammoniumsulfat + I-131, Mero + Diammoniumsulfat + I-131, Hasten + Diammoniumsulfat + I-132, Rako-Binol + Diammoniumsulfat + I-132, Edenor + Diammoniumsulfat + I-132, Actirob B + Diammoniumsulfat + I-132, Mero + Diammoniumsulfat + I-132, Hasten + Diammoniumsulfat + I-133, Rako-Binol + Diammoniumsulfat + I-133, Edenor + Diammoniumsulfat + I-133, Actirob B + Diammoniumsulfat + I-133, Mero + Diammoniumsulfat + I-133, Hasten + Diammoniumsulfat + I-134, Rako-Binol + Diammoniumsulfat + I-134, Edenor + Diammoniumsulfat + I-134, Actirob B + Diammoniumsulfat + I-134, Mero + Diammoniumsulfat + I-134, Hasten + Diammoniumsulfat + I-135, Rako-Binol + Diammoniumsulfat + I-135, Edenor + Diammoniumsulfat + I-135, Actirob B + Diammoniumsulfat + I-135, Mero + Diammoniumsulfat + I-135, Hasten + Diammoniumsulfat + I-136, Rako-Binol + Diammoniumsulfat + I-136, Edenor + Diammoniumsulfat + I-136, Actirob B + Diammoniumsulfat + I-136, Mero + Diammoniumsulfat + I-136, Hasten + Diammoniumsulfat + I-137, Rako-Binol + Diammoniumsulfat + I-137, Edenor + Diammoniumsulfat + I-137, Actirob B + Diammoniumsulfat + I-137, Mero + Diammoniumsulfat + I-137, Hasten + Diammoniumsulfat + I-138, Rako-Binol + Diammoniumsulfat + I-138, Edenor + Diammoniumsulfat + I-138, Actirob B + Diammoniumsulfat + I-138, Mero + Diammoniumsulfat + I-138, Hasten + Diammoniumsulfat + I-139, Rako-Binol + Diammoniumsulfat + I-139, Edenor + Diammoniumsulfat + I-139, Actirob B + Diammoniumsulfat + I-139, Mero + Diammoniumsulfat + I-139, Hasten + Diammoniumsulfat + I-140, Rako-Binol + Diammoniumsulfat + I-140, Edenor + Diammoniumsulfat + I-140, Actirob B + Diammoniumsulfat + I-140, Mero + Diammoniumsulfat + I-140, Hasten + Diammoniumsulfat + I-141, Rako-Binol + Diammoniumsulfat + I-141, Edenor + Diammoniumsulfat + I-141, Actirob B + Diammoniumsulfat + I-141, Mero + Diammoniumsulfat + I-141, Hasten + Diammoniumsulfat + I-142, Rako-Binol + Diammoniumsulfat + I-142, Edenor + Diammoniumsulfat + I-142, Actirob B + Diammoniumsulfat + I-142, Mero + Diammoniumsulfat + I-142, Hasten + Diammoniumsulfat + I-143, Rako-Binol + Diammoniumsulfat + I-143, Edenor + Diammoniumsulfat + I-143, Actirob B + Diammoniumsulfat + I-143, Mero + Diammoniumsulfat + I-143, Hasten + Diammoniumsulfat + I-144, Rako-Binol + Diammoniumsulfat + I-144, Edenor + Diammoniumsulfat + I-144, Actirob B + Diammoniumsulfat + I-144, Mero + Diammoniumsulfat + I-144, Hasten + Diammoniumsulfat + I-145, Rako-Binol + Diammoniumsulfat + I-145, Edenor + Diammoniumsulfat + I-145, Actirob B + Diammoniumsulfat + I-145, Mero + Diammoniumsulfat + I-145.

Diammoniumsulfat + I-1, Diammoniumsulfat + I-2, Diammoniumsulfat + I-3, Diammoniumsulfat + I-4, Diammoniumsulfat + I-5, Diammoniumsulfat + I-6, Diammoniumsulfat + I-7, Diammoniumsulfat + I-8, Diammoniumsulfat + I-9, Diammoniumsulfat + I-10, Diammoniumsulfat + I-11, Diammoniumsulfat + I-12, Diammoniumsulfat + I-13, Diammoniumsulfat + I-14, Diammoniumsulfat + I-15, Diammoniumsulfat + I-16, Diammoniumsulfat + I-17, Diammoniumsulfat + I-18, Diammoniumsulfat + I-19, Diammoniumsulfat + I-20, Diammoniumsulfat + I-21, Diammoniumsulfat + I-22, Diammoniumsulfat + I-23, Diammoniumsulfat + I-24, Diammoniumsulfat + I-25, Diammoniumsulfat + I-26, Diammoniumsulfat + I-27, Diammoniumsulfat + I-28, Diammoniumsulfat + I-29, Diammoniumsulfat + I-30, Diammoniumsulfat + I-31, Diammoniumsulfat + I-32, Diammoniumsulfat + I-33, Diammoniumsulfat + I-34, Diammoniumsulfat + I-35, Diammoniumsulfat + I-36, Diammoniumsulfat + I-37, Diammoniumsulfat + I-38, Diammoniumsulfat + I-39, Diammoniumsulfat + I-40, Diammoniumsulfat + I-41, Diammoniumsulfat + I-42, Diammoniumsulfat + I-43, Diammoniumsulfat + I-44, Diammoniumsulfat + I-45, Diammoniumsulfat + I-46, Diammoniumsulfat + I-47, Diammoniumsulfat + I-48, Diammoniumsulfat + I-49, Diammoniumsulfat + I-50, Diammoniumsulfat + I-51, Diammoniumsulfat + I-52, Diammoniumsulfat + I-53, Diammoniumsulfat + I-54, Diammoniumsulfat + I-55, Diammoniumsulfat + I-56, Diammoniumsulfat + I-57, Diammoniumsulfat + I-58, Diammoniumsulfat + I-59, Diammoniumsulfat + I-60, Diammoniumsulfat + I-61, Diammoniumsulfat + I-62, Diammoniumsulfat + I-63, Diammoniumsulfat + I-64, Diammoniumsulfat + I-65, Diammoniumsulfat + I-66, Diammoniumsulfat + I-67, Diammoniumsulfat + I-68, Diammoniumsulfat + I-69, Diammoniumsulfat + I-70, Diammoniumsulfat + I-71, Diammoniumsulfat + I-72, Diammoniumsulfat + I-73, Diammoniumsulfat + I-74, Diammoniumsulfat + I-75, Diammoniumsulfat + I-76, Diammoniumsulfat + I-77, Diammoniumsulfat + I-78, Diammoniumsulfat + I-79, Diammoniumsulfat + I-80, Diammoniumsulfat + I-81, Diammoniumsulfat + I-82, Diammoniumsulfat + I-83, Diammoniumsulfat + I-84, Diammoniumsulfat + I-85, Diammoniumsulfat + I-86, Diammoniumsulfat + I-87, Diammoniumsulfat + I-88, Diammoniumsulfat + I-89, Diammoniumsulfat + I-90, Diammoniumsulfat + I-91, Diammoniumsulfat + I-92, Diammoniumsulfat + I-93, Diammoniumsulfat + I-94, Diammoniumsulfat + I-95, Diammoniumsulfat + I-96, Diammoniumsulfat + I-97, Diammoniumsulfat + I-98, Diammoniumsulfat + I-99, Diammoniumsulfat + I-100, Diammoniumsulfat + I-101, Diammoniumsulfat + I-102, Diammoniumsulfat + I-103, Diammoniumsulfat + I-104, Diammoniumsulfat + I-105, Diammoniumsulfat + I-106, Diammoniumsulfat + I-107, Diammoniumsulfat + I-108, Diammoniumsulfat + I-109, Diammoniumsulfat + I-110, Diammoniumsulfat + I-111, Diammoniumsulfat + I-112, Diammoniumsulfat + I-113, Diammoniumsulfat + I-114, Diammoniumsulfat + I-115, Diammoniumsulfat + I-116, Diammoniumsulfat + I-117, Diammoniumsulfat + I-118, Diammoniumsulfat + I-119, Diammoniumsulfat + I-120, Diammoniumsulfat + I-121, Diammoniumsulfat + I-122, Diammoniumsulfat + I-123, Diammoniumsulfat + I-124, Diammoniumsulfat + I-125, Diammoniumsulfat + I-126, Diammoniumsulfat + I-127, Diammoniumsulfat + I-128, Diammoniumsulfat + I-129, Diammoniumsulfat + I-130, Diammoniumsulfat + I-131, Diammoniumsulfat + I-132, Diammoniumsulfat + I-133, Diammoniumsulfat + I-134, Diammoniumsulfat + I-135, Diammoniumsulfat + I-136, Diammoniumsulfat + I-137, Diammoniumsulfat + I-138, Diammoniumsulfat + I-139, Diammoniumsulfat + I-140, Diammoniumsulfat + I-141, Diammoniumsulfat + I-142, Diammoniumsulfat + I-143, Diammoniumsulfat + I-144, Diammoniumsulfat + I-145.

Sämtliche vorgenannten Kombinationen können auch einen oder mehrere Safener (c) enthalten, insbesondere ausgewählt aus der Gruppe (S1-1), (S1-6), (S1-9), (S2-1), (S-4) und/oder einen oder mehrere agrochemische Wirkstoffe (d), insbesondere ausgewählt aus den Gruppen (d1.1) - (d1.66), (d2.1) - (d2.50), (d3.1) - (d3.16), (d4.1)-(d4.7).

Weiterhin können die vorgenannten Kombinationen auch eines oder mehrere Sulfosuccinate e) und/oder übliche Zusatzstoffe f) (insbesondere Verdickungs- und Thixotropiermittel) enthalten.

Zur Anwendung können die erfindungsgemäßen herbiziden Mittel gegebenenfalls in üblicher Weise verdünnt werden (z.B. mittels Wasser), z.B. zu Suspensionen, Emulsionen, Suspoemulsionen, Dispersionen oder Lösungen. Es kann vorteilhaft sein, erhaltenen Spritzbrühen weitere agrochemische Wirkstoffe (z.B. Tankmischpartner in Form entsprechender Formulierungen) und/oder zur Anwendung übliche Hilfs- und Zusatzstoffe, z.B. selbstemulgierende Öle wie Pflanzenöle oder Paraffinöle und/oder Düngemittel zuzugeben. Gegenstand der vorliegenden Erfindung sind daher auch solche herbiziden Mittel.

Die erfindungsgemäßen herbiziden Mittel und die daraus durch Verdünnen erhältlichen Anwendungsformen (alle zusammen "erfindungsgemäße herbizide Mittel") weisen eine ausgezeichnete herbizide Wirksamkeit gegen ein breites Spektrum wirtschaftlich wichtiger mono- und dikotyler Schadpflanzen auf, einschließlich Arten die resistent sind gegen herbizide Wirkstoffe wie Glyphosate, Glufosinate, Atrazin oder Imidazolinon-Herbizide. Auch schwer bekämpfbare perennierende Unkräuter, die aus Rhizomen, Wurzelstöcken oder anderen Dauerorganen austreiben, werden durch die Wirkstoffe gut erfaßt. Dabei kann die Applikation im Vorsaat-, Vorauflauf- oder Nachauflaufverfahren erfolgen. Bevorzugt erfolgt die Applikation dabei auf die aufgelaufenen Schadpflanzen (z.B. Unkräuter oder unerwünschte Kulturpflanzen), insbesondere vor dem Auflaufen der (erwünschten) Kulturpflanzen.
Im einzelnen seien beispielhaft einige Vertreter der mono- und dikotylen Unkrautflora genannt, die durch die erfindungsgemäßen Verbindungen kontrolliert werden können, ohne daß durch die Nennung eine Beschränkung auf bestimmte Arten erfolgen soll.

Auf der Seite der monokotylen Unkrautarten werden z.B. Avena spp., Alopecurus spp., Brachiaria spp., Digitaria spp., Lolium spp., Echinochloa spp., Panicum spp., Phalaris spp., Poa spp., Setaria spp. sowie Cyperusarten aus der annuellen Gruppe und auf seiten der perennierenden Spezies Agropyron, Cynodon, Imperata sowie Sorghum und auch ausdauernde Cyperusarten gut erfaßt.

Bei dikotylen Unkrautarten erstreckt sich das Wirkungsspektrum auf Arten wie z.B. Abutilon spp., Amaranthus spp., Chenopodium spp., Chrysanthemum spp., Galium spp., lpomoea spp., Kochia spp., Lamium spp., Matricaria spp., Pharbitis spp., Polygonum spp.,Sida spp., Sinapis spp., Solanum spp., Stellaria spp., Veronica spp. und Viola spp., Xanthium spp., auf der annuellen Seite sowie Convolvulus, Cirsium, Rumex und Artemisia bei den perennierenden Unkräutern.

Werden die erfindungsgemäßen herbiziden Mittel vor dem Keimen auf die Erdoberfläche appliziert, so wird entweder das Auflaufen der Unkrautkeimlinge vollständig verhindert oder die Unkräuter wachsen bis zum Keimblattstadium heran, stellen jedoch dann ihr Wachstum ein und sterben schließlich nach Ablauf von drei bis vier Wochen vollkommen ab.

Bei Applikation der herbiziden Mittel auf die grünen Pflanzenteile im Nachauflaufverfahren tritt ebenfalls sehr rasch nach der Behandlung ein drastischer Wachstumsstop ein und die Unkrautpflanzen bleiben in dem zum Applikationszeitpunkt vorhandenen Wachstumsstadium stehen oder sterben nach einer gewissen Zeit ganz ab, so daß auf diese Weise eine für die Kulturpflanzen schädliche Unkrautkonkurrenz sehr früh und nachhaltig beseitigt wird.

Die erfindungsgemäßen herbiziden Mittel zeichnen sich durch eine schnell einsetzende und lang andauernde herbizide Wirkung aus. Die Regenfestigkeit der Wirkstoffe in den erfindungsgemäßen Kombinationen ist in der Regel günstig. Als besonderer Vorteil fällt ins Gewicht, daß die verwendeten und wirksamen Dosierungen von Verbindungen (a) so gering eingestellt werden können, daß ihre Bodenwirkung optimal niedrig ist. Somit wird deren Einsatz nicht nur in empfindlichen Kulturen erst möglich, sondern Grundwasser-Kontaminationen werden praktisch vermieden. Durch die erfindungsgemäßen Kombination von Wirkstoffen wird eine erhebliche Reduzierung der nötigen Aufwandmenge der Wirkstoffe ermöglicht.

Die genannten Eigenschaften und Vorteile sind in der praktischen Unkrautbekämpfung gefordert, um landwirtschaftliche Kulturen von unerwünschten Konkurrenzpflanzen freizuhalten und damit die Erträge qualitativ und quantitativ zu sichern und/oder zu erhöhen. Der technische Standard wird durch diese neuen Kombinationen hinsichtlich der beschriebenen Eigenschaften deutlich übertroffen.

Darüberhinaus weisen die erfindungsgemäßen Mittel teilweise hervorragende wachstumsregulatorische Eigenschaften bei den Kulturpflanzen auf. Sie greifen regulierend in den pflanzeneigenen Stoffwechsel ein und können damit zur gezielten Beeinflussung von Pflanzeninhaltsstoffen und zur Ernteerleichterung wie z.B. durch Auslösen von Desikkation und Wuchsstauchung eingesetzt werden. Desweiteren eignen sie sich auch zur generellen Steuerung und Hemmung von unerwünschtem vegetativen Wachstum, ohne dabei die Pflanzen abzutöten. Eine Hemmung des vegetativen Wachstums spielt bei vielen mono- und dikotylen Kulturen eine große Rolle, da das Lagern hierdurch verringert oder völlig verhindert werden kann.

Aufgrund ihrer herbiziden und pflanzenwachstumsregulatorischen Eigenschaften können die Mittel zur Bekämpfung von Schadpflanzen in bekannten Pflanzenkulturen oder noch zu entwickelnden toleranten oder gentechnisch veränderten Kulturpflanzen eingesetzt werden. Die transgenen Pflanzen zeichnen sich in der Regel durch besondere vorteilhafte Eigenschaften aus, neben den Resistenzen gegenüber den erfindungsgemäßen Mitteln beispielsweise durch Resistenzen gegenüber Pflanzenkrankheiten oder Erregern von Pflanzenkrankheiten wie bestimmten Insekten oder Mikroorganismen wie Pilzen, Bakterien oder Viren. Andere besondere Eigenschaften betreffen z. B. das Erntegut hinsichtlich Menge, Qualität, Lagerfähigkeit, Zusammensetzung und spezieller Inhaltsstoffe. So sind transgene Pflanzen mit erhöhtem Stärkegehalt oder veränderter Qualität der Stärke oder solche mit anderer Fettsäurezusammensetzung des Ernteguts bekannt.

Herkömmliche Wege zur Herstellung neuer Pflanzen, die im Vergleich zu bisher vorkommenden Pflanzen modifizierte Eigenschaften aufweisen, bestehen beispielsweise in klassischen Züchtungsverfahren und der Erzeugung von Mutanten. Alternativ können neue Pflanzen mit veränderten Eigenschaften mit Hilfe gentechnischer Verfahren erzeugt werden (siehe z. B. EP-A-0221044, EP-A-0131624). Beschrieben wurden beispielsweise in mehreren Fällen
- gentechnische Veränderungen von Kulturpflanzen zwecks Modifikation der in den Pflanzen synthetisierten Stärke (z. B. WO 92/11376, WO 92/14827, WO 91/19806),
- transgene Kulturpflanzen, welche Resistenzen gegen andere Herbizide aufweisen, beispielsweise gegen Sulfonylharnstoffe (EP-A-0257993, US-A-5013659),
- transgene Kulturpflanzen, mit der Fähigkeit
   Bacillus thuringiensis-Toxine (Bt-Toxine) zu produzieren, welche die Pflanzen gegen bestimmte Schädlinge resistent machen (EP-A-0142924, EP-A-0193259).
- transgene Kulturpflanzen mit modifizierter Fettsäurezusammensetzung (WO 91/13972).

Zahlreiche molekularbiologische Techniken, mit denen neue transgene Pflanzen mit veränderten Eigenschaften hergestellt werden können, sind im Prinzip bekannt; siehe z.B. Sambrook et al., 1989, Molecular Cloning, A Laboratory Manual, 2. Aufl. Cold Spring Harbor Laboratory Press, Cold Spring Harbor, NY; oder Winnacker "Gene und Klone", VCH Weinheim 2. Auflage 1996 oder Christou, "Trends in Plant Science" 1 (1996) 423-431).

Für derartige gentechnische Manipulationen können Nucleinsäuremoleküle in Plasmide eingebracht werden, die eine Mutagenese oder eine Sequenzveränderung durch Rekombination von DNA-Sequenzen erlauben. Mit Hilfe der obengenannten Standardverfahren können z. B. Basenaustausche vorgenommen, Teilsequenzen entfernt oder natürliche oder synthetische Sequenzen hinzugefügt werden. Für die Verbindung der DNA-Fragmente untereinander können an die Fragmente Adaptoren oder Linker angesetzt werden.

Die Herstellung von Pflanzenzellen mit einer verringerten Aktivität eines Genprodukts kann beispielsweise erzielt werden durch die Expression mindestens einer entsprechenden antisense-RNA, einer sense-RNA zur Erzielung eines Cosuppressionseffektes oder die Expression mindestens eines entsprechend konstruierten Ribozyms, das spezifisch Transkripte des obengenannten Genprodukts spaltet.

Hierzu können zum einen DNA-Moleküle verwendet werden, die die gesamte codierende Sequenz eines Genprodukts einschließlich eventuell vorhandener flankierender Sequenzen umfassen, als auch DNA-Moleküle, die nur Teile der codierenden Sequenz umfassen, wobei diese Teile lang genug sein müssen, um in den Zellen einen antisense-Effekt zu bewirken. Möglich ist auch die Verwendung von DNA-Sequenzen, die einen hohen Grad an Homologie zu den codiereden Sequenzen eines Genprodukts aufweisen, aber nicht vollkommen identisch sind.

Bei der Expression von Nucleinsäuremolekülen in Pflanzen kann das synthetisierte Protein in jedem beliebigen Kompartiment der pflanzlichen Zelle lokalisiert sein. Um aber die Lokalisation in einem bestimmten Kompartiment zu erreichen, kann z. B. die codierende Region mit DNA-Sequenzen verknüpft werden, die die Lokalisierung in einem bestimmten Kompartiment gewährleisten. Derartige Sequenzen sind dem Fachmann bekannt (siehe beispielsweise Braun et al., EMBO J. 11 (1992), 3219-3227; Wolter et al., Proc. Natl. Acad. Sci. USA 85 (1988), 846-850; Sonnewald et al., Plant J. 1 (1991), 95-106).

Die transgenen Pflanzenzellen können nach bekannten Techniken zu ganzen Pflanzen regeneriert werden. Bei den transgenen Pflanzen kann es sich prinzipiell um Pflanzen jeder beliebigen Pflanzenspezies handeln, d.h. sowohl monokotyle als auch dikotyle Pflanzen. So sind transgene Pflanzen erhältlich, die veränderte Eigenschaften durch Überexpression, Suppression oder Inhibierung homologer (= natürlicher) Gene oder Gensequenzen oder Expression heterologer (= fremder) Gene oder Gensequenzen aufweisen.

Gegenstand der vorliegenden Erfindung ist somit weiterhin ein Verfahren zur Bekämpfung von unerwünschten Pflanzen, vorzugsweise in Pflanzenkulturen, wobei die erfindungsgemäßen herbiziden Mittel auf die Pflanzen (z.B. Schadpflanzen wie mono- oder dikotyle Unkräuter oder unerwünschte Kulturpflanzen), das Saatgut oder die Fläche, auf der die Pflanzen wachsen (z.B. die Anbaufläche), ausgebracht werden.

Unter unerwünschten Pflanzen sind alle Pflanzen zu verstehen, die an Orten wachsen, wo sie unerwünscht sind. Dies können z.B. Schadpflanzen (z.B. mono- oder dikotyle Unkräuter oder unerwünschte Kulturpflanzen) sein, z.B. auch solche, die gegen bestimmte herbizide Wirkstoffe wie Glyphosate, Atrazin, Glufosinate oder Imidazolinon-Herbizide resistent sind.

Bevorzugt wird in dem erfindungsgemäßen Verfahren eine wirksame Menge der erfindungsgemäßen herbiziden Mittel zur Bekämpfung von Schadpflanzen angewendet, vorzugsweise in Pflanzenkulturen, beispielsweise in wirtschaftlich bedeutenden Ackerbaukulturen z.B. monokotylen Ackerbaukulturen z.B. Getreide (z.B. Weizen, Gerste, Roggen, Hafer), Reis, Mais, Hirse, oder dikotylen Ackerbaukulturen wie Zuckerrübe, Raps, Baumwolle, Sonnenblumen und Leguminosen z.B. der Gattungen Glycine (z.B. Glycine max. wie nicht-transgene Glycine max. (z.B. konventionelle Sorten wie STS-Sorten) oder transgene Glycine max. (z.B. RR-Soja oder LL-Soja) und deren Kreuzungen), Phaseolus, Pisum, Vicia und Arachis, oder Gemüsekulturen aus verschiedenen botanischen Gruppen wie Kartoffel, Lauch, Kohl, Karotte, Tomate, Zwiebel, sowie Dauer- und Plantagenkulturen wie Kern- und Steinobst, Beerenobst, Wein, Hevea, Bananen, Zuckerrohr, Kaffee, Tee, Citrus, Nussplantagen, Rasen, Palmenkulturen und Forstkulturen.

Die erfindungsgemäßen herbiziden Mittel weisen eine ausgezeichnete Selektivität in Kulturen von Leguminosen auf. Sie eignen sich z.B. zur selektiven Bekämpfung von unerwünschtem Pflanzenwuchs, z.B. von Schadpflanzen (z.B. monokotylen und dikotylen Unkräutern oder unerwünschten Kulturpflanzen), in Kulturen von transgenen und nicht-transgenen Leguminosen, insbesondere der Gattung Glycine, beispielsweise im Vorsaat-Verfahren, Vorauflauf-Verfahren oder im NachauflaufVerfahren.

Als Leguminosen kommen z.B. transgene und nicht-transgene Leguminosen z.B. der Gattungen Glycine, Phaseolus, Pisum, Vicia und Arachis in Frage. Bevorzugt kommen Leguminosen der Gattung Glycine in Frage, z.B. der Art Glycine max. (Soja) wie nicht-transgene Glycine max. (z.B. konventionelle Sorten wie STS-Sorten) oder transgene Glycine max. (z.B. RR-Soja oder LL-Soja) und deren Kreuzungen.

Die erfindungsgemäßen herbiziden Mittel können auch nicht-selektiv zur Bekämpfung unerwünschten Pflanzenwuchses eingesetzt werden, z.B. in Dauer- und Plantagenkulturen, an Wegrändern, Plätzen, Industrieanlagen, Flugplätzen oder Eisenbahnanlagen, oder zur sogenannten Burn-Down-Anwendung, z.B. in Ackerbaukulturen z.B. monokotylen Ackerbaukulturen wie Getreide (z.B. Weizen, Gerste, Roggen, Hafer), Reis, Mais, Hirse, oder dikotylen Ackerbaukulturen wie Zuckerrübe, Raps, Baumwolle, Sonnenblumen und Leguminosen z.B. der Gattungen Glycine (z.B. Glycine max. (Soja) wie nicht-transgene Glycine max. (z.B. konventionelle Sorten wie STS-Sorten) oder transgene Glycine max. (z.B. RR-Soja oder LL-Soja) und deren Kreuzungen), Phaseolus, Pisum, Vicia und Arachis, oder Gemüsekulturen aus verschiedenen botanischen Gruppen wie Kartoffel, Lauch, Kohl, Karotte, Tomate, Zwiebel. Bevorzugt erfolgt die Applikation dabei auf die aufgelaufenen Schadpflanzen (z.B. Unkräuter oder unerwünschte Kulturpflanzen), insbesondere vor dem Auflaufen der (erwünschten) Kulturpflanzen.

Als Dauer- und Plantagenkulturen kommen z.B. Kern- und Steinobst, Beerenobst, Wein, Hevea, Bananen, Zuckerrohr, Kaffee, Tee, Citrus, Nussplantagen, Rosen, Palmenkulturen und Forstkulturen in Betracht.

Eine bevorzugte Verwendung im nicht-selektiven Bereich ist die Burn-down-Anwendung in Kulturpflanzen, wobei die erfindungsgemäßen herbiziden Mittel vor dem Auflaufen der Kulturpflanzen auf die aufgelaufenen Schadpflanzen appliziert werden, bevorzugt ist dabei die Applikation vor der Aussaat der Kulturpflanzen oder bei der Aussaat der Kulturpflanzen.

Gegenstand der Erfindung ist auch die Verwendung der erfindungsgemäßen herbiziden Mittel zur Bekämpfung von unerwünschtem Pflanzenwuchs, vorzugsweise in Pflanzenkulturen.

Zur Bekämpfung von unerwünschtem Pflanzenwachstum (z.B. zur nicht-selektiven Bekämpfung von Schadpflanzen oder zur selektiven Bekämpfung von Schadpflanzen in Leguminosen), können die erfindungsgemäßen herbiziden Mittel auf die Pflanzen (z.B. (erwünschte) Kulturpflanzen oder Schadpflanzen wie mono- oder dikotyle Unkräuter oder unerwünschte Kulturpflanzen), das Saatgut (z.B. Körner, Samen oder vegetative Vermehrungsorgane wie Knollen oder Sprossteile mit Knospen) oder die Fläche auf der die Pflanzen wachsen (z.B. die Anbaufläche) appliziert werden, insbesondere in herbizid wirksamer Menge. Sie können z.B. vor der Saat, sowie vor als auch nach dem Auflaufen der Pflanzen appliziert werden. Die Vorsaatapplikation kann z.B. durch Spritzen oder Einarbeitung in den Boden erfolgen. Auch Splitapplikationen z.B. im frühen Vorauflauf gefolgt von späterer Nachauflaufapplikation sind möglich. Bevorzugt ist eine Applikation auf die aufgelaufenen Schadpflanzen (z.B. mono- oder dikotyle Unkräuter oder unerwünschte Kulturpflanzen), insbesondere vor dem Auflaufen von (erwünschten) Kulturpflanzen wie Leguminosen.

Bevorzugt für die selektive Anwendung in Leguminosen ist eine Applikation auf aufgelaufene Pflanzen, insbesondere auf aufgelaufene Schadpflanzen (z.B. Unkräuter oder unerwünschte Kulturpflanzen), bevorzugt vor dem Auflaufen der Leguminosen. Bevorzugt für die nicht-selektive Anwendung ist die Applikation auf die aufgelaufenen Schadpflanzen (z.B. Unkräuter oder unerwünschte Kulturpflanzen). Bei der Burn-down-Anwendung wird dabei bevorzugt vor der Aussaat oder bei der Aussaat der Kulturpflanzen auf die aufgelaufenen Schadpflanzen appliziert.

Die angewandte Wirkstoffmenge kann in einem größeren Bereich schwanken. Sie hängt im wesentlichen von der Art des gewünschten Effektes ab. Im allgemeinen liegen die Aufwandmengen zwischen 0,01 g und 100 g Wirkstoff pro Hektar Bodenfläche. Für eine selektive Anwendung bevorzugt sind im allgemeinen niedrigere Aufwandmengen, z.B. im Bereich von 0,01 g bis 9 g Wirkstoff pro Hektar, vorzugsweise zwischen 0,1 g und 9 g pro Hektar, insbesondere in der Applikation auf aufgelaufene Pflanzen, insbesondere auf aufgelaufene Schadpflanzen (z.B. Unkräuter oder unerwünschte Kulturpflanzen). Für die nicht-selektive Anwendung bevorzugt sind im allgemeinen Aufwandmengen im Bereich von 0,01 g bis 49 g Wirkstoff pro Hektar, insbesondere 0,01 g bis 9 g Wirkstoff pro Hektar, vorzugsweise zwischen 0,1 g und 9 g pro Hektar.

Die herbiziden Mittel der vorliegenden Erfindung weisen eine ausgezeichnete physikalische Stabilität, eine gute Applizierbarkeit und Anwenderfreundlichkeit, sowie eine hohe biologische Effektivität und Kulturpflanzenverträglichkeit (Selektivität) auf.

## Patentansprüche

1. Herbizides Mittel, enthaltend in synergistisch wirksamer Menge
a) einen oder mehrere herbizide Wirkstoffe aus der Gruppe der Dioxazin-Pyridylsulfonylharnstoffe, und
b) einen oder mehrere Hilfsstoffe aus der Gruppe der Fettsäureester, Dünger und Tenside.

2. Herbizides Mittel gemäß Anspruch 1, worin als Komponente a) enthalten sind, ein oder mehrere herbizide Wirkstoffe aus der Gruppe der Dioxazin-Pyridylsulfonylharnstoffe der allgemeinen Formel (I) und/oder deren Salze 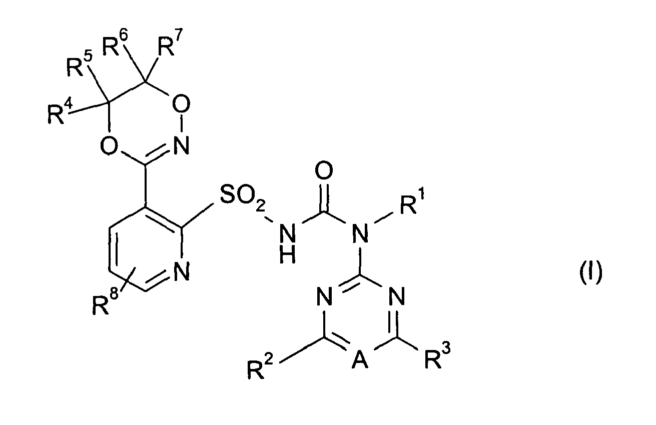 worin
A für Stickstoff oder eine CR¹¹-Gruppierung steht,
wobei
R¹¹ für Wasserstoff, Alkyl, Halogen und Haloalkyl steht,
R¹ für Wasserstoff oder einen gegebenenfalls substituierten Rest aus der Reihe Alkyl, Alkoxy, Alkoxyalkyl, Alkenyl, Alkinyl, Cycloalkyl, Cycloalkylalkyl, Aralkyl und Aryl steht,
R² für Wasserstoff, Halogen oder für jeweils gegebenenfalls durch Halogen substituiertes Alkyl, Alkoxy, Alkylthio, Alkylamino oder Dialkylamino mit jeweils 1 bis 6 Kohlenstoffatomen steht,
R³ für Wasserstoff, Halogen oder für jeweils gegebenenfalls durch Halogen substituiertes Alkyl, Alkoxy, Alkylthio, Alkylamino oder Dialkylamino mit jeweils 1 bis 6 Kohlenstoffatomen steht,
R⁴ - R⁷ unabhängig voneinander für Wasserstoff, Halogen, Cyano, Thiocyanato oder für jeweils gegebenenfalls durch Halogen substituiertes Alkyl, Alkoxy, Alkylthio, Alkylsulfinyl, Alkylsulfonyl, Alkylamino, Alkylcarbonyl, Alkoxycarbonyl, Alkylaminocarbonyl mit jeweils 1 bis 3 Kohlenstoffatomen stehen,
R⁸ für Wasserstoff, Halogen, Cyano, Thiocyanato oder für jeweils gegebenenfalls durch Halogen substituiertes Alkyl, Alkoxy, Alkylthio, Alkylsulfinyl, Alkylsulfonyl, Alkylamino, Alkylcarbonyl, Alkoxycarbonyl, Alkylaminocarbonyl mit jeweils 1 bis 3 Kohlenstoffatomen steht,
wobei in den vorgenannten Resten die Alkyl- und Alkylengruppen jeweils 1 bis 6 C-Atome, die Alkenyl- und Alkinylgruppen jeweils 2 bis 6 C-Atome, die Cycloalkylgruppen jeweils 3 bis 6 C-Atome und die Arylgruppen jeweils 6 bzw. 10 C-Atome enthalten können.

3. Herbizides Mittel gemäß Anspruch 1 oder 2, worin als Komponente b) ein oder mehrere Fettsäureester natürlichen Ursprungs enthalten sind.

4. Herbizides Mittel gemäß einem oder mehreren der Ansprüche 1 bis 3, worin als Komponente b) Harnstoff und/oder Ammoniumsalze enthalten sind.

5. Herbizides Mittel gemäß einem oder mehreren der Ansprüche 1 bis 4, worin als Komponente b) ein oder mehrere nichtionische Tenside enthalten sind.

6. Herbizides Mittel gemäß einem oder mehreren der Ansprüche 1 bis 5, zusätzlich enthaltend c) einen oder mehrere Safener, vorzugsweise aus der Gruppe Dichlorphenylpyrazolin-3-carbonsäure und ihre Ester, 5,5 -Diphenyl-2-isoxazolin-3-carbonsäure ihre Ester und 8-Chinolinoxyessigsäure und ihre Ester, d) einen oder mehrere von a) und c) verschiedene agrochemische Wirkstoffe, e) ein oder mehrere Sulfosuccinate, vorzugsweise aus der Gruppe der Mono- und Diester der Sulfobernsteinsäure und/oder f) übliche Zusatzstoffe.

7. Herbizides Mittel gemäß einem oder mehreren der Ansprüche 1 bis 7 zusätzlich enthaltend Verdünnungsmittel.

8. Verfahren zur Herstellung eines herbiziden Mittels gemäß einem oder mehreren der Ansprüche 1 bis 7, worin die Komponenten gemischt und gegebenenfalls vermahlt werden.

9. Verfahren zur Bekämpfung von unerwünschten Pflanzen, worin die Komponenten des herbiziden Mittels, definiert gemäß einem oder mehreren der Ansprüche 1 bis 7, gemeinsam oder getrennt auf die Pflanzen, das Saatgut oder die Fläche auf der Pflanzen wachsen, appliziert werden.

10. Verwendung eines herbiziden Mittels gemäß einem oder mehreren der Ansprüche 1 bis 7, zur Bekämpfung von unerwünschten Pflanzen.
